# EUROPEAN PATENT SPECIFICATION

(11) **EP 1 199 905 B1**
(45) Date of publication and mention of the grant of the patent: **20.03.2013**
(21) Application number: 01308854.7
(22) Date of filing: 18.10.2001
(51) Int. Cl.: H04Q 11/00

(54) **Optical switching apparatus**
Optische Vermittlungsvorrichtung
Dispositif de commutation optique

(30) Priority: 18.10.2000 JP 2000318486
(43) Date of publication of application: 24.04.2002
(73) Proprietor: Kabushiki Kaisha Toshiba, Tokyo (JP)
(72) Inventor: Sugawara, Mitsuru, Tokyo 105-8001 (JP); Yano, Takashi, Tokyo 105-8001 (JP); Dobashi, Kyosuke, Tokyo 105-8001 (JP); Kusama, Katsumi, Tokyo 105-8001 (JP); Tanikoshi, Sadao, Tokyo 105-8001 (JP); Ide, Kazuhiko, Tokyo 105-8001 (JP); Otani, Mitsuru, Tokyo 105-8001 (JP); Takami, Masayuki, Tokyo 105-8001 (JP); Kitajima, Mototaka, Tokyo 105-8001 (JP)
(74) Representative: Brookes Batchellor LLP

(56) References cited:
- EP-A- 0 938 244
- EP-A- 1 028 550
- WO-A-98/47255
- MIYAZAKI T ET AL: "A DEMONSTRATION OF AN OPTICAL SWITCH CIRCUIT WITH BRIDGE AND SWITCH FUNCTION IN WDM FOUR-FIBER RING NETWORKS" IEICE TRANSACTIONS ON ELECTRONICS, INSTITUTE OF ELECTRONICS INFORMATION AND COMM. ENG. TOKYO, JP, vol. E82-C, no. 2, February 1999 (1999-02), pages 274-281, XP000893483 ISSN: 0916-8524

## Description

This invention relates to an optical switching apparatus and an optical transmission apparatus which are applied to, for example, a wavelength-division multiplexing optical transmission system.

With optical fiber amplifiers recently put to practical use, information transmission by a wavelength-division multiplexing (WDM) method has drawn attention. Optical signals including a plurality of time-division-multiplexed time slots are multiplexed using different wavelengths, which enables the information transmission capacity to be increased remarkably.

In a conventional information transmission system, a transmission apparatus is provided for each wavelength. The add/drop process of signals is carried out in time slots. Since such an architecture requires as many transmission apparatuses as corresponds to the number of wavelengths to be multiplexed, the size of the system becomes large.

To overcome this problem, an optical transmission apparatus capable of performing the add/drop process of signals in wavelengths is being developed. In this type of apparatus, an optical switch apparatus for switching the path of an optical signal is an important device. Hereinafter, an apparatus for carrying out the add/drop process in time slots is called a transmission apparatus and an apparatus for carrying out the add/drop process in wavelengths is called an optical transmission apparatus to distinguish them.

Many information transmission systems are provided with working channels/sections and protection channels/sections for redundancy to prevent the signal transmission from being cut off due to the occurrence of a failure. This type of system has a so-called self-healing function of changing the normal traffic from the working channels/sections to the protection channels/sections or detouring the normal traffic around the working channels/sections to the protection channels/sections.

The self-healing function is a function related to the process called protection switching. The protection switching includes switching whereby the normal traffic flowing through the working channels/sections is detoured to the protection channels/sections and revertive switching whereby the normal traffic flowing through the protection channels/sections is returned to the working channels/sections.

The transmission apparatus can transmit the same traffic to both the working channels/sections and the protection channels/sections, because the traffic transmitted in the form of optical signals are converted to electric signals in the apparatus. This has an advantageous effect on the simplification of the procedure necessary to effect protection switching.

In contrast, the optical transmission apparatus as e.g. disclosed in EP0938244, deals with traffic in the form of optical signals without converting traffic into electric signals. Because of this, the conventional optical transmission apparatus cannot transmit the same traffic to both of the working channels/sections and protection channels/sections. This makes the procedure necessary to effect protection switching complex, which leads to the disadvantages that the state where the information transmission is cut off might last a long time and that the switch completion time might become longer.

The object of the present invention is to provide an optical switching apparatus and an optical transmission apparatus which are capable of simplifying the procedure necessary to effect protection switching and thereby contributing to an improvement in the performance of protection switching.

An optical switching apparatus of the present invention has the function of splitting optical signals arrived via the optical transmission lines into a plurality of sub-signals and sending them to a plurality of optical transmission lines other than the optical transmission lines over which the optical signals came.

More specifically, the present invention provides an optical switching apparatus according to claim 1.

With such a configuration, an optical signal inputted to a single input port can be outputted at two different output ports. This enables "Bridge" to be effected when protection switching is done in a wavelength-division multiplexing system.

An existing optical matrix switch cannot carry out the process of connecting the same traffic as that connected to the working system to the protection system as well (in a bridge action) and thereafter switching the transmission route of traffic from the working system to the protection system (in a switch action). For this reason, the process of trying to effect switching cannot help but be carried out when a failure has occurred in a conventional optical transmission apparatus. This makes the procedure for protection switching complicated in the optical transmission apparatus.

In contrast, an optical switch apparatus and optical transmission apparatus related to the present invention can be set in the Bridge state temporarily, instead of going directly into the Switch state at the time of protection switching. This makes it possible to realize protection switching in a more refined manner. In addition, protection switching can be effected in the same procedure used in a conventional transmission apparatus that switches signals electrically.

Therefore, a recovery from a failure can be made stably. Furthermore, the maintainability of the wavelength-division multiplexing network can be improved. In addition, the'switching time in protection switching can be shortened and therefore the time during which the path is interrupted can be shortened.

Here, "Bridge" means a process defined as the action of transmitting identical traffic on the working and protection channels in item 3.15 under Paragraph "Terms and Definitions" in the ITU-T (Telecommunication Standardization Sector of ITU) recommendation G.841 (10/98) distributed by ITU (the International Telecommunication Union).

This summary of the invention does not necessarily describe all necessary features so that the invention may also be a sub-combination of these described features.

The invention can be more fully understood from the following detailed description when taken in conjunction with the accompanying drawings, in which:
FIG. 1 is a functional block diagram showing the configuration of a conventional optical transmission apparatus used in a wavelength-division multiplexing ring network using OADM techniques;
FIGS. 2A to 2C are diagrams to help explain the operation when a failure has occurred in the transmission path in a case where two units of the optical transmission apparatus of FIG. 1 are provided so as to face each other;
FIGS. 3A and 3B are diagrams to help explain the operation when a failure has occurred in the transmission path in a case where two units of the optical transmission apparatus of FIG. 1 are provided so as to face each other;
FIG. 4 shows an example of a transmission system to which the present invention is applied;
FIG. 5 is a block diagram showing the configuration of a node in FIG. 4 according to an embodiment of the present invention;
FIG. 6 shows an example of setting paths in the transmission system of FIG. 4;
FIG. 7 shows the connection relationship between input and output signals at a node for each state when there is a Point-to-Point connection path on a network;
FIG. 8 is a block diagram showing the configuration of an optical switch section according to a first comparative example;
FIG. 9 is a block diagram showing the configuration of an optical switch section according to a second comparative example;
FIG. 10 is a block diagram showing the configuration of a optical switch section according to a first embodiment of the present invention;
FIG. 11 is a block diagram showing the configuration of a optical switch section according to a second embodiment of the present invention;
FIG. 12 is a block diagram showing the configuration of a optical switch section according to a third embodiment of the present invention;
FIG. 13 is a conceptual diagram of an optical matrix switch with Add/Drop ports;
FIG. 14 is a block diagram showing the configuration of a optical switch section according to a fourth embodiment of the present invention;
FIG. 15 is a block diagram showing the configuration of a optical switch section according to a fifth embodiment of the present invention;
FIG. 16 shows the connection relationship between input and output signals at a node when a Point-to-Multi-point connection path is set on the network;
FIG. 17 is a block diagram showing the configuration of a optical switch section according to a third comparative example;
FIG. 18 is a block diagram showing the configuration of a optical switch section according to a fourth comparative example;
FIG. 19 is a block diagram showing the configuration of a optical switch section according to a sixth embodiment of the present invention;
FIG. 20 is a block diagram showing the configuration of a optical switch section according to a seventh embodiment of the present invention;
FIG. 21 is a block diagram showing the configuration of a optical switch section according to a eighth embodiment of the present invention;
FIG. 22 is a block diagram showing the configuration of a optical switch section according to a ninth embodiment of the present invention;
FIG. 23 is a block diagram showing the configuration of a optical switch section according to a tenth embodiment of the present invention;
FIG. 24 is a block diagram showing the configuration of a optical switch section according to an eleventh embodiment of the present invention;
FIG. 25 is a block diagram showing the configuration of a optical switch section according to a twelfth embodiment of the present invention;
FIG. 26 is a block diagram showing the configuration of a optical switch section according to a thirteenth embodiment of the present invention;
FIG. 27 is a block diagram showing the configuration of a optical switch section according to a fourteenth embodiment of the present invention;
FIG. 28 shows a flow of traffic in the normal state when the optical transmission apparatus of FIG. 4 holds service traffic in the WEST direction in the form of Add/Drop;
FIG. 29 shows a flow of traffic in the mid-course stage of protection switching when a failure has occurred in the service line SL (WEST SRV) in FIG. 28;
FIG. 30 shows a flow of traffic at the final stage of protection switching when a failure has occurred in the service line SL (WEST SRV) in FIG. 28;
FIG. 31 shows a flow of traffic in the normal state when the optical transmission apparatus holds not only service traffic in the WEST direction in the form of Add/Drop but also part-time traffic in the WEST direction in the form of Add/Drop;
FIG. 36 shows a flow of traffic in the mid-course stage of protection switching when a failure has occurred in the service line SL (WEST SRV) in FIG. 35;
FIG. 37 shows a flow of traffic at the final stage of protection switching when a failure has occurred in the service line SL (WEST SRV) in FIG. 35;
FIG. 38 shows a flow of traffic in the normal state when the optical transmission apparatus holds not only service traffic in the WEST direction in the form of Add/Drop but also part-time traffic in the WEST direction in the form of Add/Drop;
FIG. 39 shows a flow of traffic in the mid-course stage of protection switching when a failure has occurred in the service line SL (WEST SRV) in FIG. 38;
FIG. 40 shows a flow of traffic at the final stage of protection switching when a failure has occurred in the service line SL (WEST SRV) in FIG. 38;
FIG. 41 shows a flow of traffic in the normal state, when the optical transmission apparatus holds not only service traffic in the WEST direction in the form of Add/Drop but also part-time traffic in the WEST direction in the form of Add/Drop and when a failure has occurred in the optical cross-connect section (SRV) 4-1 with a redundant configuration within the node and the service traffic is switched to the protection-system function block side;
FIG. 42 is a block diagram showing another configuration of an optical transmission apparatus according to the present invention;
FIG. 43 is a block diagram showing another configuration of an optical transmission apparatus according to the present invention;
FIG. 44 is a block diagram showing another configuration of an optical transmission apparatus according to the present invention;
FIG. 45 is a block diagram showing another configuration of an optical transmission apparatus according to the present invention;
FIG. 46 is a block diagram showing another configuration of an optical transmission apparatus according to the present invention;
FIG. 47 is a block diagram showing another configuration of an optical transmission apparatus according to the present invention; and
FIG. 48 is a block diagram showing another configuration of an optical transmission apparatus according to the present invention.

Hereinafter, referring to the accompanying drawings, embodiments of the present invention will be explained.

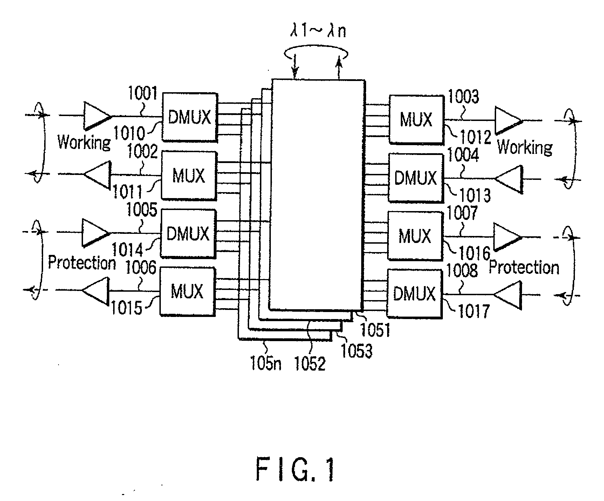

Referring to FIG. 1, an optical transmission apparatus used in a wavelength-division multiplexing ring network using OADM (Optical Add Drop Multiplexer) techniques will be explained. FIG. 1 is a functional block diagram showing the configuration of an optical transmission apparatus applied to a network with the so-called FFRN (Four Fiber Ring Network) configuration. The network of FIG. 1 comprises service lines 1001 to 1004 and protection lines 1005 to 1008. The concept of this type of apparatus has been described in, for example, the references below:
i) Rainer Iraschko et al., "An Optical 4-Fiber bidirectional Line-switched Ring," OFC'99, TuK 3-1, 1999.
ii) Tetsuya MIYAZAKI et al., "A Demonstration of an Optical Switch Circuit with "Bridge and Switch" Function in WDM Four-Fiber Ring Networks," IEICE TRANS.ELECTRON., Vol. E82-C, No. 2, February 1999.

In the optical transmission apparatus 1000 of FIG. 1, the wavelength-division multiplex light arrived through lines 1001, 1004, 1005, and 1008 is split into an optical signal with a wavelength of λ1, an optical signal with a wavelength of λ2, ..., an optical signal with a wavelength of λn by wavelength demultiplexing sections (DMUX) 1010, 1013, 1014, and 1017, respectively. The demultiplexed optical signals with wavelengths of λ1, λ2, ..., λn are inputted to optical switch circuits 1051 to 105n provided for the respective wavelengths.

Each of the optical switch circuits 1051 to 105n subjects the optical signal of the wavelength allocated to itself to an Add/Drop process or a Through process. The individual optical signals are multiplexed at wavelength multiplexing sections (MUX) 1011, 1012, 1015, and 1016 and the resulting signals are transmitted to adjacent stations via lines 1002, 1003, 1006, and 1007.

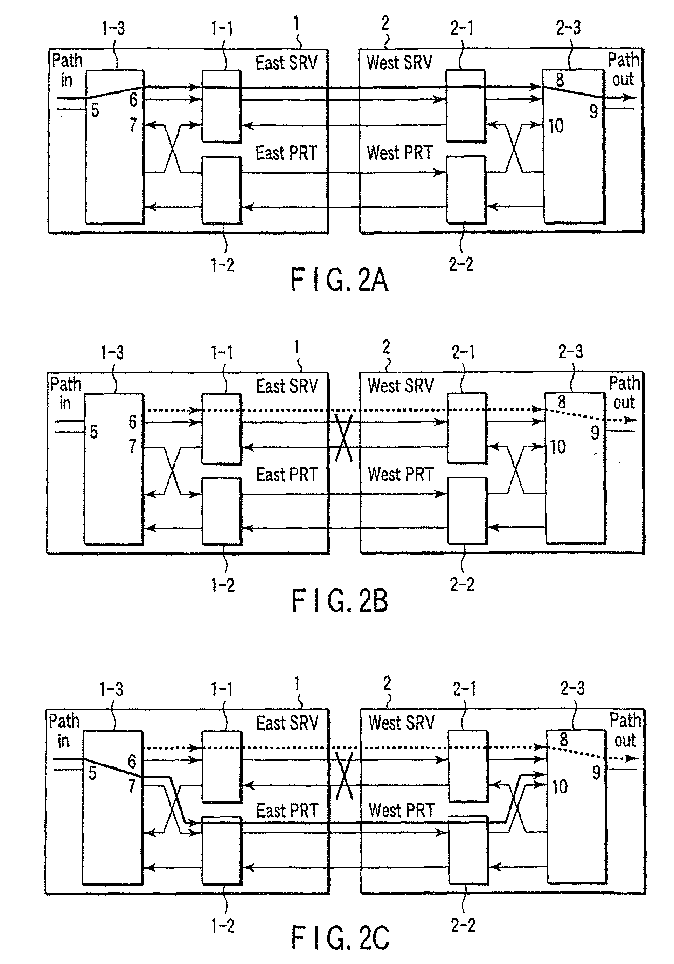

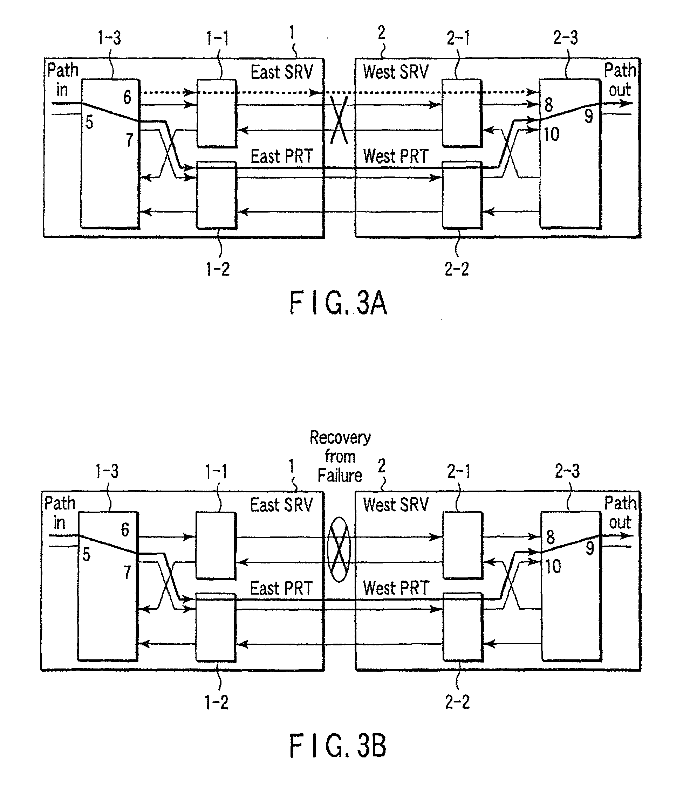

Referring to FIGS. 2A, 2B, 2C, 3A, and 3B, an explanation will be given as to the operation in the failure state when two units of the optical transmission apparatus of FIG. 1 are provided in such a manner that they face each other. In these figures, reference numerals 1 and 2 indicate optical transmission apparatuses having the configuration shown in FIG. 1. They are connected bidirectionally via service lines (with no reference numeral) and protection lines (with no reference numeral). Reference numerals 1-1 and 2-2 indicate wavelength multiplexing sections, which correspond to reference numerals 1011, 1012, 1015, and 1016 in FIG. 1. Reference numerals 1-2 and 2-1 indicate wavelength demultiplexing sections, which correspond to reference numerals 1010, 1013, 1014, and 1017 in FIG. 1. Reference numerals 1-3 and 2-3 are optical switch circuits, which correspond to a single common wavelength.

In the normal state shown in FIG. 2A, the optical signal inputted to an input port 5 of the optical switch circuit 1-3 of the optical transmission apparatus 1 is connected to an output port 6. This optical signal passes through the optical wavelength-division multiplexing and demultiplexing section 1-1 and is outputted from the optical transmission apparatus 1 to the service line. The signal introduced via the service lines to the optical transmission apparatus 2 passes through the optical wavelength-division multiplexing and demultiplexing section 2-1 of the optical transmission apparatus 2 and is inputted to an input port 8 of the optical switch circuit 2-3 and then connected to an output port 9. In this way, a path extending from the optical transmission apparatus 1 to the optical transmission apparatus 2 is set.

It is assumed that, in this state, bidirectional failures (shown by the symbol × in the figure) have occurred in the service lines as shown in FIG. 2B. Should this happen, the input port 5 is disconnected from the output port 6 in the optical switch circuit 1-3 of the optical transmission apparatus 1. As a result of this, the path of the SRV system, including the inside of the optical transmission apparatus 1, is completely interrupted.

Next, as shown in FIG. 2C, the output port 7 is connected to the input port 5 in the optical switch circuit 1-3 of the optical transmission apparatus 1. This enables the path to pass through the PRT system and reach an input port 10 of the optical switch circuit 2-3 of the optical transmission apparatus 2. Therefore, the optical transmission apparatus 2 can check the state of the path.

After this state, the optical transmission apparatus 2 disconnects the input port 8 from the output port 9 and connects the input port 10 to the output port 9 in the optical switch circuit 2-3 as shown in FIG. 3A. In this way, a path via the protection line is set between the input port 5 of the optical switch circuit 1-3 of the optical transmission apparatus 1 and the output port 9 of the optical switch circuit 2-3 of the optical transmission apparatus 2, thereby saving the traffic flowing through the path.

Even after the traffic has been recovered from a failure in the state of FIG. 3A, the path of the SRV system is completely interrupted at the stage of FIG. 2B. Because of this, the optical transmission apparatus 2 cannot recognize the state of the path of the SRV system, even when the traffic has recovered from a failure. To overcome this drawback, it is necessary to provide the following procedure to give a lead to effect revertive switching as a result of the recovery from a failure.

### (Step 1)

In the state of FIG. 3B, the optical transmission apparatus 1 disconnects the output port 7 from the input port 5 in the optical switch circuit 1-3.

### (Step 2)

Then, the optical transmission apparatus 1 connects the output port 6 to the input port 5 in the optical switch circuit 1-3. As a result, if the failure has been eliminated, the path extends to the input port 8 of the optical switch circuit 2-3 of the optical transmission apparatus 2. This enables the optical transmission apparatus 2 to recognize that the service line has been conducting, or check the state of the path of the service line. Conversely, if the failure has not been eliminated, the path does not extend to the input port 8 of the optical switch circuit 2-3 of the optical transmission apparatus 2. Therefore, the optical transmission apparatus 2 can know that the service line has not been conducting.

### (Step 3)

If having recognized at step 2 that the service line has been conducting, the optical transmission apparatus 2 disconnects the input port 10 from the output port 9 in the optical switch circuit 2-3 and connects the input port 8 to the output port 9. In this way, revertive switching is started.

As described above, at step 1 to step 3, it is necessary to do the work of returning the traffic flowing through the PRT system to the SRV system temporarily and determining whether or not the SRV system has been recovered from a failure by checking the continuity of the traffic.

Since the work requires the traffic saved by being caused to flow through the PRT system to be switched to the SRV system, this results in the interruption of the path. A similar process must be carried out in not only effecting revertive switching but also starting the process of switching to the PRT system. In this case, too, the path is interrupted.

To summarize what has been described above, the OADM apparatus that switches signals according to the state of optical signals have the following disadvantages:
(a) In switching, it is necessary to carry out the process of checking the state of a system to which the traffic is be detoured. This results in unnecessary switching or revertive switching.
(b) Effecting revertive switching always requires the process of connecting the signal path to the SRV system on the transmission side and then connecting the path to the SRV system on the reception side. This lengthens the time required for revertive switching, which thus lengthens the time during which the path is interrupted.
(c) Effecting switching always requires the process of connecting the signal path to the PRT system on the transmission side and then connecting the path to the PRT system on the reception side. This lengthens the time required for switching, which thus lengthens the time during which the path is interrupted.
   There is still the following disadvantage (d) related to (a).
(d) For example, if the operator who has confirmed the recovery from the failure notified the recovery to the optical transmission apparatus related to the switching by means of an exclusive line or the like, this would eliminate the need to carry out the unnecessary switching process. However, providing such a new process would place restrictions on the design of the switching algorithm. This would lengthen the switch completion time or the time during which the path is interrupted.

Moreover, the above difficulties might cause various secondary disadvantages, such as a decrease in the transmission quality. In this respect, a solution to those disadvantages must be found.

That is, the OADM apparatus that switches between the paths of optical signals using the optical signals as they are has various disadvantages in effecting switching. Thus, there have been demands toward overcoming the disadvantages and making it easy to effect switching.

These disadvantages are 'not peculiar to the OADM apparatuses described in the above references (i) and (ii). An OADM apparatus with a general configuration has also these types of disadvantages. Neither reference (i) nor reference (ii) has described measures against such disadvantages.

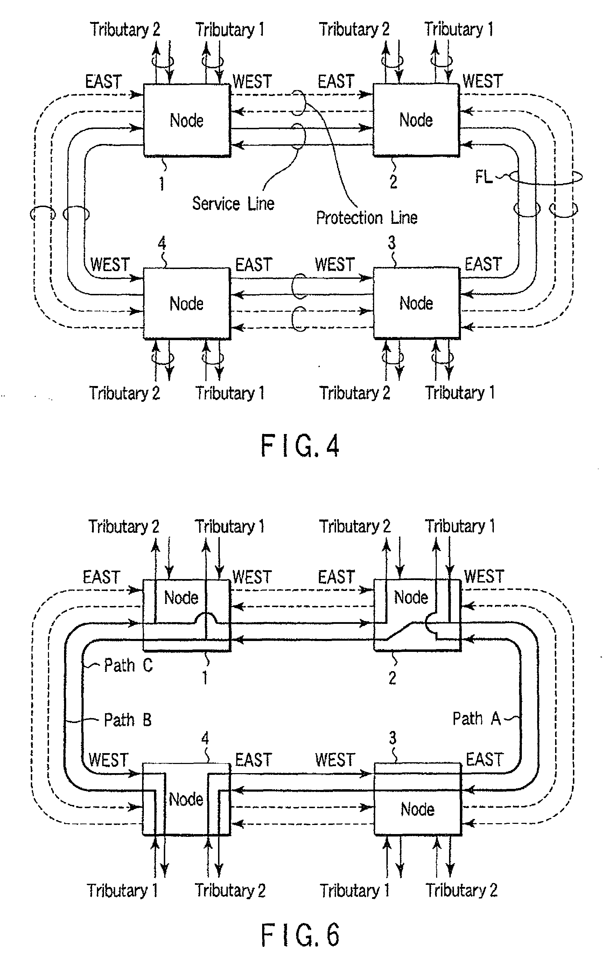

FIG. 4 shows an example of an information transmission system to which the present invention is applied. The system of FIG. 4 includes a plurality of optical transmission apparatuses (hereinafter, referred to as nodes) 1 to 4 and an optical fiber transmission line FL that connects the individual nodes in a ring. The optical fiber transmission line FL includes service lines SL and protection lines PL. Each of the lines SL, PL includes a pair of optical fibers that transmit traffic bidirectionally. The system form shown in FIG. 4 is called the so-called four-fiber ring.

In FIG. 4, the nodes 1 to 4 extract optical signals of any of the wavelengths included in the wavelength-division multiplex light transmitted via the optical fiber transmission line FL in the form of tributary signals (Tributary 1, Tributary 2). In addition, the nodes 1 to 4 multiplex the tributary signals with the wavelength-division multiplex light and send the resulting signals to the optical fiber transmission line FL.

Tributary signals mean signals inputted from the outside of the ring network to the individual nodes and signals outputted from the individual nodes to the outside of the ring network. The tributary signal multiplexed at a node is transmitted to another node via the ring network and finally demultiplexed at the destination node. In FIG. 4, the input/output routes for the tributary signals for two channels are shown at each node. In the present invention, however, the number of channels for the tributary signals inputted to or outputted from each node is not limited to two.

In FIG. 4, each node is connected at two points to the optical fiber transmission line FL. In the explanation below, one of the points connected to the optical fiber transmission line FL at each node is represented as WEST and the other is represented as EAST. The service line SL on the WEST side is represented as West Service (West SRV), the protection line PL as West Protection (West PRT), the service line SL on the EAST side as East Service (East SRV), and the protection line PL as East Protection (East PRT). An information transmission route set between the tributary at a node and the tributary at another node is called a path. Information transmitted via a path is called traffic. In the present specification, the word "working" and the word "service" are used for the same meaning.

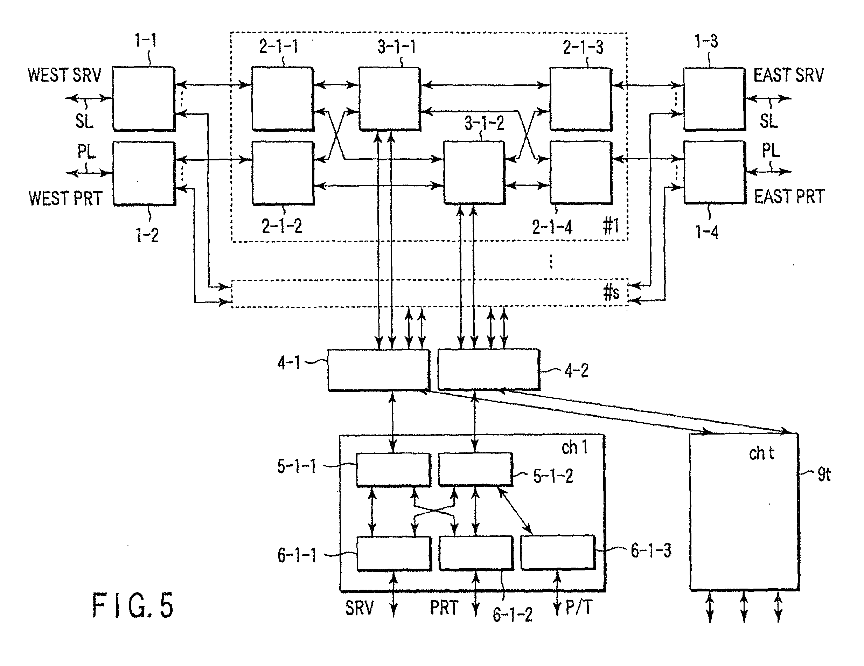

FIG. 5 is a block diagram showing the configuration of the nodes 1 to 4 in FIG. 4. The node of FIG. 5 includes wavelength-division multiplexing and demultiplexing sections 1-1 to 1-4 connected to optical transmission line FL, line switch sections #1 to #S, tributary interface sections 6-1-1 to 6-1-3, optical cross-connect sections 4-1 to 4-2, and tributary switch sections (SRV) 5-1-1 and 5-1-2. The line switch sections #1 to #S are provided so as to correspond to each wavelength.

The wavelength-division multiplexing and demultiplexing section 1-1 is connected to a service line SL (West SRV). The wavelength-division multiplexing and demultiplexing section 1-2 is connected to a protection line PL (West PRT). The wavelength-division multiplexing and demultiplexing section 1-3 is connected to a service line SL (East SRV). The wavelength-division multiplexing and demultiplexing section 1-4 is connected to a protection line PL (East PRT). Each of the wavelength-division multiplexing and demultiplexing sections 1-1 to 1-4 not only demultiplexes the wavelength-division multiplex light inputted from the corresponding transmission line into the individual wavelengths but also multiplexes the light of each wavelength supplied from inside the node and sends the resulting light to the transmission line.

The line switch sections #1 to #s include line interfaces 2-1-1 to 2-1-4, optical switch section(SRV) 3-1-1, and optical switch section(PRT) 3-1-2. The optical switch sections 3-1-1 and 3-1-2 have the functions of performing an Add process, a Drop process, and a Through process on the light of each wavelength and "bridge" the light of each wavelength. The bridge function of the optical switch sections 3-1-1 and 3-1-2 will be explained later in detail.

The tributary interface sections 6-1-1 to 6-1-3 serve as interfaces for the tributary signals. The optical cross-connect sections 4-1 and 4-2 are used to connect a tributary interface channel to the light of each wavelength arbitrarily. The tributary switch sections (SRV) 5-1-1 and 5-1-2 carry out the function related to the protection switching of the optical signal inputted and outputted via the tributary interface sections 6-1-1 to 6-1-3.

In FIG. 5, the function block including the tributary switch sections (SRV) 5-1-1 and 5-1-2 and the tributary interface sections 6-1-1 to 6-1-3 is provided for each channel on the tributary side (the low-speed side). In FIG. 5, the low-speed-side channels are distinguished by the reference symbols ch 1 to ch t.

The tributary interface section 6-1-3 particularly has an interface function related to the input and output of part-time traffic (hereinafter, referred to as P/T). Normally, part-time traffic is treated as traffic whose priority is lower than that of service traffic (synonymous with normal traffic). Part-time traffic is traffic held in an empty path in the protection line PL and corresponds to Extra Traffic in the ITU-T recommendation.

Although not shown in FIG. 5, each of the nodes 1 to 4 includes a control section, such as a CPU (Central Processing Unit), that shoulders the main part of its control.

FIG. 6 shows an example of setting paths in the transmission system of FIG. 4. In FIG. 6, a Point-to-Point connection path and a Point-to-Multi-point connection path are shown. The Point-to-Point connection path is a path for connecting senders of signals and receivers of signals in a one-to-one correspondence. The Point-to-Multi-point connection path is a path where there are a plurality of receivers for a sender of a signal.

In FIG. 6, path A is set between Tributary 2 of node 4 and Tributary 1 of node 2. The signal inputted to the Tributary 2 of node 4 is added to East SRV and the resulting signal is sent to node 3. Node 3 connects the signal inputted to West SRV to East SRV without performing the Add/Drop process of the signal. The connection is the so-called Through connection. Then, the signal is dropped at node 2 and the resulting signal is outputted from Tributary 1. As described above, path A is the Point-to-Point connection path where the senders of the signal correspond to the receivers in a one-to-one correspondence. Path B and path C are both point-to-Multi-point connection paths, which will be explained later in detail.

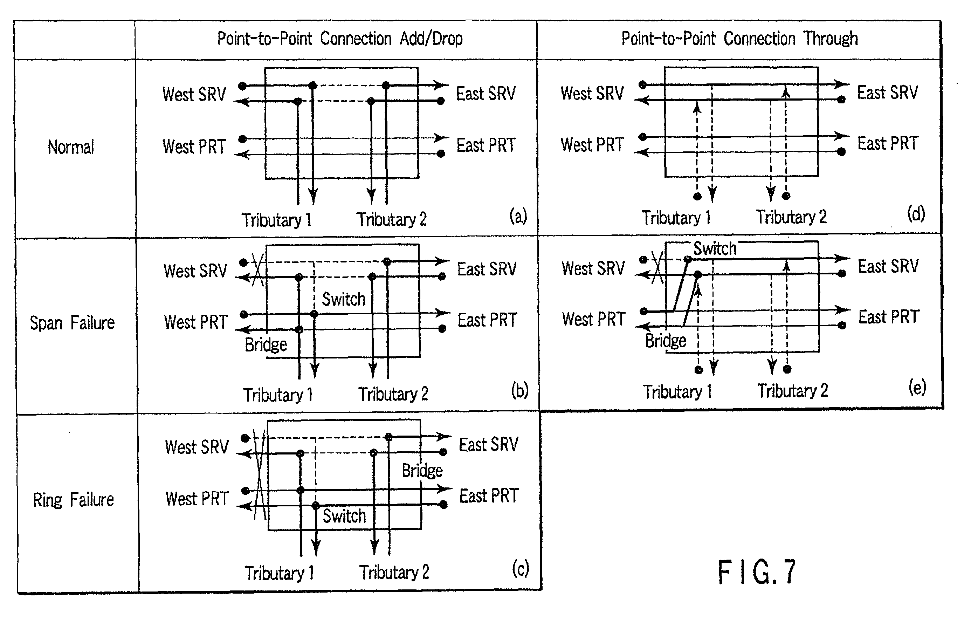

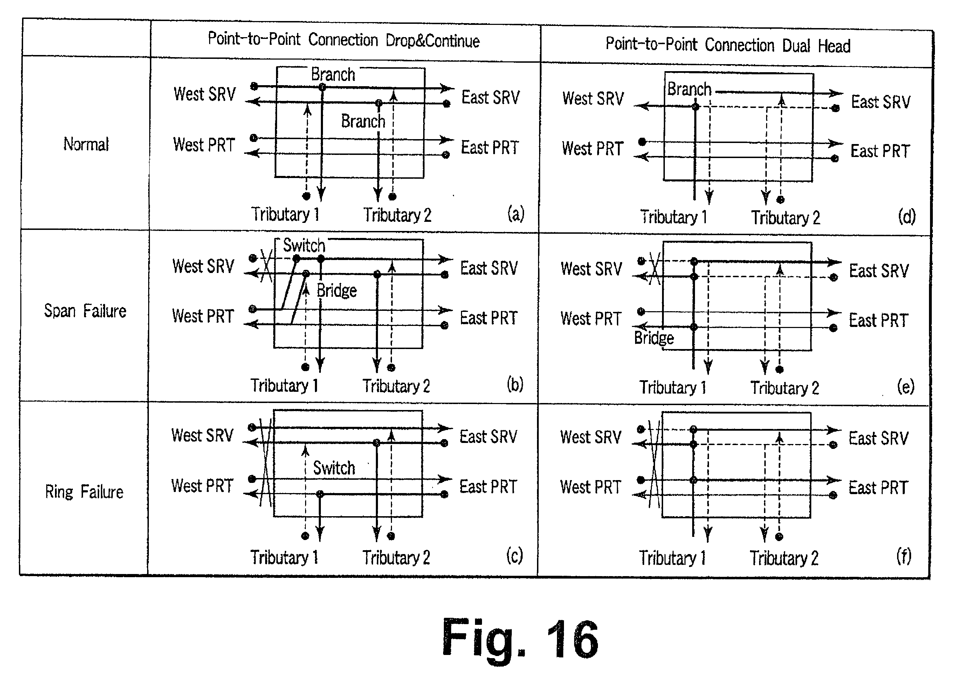

A node capable of Point-to-Point connection path setting differs from a node capable of Point-to-Multi-point connection path setting in the functions they are required to have. In the explanation below, a line switch section (hereinafter, referred to as a Point-to-Point connection line switch) where the connection relationship of FIG. 7 can be set in a first to a fifth embodiment of the present invention will be described. Then, a line switch section (hereinafter, referred to as a Point-to-Multi-point connection line switch) where not only the connection relationship of FIG. 7 but also the connection relationship of FIG. 16 (explained later) can be set will be described in a sixth to a fourteenth embodiment of the present invention. Thereafter, optical transmission apparatuses provided with the line switch sections explained in the first to fourteenth embodiments will be described in a fifteenth to a twenty-second embodiment of the present invention.

### <Embodiments to help explain a line switch for Point-to-Point connection>

Next, the connection relationship between input and output signals at each node will be explained for each of the normal state, span failure state, and ring failure state. FIG. 7 shows the connection relationship between input and output signals at a node for each state when there are Point-to-Point connection paths on the network.

As shown in section (a) of FIG. 4, Tributary 1 is connected to West SRV and Tributary 2 is connected to East SRV in normal state at the input and output nodes (Add/Drop Nodes) of the Point-to-Point connection path. A Point-to-Point connection path is set with a Tributary of another node where a similar connection setting has been done.

As shown in section (b) of FIG. 4, when a span failure has occurred in the West SRV line in the normal state, span switching is effected. That is, the path is switched from the West SRV line to the West PRT line. Even after the span switching has been completed, the signal Tributary 1 adds is still connected to the West SRV and further connected to the West PRT. A state where the same signal is connected to SRV and PRT is called "Bridge." In addition, the place to which the signal dropped to Tributary 1 is inputted is switched from the West SRV to the West PRT.

As shown in section (c) of FIG. 4, when a ring failure has occurred in the normal state in the West SRV line and West PRT line, ring switching is done. The signal Tributary 1 adds is bridged and connected to the West SRV and East PRT. In addition, the signal dropped to Tributary 1 is switched from the West SRV to the East PRT.

As shown in section (d) of FIG. 4, the West SRV and East SRV are connected to each other by a Through connection at the pass-through nodes of the Point-to-Point connection path.

As shown in section (e) of FIG. 4, when a span failure has occurred in the normal state in the West SRV line, span switching is done. The signal inputted from the East SRV is bridged and connected to the West SRV and West PRT. In addition, the input route of the signal sent to the East SRV is switched from the West SRV to the West PRT.

### (First comparative example)

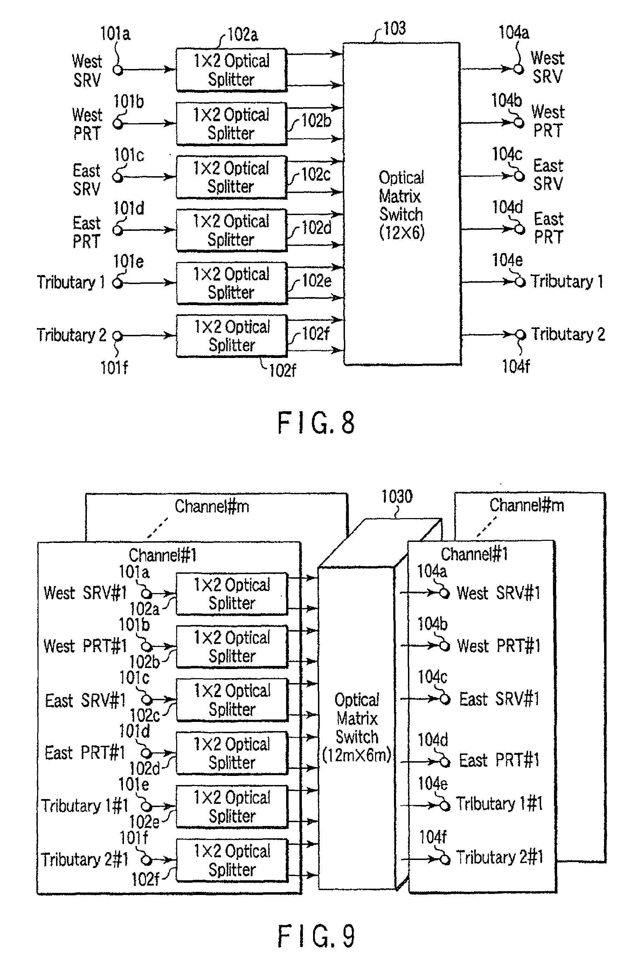

FIG. 8 is a block diagram showing a comparative example configuration of a optical switch section to provide aid to understanding the present invention. In FIG. 8, numerals 101a to 101f indicate input ports, 102a to 102f indicate 1 × 2 optical splitters for splitting an input signal in half and outputting them, 103 indicates an optical matrix switch, and 104a to 104f indicate output ports. Generally, a matrix switch is a device which is composed of optical switch elements connected in a matrix and performs the switching of optical signals.

The optical matrix switch 103 of FIG. 8 is of the 12 × 6 type and includes 12 optical input terminals and 6 optical output terminals. The optical matrix switch 103 changes the route of the optical light inputted from a given optical input terminal according to an externally applied control signal and outputs the optical light at a given optical output terminal. The control signal to the optical matrix switch 103 is generated by the CPU of a node and supplied via a control bus or the like.

With the configuration of FIG. 8, the route of the optical signal is switched by the optical matrix switch 103. Thus, the input signals supplied to all the input ports 101a to 101f can be connected to any of the output ports 104a to 104f. Consequently, it is possible to realize the connection settings (section (a) and section (d) in FIG. 7) in the normal state of FIG. 7.

Furthermore, after each input signal is split in half by the 1 × 2 optical splitters 102a to 102f, the resulting signals are inputted to the optical matrix switch 103. This makes it possible to output the optical signal inputted from one input port at two different output ports. For example, the optical signal from the input port 101e of Tributary 1 can be outputted to the output port 104a of West SRV and the output port 104b of West PRT.

This is nothing but the realization of the bridge function. Of course, the switch function can be realized by changing the switching state of the optical matrix switch 103. Therefore, with the configuration of FIG. 8, the connection states shown in sections(b),(c), (e), and (f) of FIG. 7 can be realized. Consequently, all the connection states in FIG. 7 can be realized.

Furthermore, the line switch section of FIG. 8 can realize not only the connection relationship shown in FIG. 7 but also loop-back connection and in-node folding connection.

Loop-back connection is a form of connection where, for example, the signal inputted from West SRV is outputted at West PRT and the signal inputted from West PRT is outputted at West PRT. In-node folding connection is a form of connection where the input signal from either Tributary 1 or 2 is outputted at Tributary 1 or 2.

The comparative example is not limited to the optical matrix switch 103 with a size of 12 × 6 in FIG. 8. For instance, even when the comparative example uses an optical matrix of a larger size, it can realize similar functions. In the embodiments explained below, too, the invention is not restricted to the size shown in the figures and may be applied to an optical matrix switch of a larger size.

As described above, with the first comparative example, the optical signal inputted to each of the input ports 101a to 101f is split in half by the 1 × 2 optical splitters 102a to 102f and the resulting signals are inputted to the input terminals of the optical matrix switch 103. The route of each optical signal is switched at the optical matrix switch 103 and the resulting signal is outputted at any of the output ports 104a to 104f.
This enables the optical signal from the same input port to be outputted at two different ports.

By doing this, not only "switch" but also "bridge" can be done at the time of protection switching. As a result, in protection switching, the same traffic can be caused to flow through both the service line SL and the protection line PL. This makes it possible to check very easily the normality of the system to which the service traffic is to be switched. Of course, it is also possible to eliminate a possibility that the path will be interrupted in protection switching.

Therefore, when protection switching is effected, for example, there is no need to provide a new procedure, such as a procedure by which a person who has verified the recovery from the failure informs the optical transmission apparatus related to switching of the recovery. This alleviates the restrictions on designing algorithms for protection switching. That is, on the basis of an algorithm similar to that for protection switching in a conventional transmission apparatus, the algorithm for protection switching in an optical transmission apparatus can be designed. From these things, protection switching can be done by a simple procedure in the optical transmission apparatus, too.

### (Second comparative example)

FIG. 9 is a block diagram showing a second comparative example configuration of a optical switch section to aid understanding of the present invention. The configuration of FIG. 9 is an expansion of the configuration of FIG. 8. In the second comparative example, a line switch corresponding to a plurality of channels (#1 to #m) will be explained. In the figure, m means the number of multiplexed wavelengths, that is, the number of channels.

In the line switch of FIG. 9, each of the channels #1 to #m is provided with the West SRV, West PRT, East SRV, East PRT, Tributary 1, and Tributary 2. Each channel is provided with input ports 101a to 101f, 1 × 2 optical splitters 102a to 102f for splitting in half the optical signal from the respective input ports 101a to 101f and output ports 104a to 104f.

Six 1 × 2 optical splitters 102a to 102f are provided for channel. Thus 6m outputs of 6m 1 × 2 optical splitters are inputted to the optical matrix switch 1030. The output of the optical matrix switch 1030 is supplied from any of the output ports 104a to 104f of each of the channels #1 to #m. The optical matrix switch 1030 is of the 12m × 16m type and has 12m input terminals and 6m output terminals.

With this configuration, the same connection relationship of paths as in the first comparative example can be realized for each channel. That is, since "bridge" can be done for each channel, the effect similar to that of the first comparative example related to protection switching can be produced.

The connection setting of the signals for a plurality of channels is effected in the single optical matrix switch 1030. This enables the signals to be switched between different channels (that is, different wavelengths). Therefore, in the case of Through connection shown in FIG. 7, for example, the signal inputted to the West SRV of channel #1 can be outputted to the East SRV of channel #m.

As described above, in the second comparative example, it is possible to realize the connection setting that enables the signals to be inputted or outputted between different channels. In the WDM transmission system, such connection setting is equivalent to wavelength conversion.

Furthermore, in the case of Add connection shown in FIG. 7, for example, the signal inputted to Tributary 1 of channel #1 can be outputted to the West SRV of channel #m. That is, a given tributary signal of channels #1 to #m can be outputted to the output ports 104a to 104f of a given channel. Therefore, with the second comparative example, the wavelength of the signal inputted to Tributary can be selected.

### (First Embodiment)

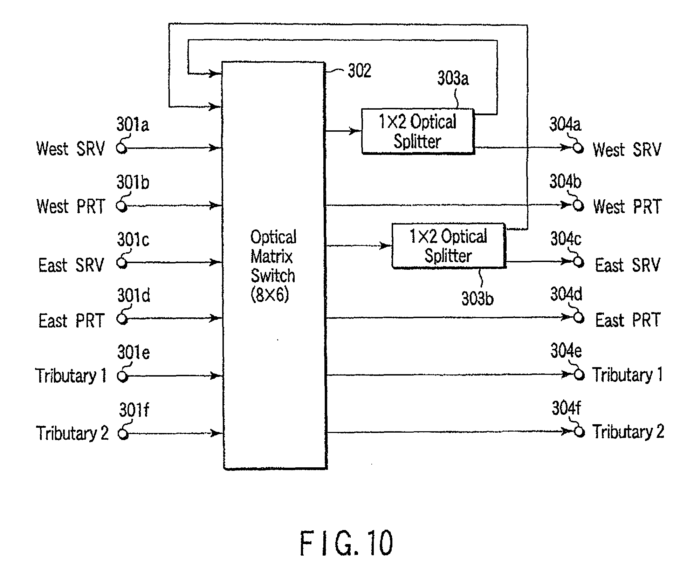

FIG. 10 is a block diagram showing the configuration of a optical switch section according to a first embodiment of the present invention. In FIG. 10, reference numerals 301a to 301f indicate input ports, 302 indicates an 8 × 6 optical matrix switch, 302a and 303b indicate 1 × 2 optical splitters, and 304a to 304f indicate output ports.

The 1 × 2 optical splitter 303a is connected to one output terminal of the optical matrix switch 302 and splits in half the output signal from the output terminal. One split output signal is connected to a West SRV output port 304a and the other split output signal is connected again to an input terminal of the optical matrix switch 302.

The 1 × 2 optical splitter 303b is connected to one output terminal of the optical matrix switch 302 and splits in half the output signal from the output terminal. One split output signal is connected to an East SRV output port 304c and the other split output signal is connected again to an input terminal of the optical matrix switch 302.

With the configuration of FIG. 10, since the optical matrix switch 302 is used as means for switching the connection of optical signals, the input signals supplied to all the input ports 301a to 301f can be connected to any of the output ports 304a to 304f. Consequently, it is possible to realize the connection setting in the normal state (section (a) and section (d)) shown in FIG. 7.

In the first embodiment, the optical signals outputted from the optical matrix switch 302 to the West SRV and East SRV are split in half by the 1 × 2 optical splitters 303a, 303b. Then, one of the split outputs from each of the splitters 303a, 303b is inputted again to the optical matrix switch 302. This enables the same traffic as that outputted to the SRV output port to be outputted to the PRT output port as well. That is, the optical signal inputted from the same input port can be outputted at the SRV and PRT output ports. For example, the optical signal from the input port 301e of Tributary 1 can be outputted to both the output port 304a of the West SRV and the output port 304b of the West PRT.

This makes it possible to realize the bridge function as in the first comparative example. Of course, the switch function can be realized by changing the setting of the switching state of the optical matrix switch 302. As described above, with the configuration of FIG. 10, it is possible to realize the connection states shown in sections (b), (c), (e), and (f) of FIG. 7. Therefore, all the connection states shown in FIG. 7 can be realized.

Furthermore, the line switch section of FIG. 10 enables not only the connection states of FIG. 7 but also loop-back connection and in-node folding connection to be realized.

### (Second Embodiment)

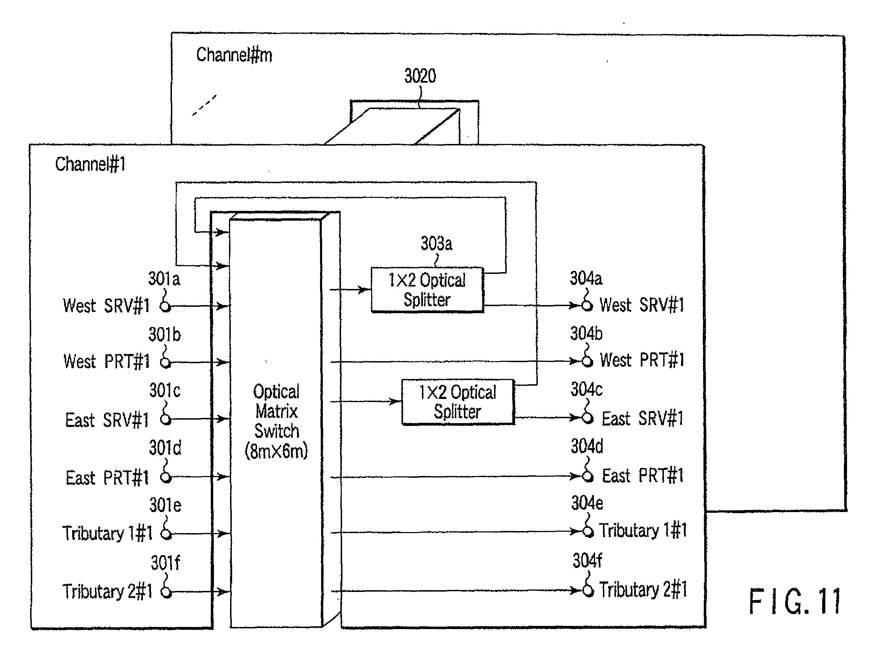

FIG. 11 is a block diagram showing the configuration of a optical switch section according to a second embodiment of the present invention. The configuration of FIG. 11 is an expansion of the configuration of FIG. 10. In the second embodiment, a line switch corresponding to a plurality of channels (#1 to #m) will be explained.

In the line switch of FIG. 11, each of the channels #1 to #m is provided with the West SRV, West PRT, East SRV, East PRT, Tributary 1, and Tributary 2. Each channel is provided with input ports 301a to 301f, 1 × 2 optical splitters 303a and 303b for splitting in half the optical signal from each of the input ports 301a to 301f, and output ports 304a to 304f. An optical matrix switch 3020 is of the 8m × 6m type with 8m inputs and 6m outputs.

With the above configuration, the same connection relationship as in the first comparative example can be realized for each channel. That is, since "bridge" can be done, the same effect as that of the first comparative example related to protection switching can be produced. Furthermore, since the connection setting of the signals for a plurality of channels is processed at the single optical matrix switch 3020, this enables the switching of signals between different channels. As a result, wavelength conversion and wavelength selection can also be made.

### (Third Embodiment)

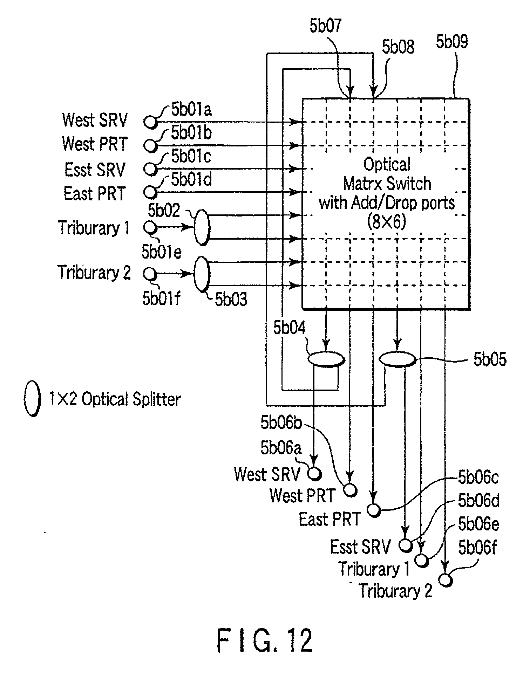

FIG. 12 is a block diagram showing the configuration of a optical switch section according to a third embodiment of the present invention. In FIG. 12, reference numerals 5b01a to 5b01f indicate input ports, 5b06a to 5b06f indicate output ports, 5b02 to 5b05 indicate 1 × 2 optical splitters, and 5b09 indicates an optical matrix switch with Add/Drop ports.

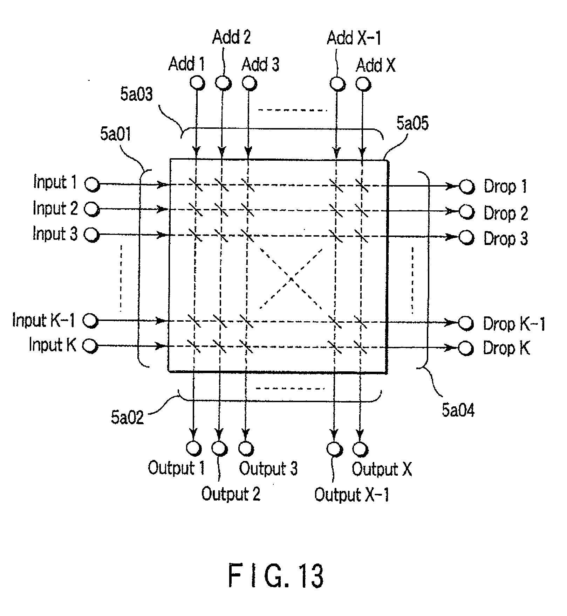

Referring to FIG. 13, an conceptual explanation of the optical matrix switch with Add/Drop ports will be given. The optical matrix switch with Add/Drop ports 5a05 of FIG. 13 includes a K number of input terminals 5a01, an X number of output terminals 5a02, and an X number of Add terminals 5a03, and a K number of Drop terminals 5a04.

The optical matrix switch with Add/Drop ports 5a05 selectively outputs any one of the input optical signals L (1 ≦ L ≦ K) of the input terminals 5a01 or any one of the Add optical signals N (1 ≦ N ≦ X) of the Add terminals 5a03 as any output (1 ≦ N ≦ X) of the output terminals 5a02.

Only when the input optical signals L (1 ≦ L ≦ K) inputted from the input terminals 5a01 are connected to none of the output terminals 5a02, the input optical signal L is outputted from the L-th (1 ≦ L ≦ K) Drop terminal 5a04 in a transmissive manner.

The optical matrix switch with Add/Drop ports 5b09 of FIG. 12 is of the 8 × 6 type and has eight input terminals, 6 output terminals, and two expansion input (Add) terminals. The West SRV traffic, West PRT traffic, East SRV traffic, and East PRT traffic inputted from the input ports 5b01a to 5b01d are inputted to four input terminals. The traffic inputted from Tributary 1 and that from Tributary 2 are split in half at the 1 × 2 optical splitters 5b02, 5b03, respectively, and the resulting signals are inputted to the remaining four input terminals.

Two of the output terminals of the optical matrix switch 5b09 are connected to output ports 5b06b and 5b06c and lead to the outputs of the West PRT and East PRT. Two of the other output terminals are connected to output ports 5b06e and 5b06f and lead to the outputs of Tributary 1 and Tributary 2. The remaining output terminals are connected to the 1 × 2 optical splitters 5b04, 5b05.

One split end of the 1 × 2 optical splitter 5b04 is connected to an output port 5606a and leads to the West SRV. One split end of the 1 × 2 optical splitter 5b05 is connected to an output port 5b06d and leads to the East SRV. The other split ends of the 1 × 2 optical splitters 5b04, 5b05 are connected to Add terminals of the optical matrix switch 5b09.

With the configuration of FIG. 12, since the optical matrix switch is used as means for switching the connection of the optical signals, the input signals supplied to all the input ports 5b01a to 5b01f can be connected to any of the output ports 5b06a to 5b06f. Therefore, it is possible to realize the connection setting (in section (a) and section (d)) in the normal state shown in FIG. 7.

Furthermore, the input to Tributary 1 is split in half by the optical splitter 5b02 and inputted to the optical matrix switch 5b09. The input to Tributary 2 is split in half by the optical splitter 5b03 and inputted to the optical matrix switch 5b09. As a result, the input signal to Tributary 1 can be connected to any two of the output ports 5b06a to 5b06f. The input signal to Tributary 2 can also be connected to any two of the output ports 5b06a to 5b06f.

In addition, the optical splitter 5b04 connected to the output side of the optical matrix switch 5b09 can make the output signal to the West SRV the same as the output signal to the West PRT. Similarly, the optical splitter 5b05 can make the output signal to the East SRV the same as the output signal to the East PRT.

These actions enable the bridge function to be realized. The switch function can also be realized by supplying a control signal or the like to change the connection setting of the optical matrix switch 5b09.

As described above, with the configuration of FIG. 12, the connection states shown in sections (b), (c), (e), and (f) of FIG. 7 can be realized. As a result, all the connection states shown in FIG. 7 can be realized.

Furthermore, the line switch section of FIG. 12 enables not only the connection relationship of FIG. 7 but also loop-back connection and in-node folding connection to be realized.

While in FIG. 12, the optical matrix switch has a size of 8 × 6, the configuration of the third embodiment is not restricted to this size.

### (Fourth Embodiment)

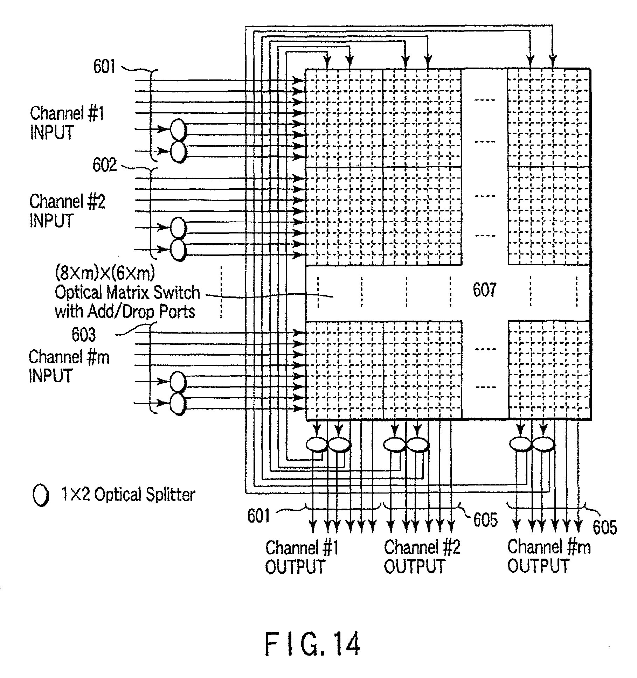

FIG. 14 is a block diagram showing the configuration of a optical switch section according to a fourth embodiment of the present invention. The configuration of FIG. 14 is an expansion of the configuration of FIG. 12. In the fourh embodiment, a line switch corresponding to a plurality of channels (#1 to #m) will be explained.

In FIG. 14, each of reference numerals 601 to 60m indicates a group of input and output ports for each channel. In the line switch of FIG. 14, each of the channels #1 to #m is provided with the West SRV, West PRT, East SRV, East PRT, Tributary 1, and Tributary 2. Between the 6m input ports 601 to 60m for channels #1 to #m and the 6m output ports 601 for channels #1 to #m, 1 × 2 optical splitters (with no reference numerals) connected in the same manner as in the fifth embodiment and an 8m × 6m optical matrix switch 607 are provided.

The optical matrix switch 607 has an 8m number of input terminals, a 6m number of output terminals, and a 2m number of Add terminals.

Specifically, 4m of the 6m input ports are connected to input terminals of the optical matrix switch 607 and the remaining 2m ones are connected to the 1 × 2 optical splitters. The split outputs of the 1 × 2 optical splitters are connected to the remaining input terminals of the optical matrix switch 607.

Furthermore, 4m output terminals of the optical matrix switch 607 are connected to the output ports. The remaining 2m output terminals are connected to the 1 × 2 optical splitters. One-side split ends of the optical splitters are connected to the remaining output ports of the optical matrix switch 607. The other-side split ends of the 1 × 2 optical splitters are connected to the Add ports of the optical matrix switch 607 in a one-to-one correspondence.

With such a configuration, the same connection relationship as in the fifth embodiment can be realized for each of channels #1 to #m. Since the connection setting of the signals for a plurality of channels is processed by the single optical matrix switch 607, the switching of signals between channels can be done.

Consequently, in the case of Through connection shown in FIG. 7, for example, the signal inputted to the West SRV of channel #1 can be outputted to the East SRV of channel #m.

As described above, with the fourth embodiment, it is possible to realize the connection setting which enables signals to be inputted or outputted between different channels. In the WDM transmission system, such connection setting is equivalent to wavelength conversion.

Furthermore, in the case of Add connection shown in FIG. 7, for example, the signal inputted to Tributary 1 of channel #1 can be outputted to the West SRV of channel #m. That is, any tributary signal of channels #1 to #m can be outputted to the output ports 104a to 104f of any channel. Therefore, with the fourth embodiment, it is possible to select the wavelength of the signal inputted to Tributary.

### (Fifth Embodiment)

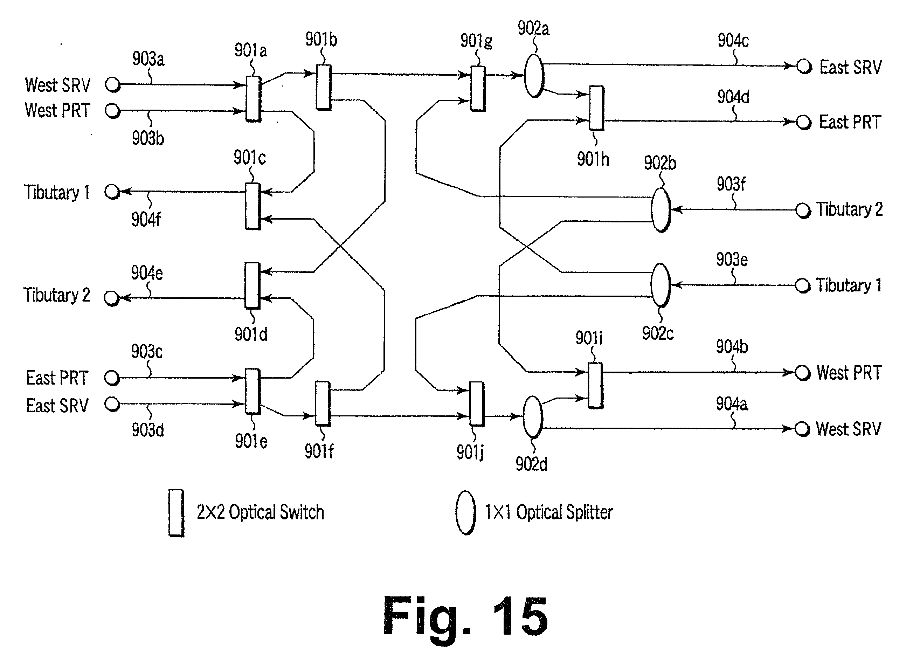

FIG. 15 is a diagram to help explain a optical switch section according to a fifth embodiment of the present invention. In FIG. 15, reference numerals 901a to 901j indicate 2 × 2 optical switches and 902a to 902d indicate 1 × 2 optical splitters. The signal inputted to the West SRV either passes through the optical switches 901a, 901b, 901d and is outputted to Tributary 1 or passes through the optical switches 901a, 901b, 901g and optical splitter 902a and is outputted at the East SRV.

The signal inputted to Tributary 1 can pass through optical splitter 902c, optical switch 901j, and optical splitter 902d and be outputted at the West SRV.

The signal inputted to the East SRV either passes through the optical switches 901e, 901f, 901c and is outputted to Tributary 2 or passes through the optical switches 901e, 901f, 901j and optical splitter 902d and is outputted at the West SRV.

The signal inputted to Tributary 2 can pass through optical splitter 902b, optical switch 901g, and optical splitter 902a and be outputted at the East SRV.

The optical switch 901a switches either the optical signal from input port 903a or the optical signal from input port 903b between its two output terminals. The optical switch 901b selectively outputs the optical signal from one output terminal of the optical switch 901a at any one of its two output terminals. The optical switch 901e switches either the optical signal from input port 903c or the optical signal from input port 903d between its two output terminals.

The optical switch 901f selectively outputs the optical signal from one output terminal of the optical switch 901e at any one of its two output terminals. The optical switch 901c selectively outputs either the optical signal from the other output terminal of the optical switch 901a or the optical signal from one output terminal of the optical switch 901f at output port 904f. The optical switch 901d selectively outputs either the optical signal from the other output terminal of the optical switch 901e or the optical signal from one output terminal of the optical switch 901b at output port 904e.

The optical splitter 902b splits the optical signal from the input port 903f and outputs them at its two output terminals. The optical splitter 902c splits the optical signal from the input port 903e and outputs them at its two output terminals.

The optical switch 901g selectively outputs either the optical signal from the other output terminal of the optical switch 901b or the optical signal from one output terminal of the optical splitter 902b. The optical switch 901j selectively outputs either the optical signal from the other output terminal of the optical switch 901f or the optical signal from one output terminal of the optical splitter 902c.

The optical splitter 902a splits the optical signal outputted from the optical switch 901g and outputs one split optical signal from its one output terminal to the output port 904c and the other split optical signal at its other output terminal. The optical switch 901h selectively outputs either the optical signal from the other output terminal of the optical splitter 902a or the optical signal from the other output terminal of the optical splitter 902c at the output port 904d.

The optical splitter 902d splits the optical signal outputted from the optical switch 901j and outputs one split optical signal from its one output terminal to the output port 904a and the other split optical signal at its other output terminal. The optical switch 901i selectively outputs either the optical signal from the other output terminal of the optical splitter 902d or the optical signal from the other output terminal of the optical splitter 902b at the output port 904b.

With such a configuration, it is possible to realize the setting of Add/Drop connection and Through connection (section (a) and section (d)) in the normal state shown in FIG. 4.

Furthermore, the signal outputted from the East SRV is split in half by the optical splitter 902a, which enables the signal to be outputted at the East PRT as well. Similarly, the signal outputted from the West SRV is split in half by the optical splitter 902d, which enables the signal to be outputted at the West PRT as well.

In addition, the signal inputted to Tributary 1 is split in half by the optical splitter 902c. This enables the same signal as the signal outputted to the West SRV to be outputted at the East PRT. Similarly, the signal inputted to Tributary 2 is split in half by the optical splitter 902b. This enables the input signal to Tributary 2 to be outputted at both the East SRV and West PRT. From these things, it is possible to realize the bridge function.

Moreover, either the input signal to the West SRV or the input signal to the West PRT can pass through the optical switches 901a, 901b, 901d and be outputted at Tributary 1. In addition, either the input signal to the East SRV or the input signal to the East PRT can pass through the switches 901e, 901d and be outputted at Tributary 1.

Similarly, either the input signal to the West SRV or the input signal to the West PRT can pass through the optical switches 901a, 901c and be outputted at Tributary 2. In addition, either the input signal to the East SRV or the input signal to the East PRT can pass through the switches 901e, 901f, 901c and be outputted at Tributary 2. From these things, it is possible to realize the switch function.

From these features, it is possible to realize the connection states shown in sections (b), (c), (e), and (f) of FIG. 4. Therefore, all the connection states shown in FIG. 4 can be realized.

### <Embodiments to help explain a line switch for Point-to-Multi-point connection>

Next, a optical switch section for Point-to-Multi-point connection will be explained. First, a Point-to-Multi-point connection path will be described.

In FIG. 6, pass B is added at Tributary 1 of node 4 and dropped at Tributary 2 of node 1 and Tributary 2 of node 2. Specifically, at Tributary 1 of node 4, path B is added to the West SRV. At node 1, path B is not only dropped to Tributary 2 but also outputted to the West SRV. Furthermore, node 2 receives path B from the East SRV and drops it at Tributary 2. As described above, there are a plurality of places to which path B is dropped for only one place to which path B is added. Such a path is called a Point-to-Multi-point connection path.

Like path B, path C in FIG. 6 is an example of a Point-to-Multi-point connection path. Path C, however, differs from path B in that path C is split at node 2 to which it is added and the resulting paths are outputted at both of the West SRV and East SRV.

Node 1 to node 4 constituting a network have to realize the path setting of various states as described above. Moreover, node 1 to node 4 are required to have the function of resetting the path using protection lines to prevent communication from being cut off even if a failure has occurred in the service line or nodes.

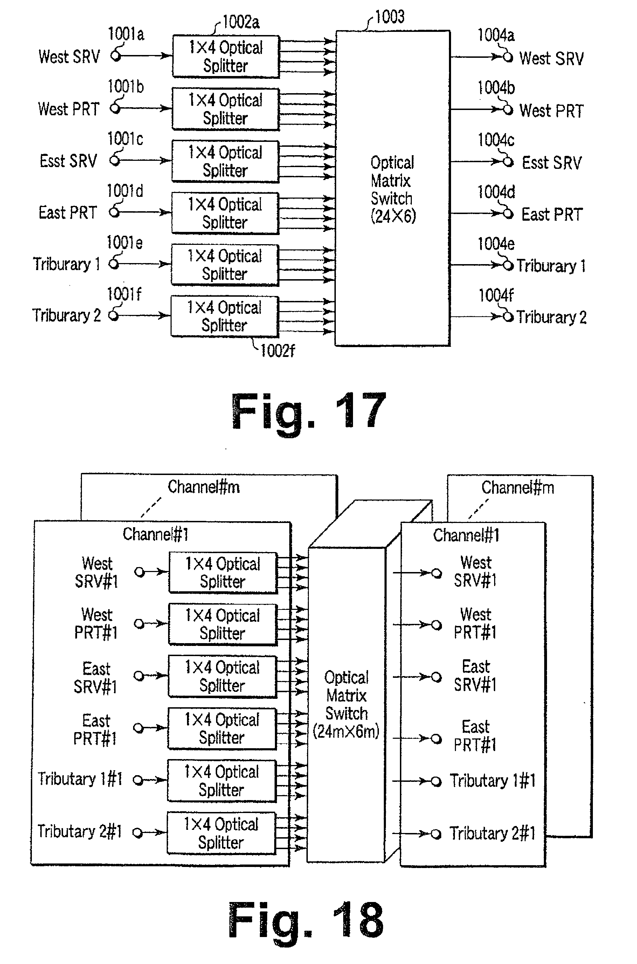

FIG. 18 shows the connection relationship between input and output signals at a node in each of the normal, span failure, and ring failure states, when a Point-to-Multi-point connection path exists on a network. When a Point-to-Multi-point connection path is set, the connection relationship shown in FIG. 6 may be set at each node, in addition to the connection relationship shown in FIG. 18.

As shown in section (a) of FIG. 18, the signal inputted to the West SRV is not only dropped to Tributary 1 in Drop & Continue node related to the Point-to-Multi-point connection path, but also split in the node and outputted at the East SRV. Similarly, the signal inputted to the East SRV is not only dropped to Tributary 2 but also outputted at the West SRV.

As shown in section (b) of FIG. 18, if a span failure has occurred in the West-SRV line in the normal state, span switching is effected. Specifically, the path is switched from the West-SRV line to the West-PRT line. Even after the span switching has been completed, the signal inputted to the East SRV still remains connected to the West SRV and is also bridged to the West PRT. The place to which the signal dropped to Tributary 1 is inputted is switched from the West SRV to West PRT.

As shown in section (c) of FIG. 18, if a ring failure has occurred in the West SRV line and the West PRT line in the normal state, ring switching is effected. The place to which the signal dropped at Tributary 1 is inputted is switched from the West SRV to East PRT.

Section (a) to section (c) in FIG. 18 show actions at nodes existing in the intermediate part of a Point-to-Multi-point connection path. At a node existing at the end part of the Point-to-Multi-point path, only the route of the signal to be dropped is changed.

Section (d) in FIG. 18 shows an example of the signal connection at a Dual Head node of a Point-to-Multi-point path. The node shown in section (d) splits in half the signal inputted to Tributary 1 and outputs them at both of the West SRV and East SRV.

As shown in section (e) in FIG. 18, if a span failure has occurred in the West SRV line in the normal state, span switching is effected. Even after the span switching has been completed, the signal externally inputted to Tributary 1 still remains connected to the West SRV and is also bridged with the West PRT.

As shown in section (f) in FIG. 18, if a ring failure has occurred in the West SRV line and West PRT transmission line in the normal state, ring switching is effected. Even after the ring switching has been completed, the signal externally inputted to Tributary 1 still remains connected to the West SRV and is also bridged with the East PRT.

Each of section (d) to section (f) in FIG. 18 show the starting point of a Point-to-Multi-point connection ,i.e., a node that transmits signals to both the West and East. This type of node may transmit a signal to only either the West or East. In this case, only the setting of the Add signal is effected at the transmission node. In switching at the time of the occurrence of a failure, only "bridge" related to the Add signal is done as in section (a) to section (c) of FIG. 7.

### (Third comparative example)

FIG. 17 is a block diagram showing the configuration of a optical switch section according to a third comparative example. In FIG. 17, reference numerals 1001a to 1001f indicate input ports, 1002a to 1002f indicate 1 × 4 optical splitters for splitting the input signal into four sub-signals, 1003 indicates an optical matrix switch, and 1004a to 1004f indicate output ports.

With the configuration of FIG. 17, the input signal is split into four sub-signals, which are then inputted to the optical matrix switch 1003. As a result, all the input signals can be outputted at a maximum of four output ports. This makes it possible to realize not only the connection settings shown in FIG. 7 but also all the connection settings in the normal state and failure state in FIG. 16.

FIGS. 7 and 16 show only the connection relationship in the normal state and failure state at a node in the Add/Drop connection state, Through connection state, Drop & Continue connection state, and Dual Homing connection state. The line switch of the tenth embodiment, however, also enables loop-back connection and in-node folding connection to be realized.

### (Fourth comparative example)

FIG. 18 is a block diagram showing the configuration of a optical switch section according to a fourth comparative example. The configuration of FIG. 18 is an expansion of the configuration of FIG. 17. In the comparative example, a line switch corresponding to a plurality of channels (#1 to #m) will be explained. In the figure, m means the number of multiplexed wavelengths, that is, the number of channels.

In the line switch of FIG. 18, each of the channels #1 to #m is provided with the West SRV, West PRT, East SRV, East PRT, Tributary 1, and Tributary 2. Each channel is provided with 1 × 4 optical splitters connected in the same manner as in the comparative example shown in figure 17. Each splitter is connected to a 24m × 6m optical matrix switch.

With such a configuration, the same connection relationship as in the comparative example shown in figure 17 can be realized for each channel. Furthermore, since the connection setting of signals for a plurality of channels is processed by the single optical matrix switch, this enables the switching of signals between channels to be effected. As a result, wavelength conversion and wavelength selection can also be made.

### (Sixth Embodiment)

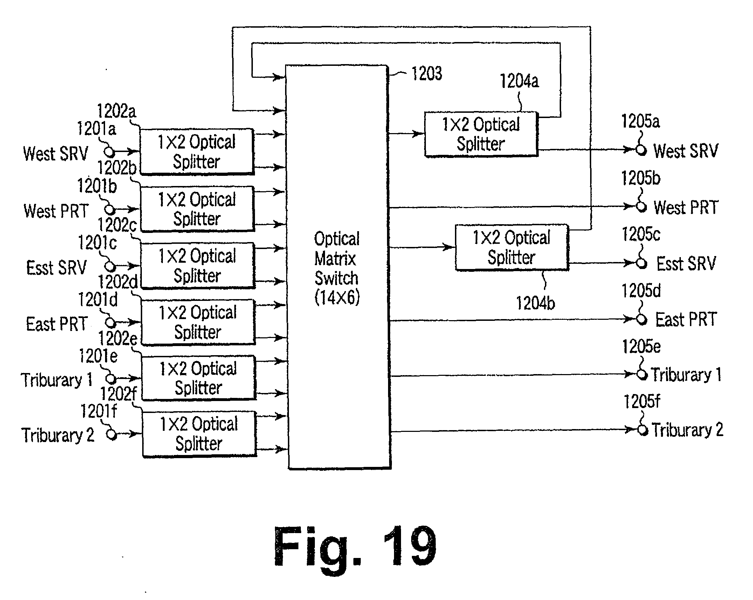

FIG. 19 is a block diagram showing the configuration of a optical switch section according to a sixth embodiment of the present invention. In FIG. 19, reference numerals 1201a to 1201f indicate input ports, 1202a to 1202f indicate 1 × 2 optical splitters for splitting the input signal in half and outputting the split signals, 1203 indicates a 14 × 6 optical matrix switch, 1204a and 1204b indicate 1 × 2 optical splitters, and 1204a to 1204e indicate output ports.

The 1 × 2 optical splitter 1204a is connected to any one of the output terminals of the optical matrix switch 1203 and splits in half the output signal from the output terminal. One split output signal is connected to a West SRV output port 1205a and the other split output signal is connected to an input terminal of the optical matrix switch 1203.

The 1 × 2 optical splitter 1204b is connected to any one of the output terminals of the optical matrix switch 1203 and splits in half the output signal from the output terminal. One split output signal is connected to an East SRV output port 1205c and the other split output signal is connected to an input terminal of the optical matrix switch 1203.

With the configuration of FIG. 19, each input signal is split in half and the split signals are inputted to the optical matrix switch 1203. Therefore, all the input signals can be connected to a maximum of two output ports. This makes it possible to realize not only the connection settings shown in FIG. 7 but also the connection setting in the normal state shown in FIG. 16.

Furthermore, the two split signals from the 1 × 2 optical splitter are not only outputted to the West SRV and East SRV but also inputted again to the optical matrix switch 1203. This enables the same signal outputted to the West SRV and East SRV to be outputted to the West PRT or East PRT. As a result, the bridge function can be realized.

In addition, the switch function is also realized by changing the connection setting of the optical matrix switch 1203. Therefore, all the connection settings in the failure state shown in FIGS. 7 and 16 can be realized. Moreover, with the sixth embodiment, loop-back connection and in-node folding connection can also be realized.

### (Seventh Embodiment)

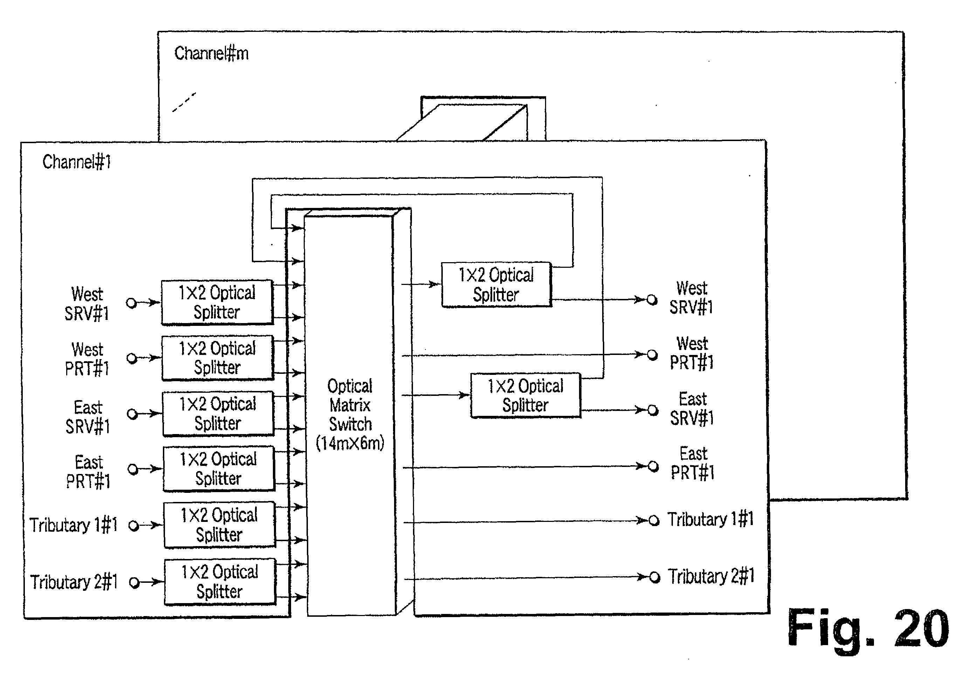

FIG. 20 is a block diagram showing the configuration of a optical switch section according to a seventh embodiment of the present invention. The configuration of FIG. 20 is an expansion of the configuration of FIG. 19. In the seventh embodiment, a line switch corresponding to a plurality of channels (#1 to #m) will be explained.

In the line switch of FIG. 20, each of the channels #1 to #m is provided with the West SRV, West PRT, East SRV, East PRT, Tributary 1, and Tributary 2. Between the m input ports of channels #1 to #m and the m output ports of channels #1 to #m, a 14m × 6m optical matrix switch and 1 × 2 optical splitter connected to the optical matrix switch as in the sixth embodiment are provided.

With such a configuration, not only can all the settings in the normal state and failure state be done as in the sixth embodiment, but wavelength conversion and wavelength selection can also be made.

### (Eighth Embodiment)

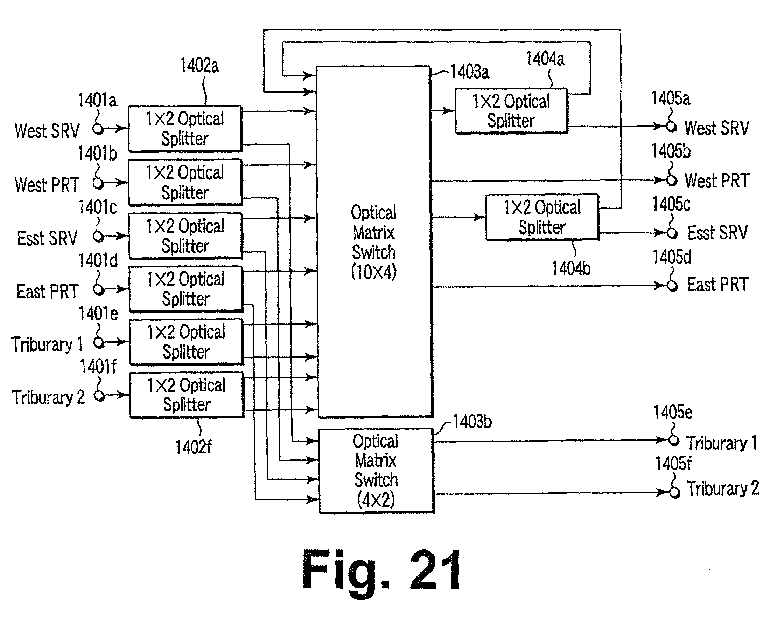

FIG. 21 is a block diagram showing the configuration of a optical switch section according to an eighth embodiment of the present invention. In FIG. 21, reference numerals 1401a to 1401f indicate input ports, 1402a to 1402f indicate 1 × 2 optical splitters for splitting the input signal in half and outputting the split signals, 1403a indicates a 10 × 4 optical matrix switch, 1403b indicates a 4 × 2 optical matrix switch, 1404a and 1404b indicate 1 × 2 optical splitters, and 1405a to 1405f indicate output ports.

The 1 × 2 optical splitter 1404a is connected to an output terminal of the optical matrix switch 1403a and splits the output signal in half. One split output signal is connected to a West SRV output port and the other split output signal is connected to an input terminal of the optical matrix switch 1403a.

The 1 × 2 optical splitter 1404b is connected to an output terminal of the optical matrix switch 1403a and splits the output signal in half. One split output signal is connected to an East-SRV output port and the other split output signal is connected to an input terminal of the optical matrix switch 1403a.

The configuration of the eighth embodiment is such that the optical matrix switch 1203 of FIG. 19 is divided into two optical matrix switches 1403a, 1403b. The split output signals from the 1 × 2 optical splitters 1402a to 1402d are inputted to the optical matrix switches 1403a and 1403b. The split output signals from the 1 × 2 optical splitters 1402e and 1402f are both inputted to the optical matrix switch 1403a.

One of the output terminals of the optical matrix switch 1403b is connected to an output port 1405e (Tributary 1) and the other is connected to an output port 1405f (Tributary 2).

Two of the output terminals of the optical matrix switch 1403a are connected to an output port 1405b (West PRT) and an output port 1405d (East PRT) in a one-to-one correspondence. The remaining two output terminals of the optical matrix switch 1403a are connected to the 1 × 2 optical splitters 1402a and 1402b in a one-to-one correspondence.

One of the split output signals of the 1 × 2 optical splitter 1402a is connected to the output port 1405a (West SRV). The other split output signal is inputted to the optical matrix switch 1403a.

One of the split output signals of the 1 × 2 optical splitter 1402b is connected to the output port 1405c (East SRV). The other split output signal is inputted to the optical matrix switch 1403a.

With the configuration of FIG. 21, one of the halved West and East SRV and PRT input signals passes through the optical matrix switch 1403b and is outputted to either Tributary 1 or Tributary 2. Thus, these four signals can be connected to the two Tributary output ports arbitrarily.

Furthermore, the other split signals of the West and East SRV and PRT input signals can pass through the optical matrix switch 1403a and be outputted to the West and East SRV and PRT output ports arbitrarily.

Therefore, the individual West and East SRV and PRT input signals can be outputted to Tributary and the West and East SRV and PRT arbitrarily.

Each input signal to Tributary is split and both of the split signals are inputted to the optical matrix switch 1403a. Thus, these signals can be connected to a maximum of two output ports of the West and East SRV and PRT. Consequently, the connection setting in the normal state shown in FIG. 16 can be realized in addition to the connection setting shown in FIG. 7.

Furthermore, the signals split by the 1 × 2 optical splitters 1404a, 1404b can be not only outputted to the West SRV and East SRV but also caused to pass through the optical matrix switch 1403a again and be outputted to the West PRT or East PRT. As a result, the bridge function can be realized.

In addition, by changing the connection setting state of the optical matrix switches 1403a, 1403b, the switch function can be realized. Thus, all the connection settings in the failure state shown in FIGS. 7 and 16 can be realized.

Moreover, use of the line switch of the eighth embodiment enables loop-back connection and in-node folding connection to be realized.

### (Ninth Embodiment)

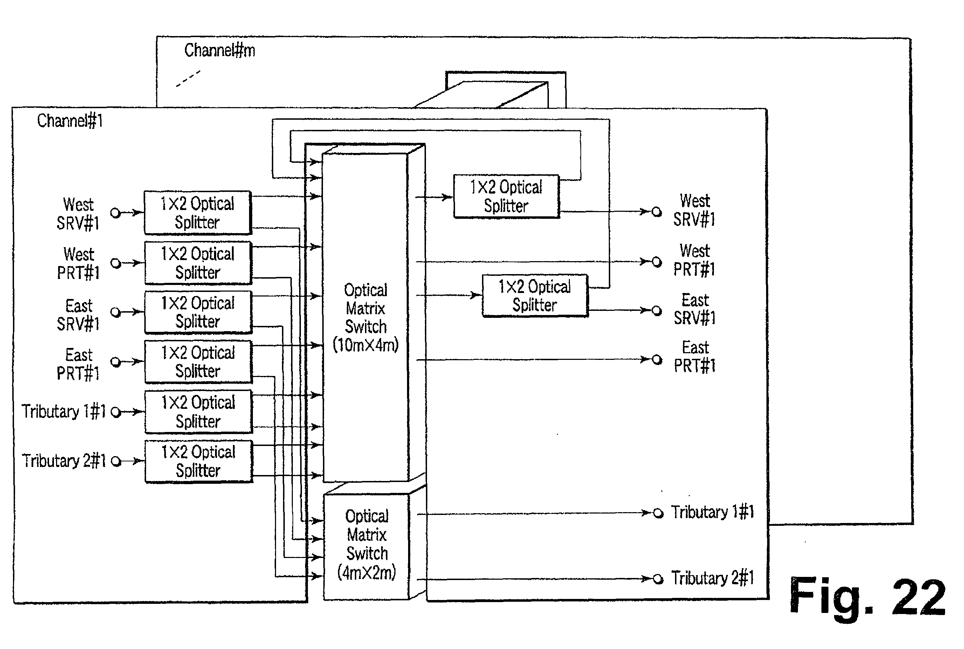

FIG. 22 is a block diagram showing the configuration of a optical switch section according to a ninth embodiment of the present invention. The configuration of FIG. 22 is an expansion of the configuration of FIG. 21. In the ninth embodiment, a line switch corresponding to a plurality of channels (#1 to #m) will be explained.

In the line switch of FIG. 22, each of the channels #1 to #m is provided with the West SRV, West PRT, East SRV, East PRT, Tributary 1, and Tributary 2. Each channel is provided with 1 × 2 optical splitters connected in the same manner as in the eighth embodiment. One optical matrix switch has a size of 10m × 6m and the other optical matrix switch has a size of 4m × 2m.

With such a configuration, not only can all the settings in the normal state and failure state shown in FIG. 7 be done as in the eighth embodiment, but wavelength conversion and wavelength selection can also be made.

### (Tenth Embodiment)

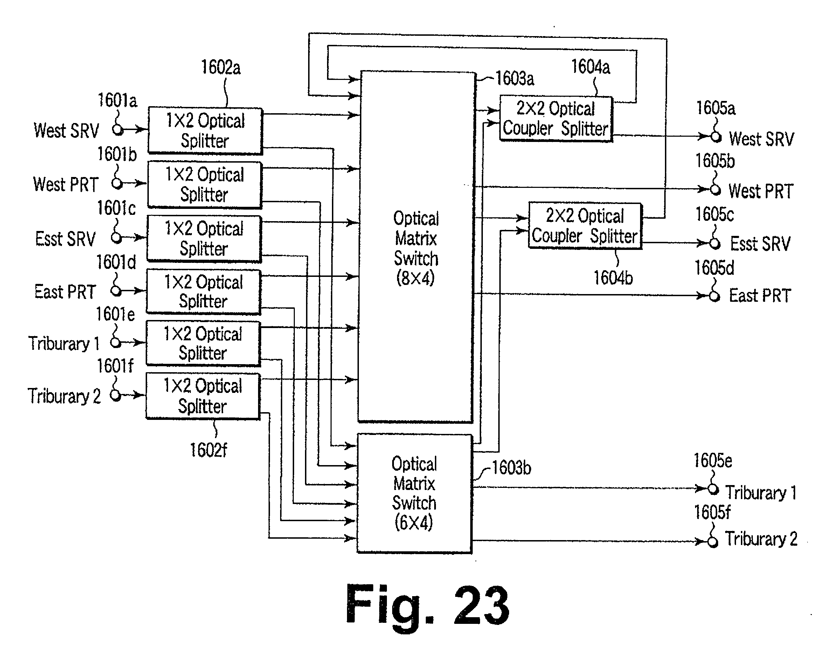

FIG. 23 is a block diagram showing the configuration of a optical switch section according to a tenth embodiment of the present invention. In FIG. 23, reference numerals 1601a to 1601f indicate input ports, 1602a to 1602f indicate 1 × 2 optical splitters for splitting the input signal in half and outputting the split signals, 1603a indicates an 8 × 4 optical matrix switch, 1603b indicates a 6 × 4 optical matrix switch, 1604a and 1604b indicate 2 × 2 optical coupler splitters, and 1605a to 1605f indicate output ports.

The 2 × 2 optical coupler splitter 1604a is connected to output terminals of the optical matrix switches 1603a, 1603b and splits the output signal of each matrix switch in half. One split output signal is connected to a West SRV output port and the other split output signal is connected again to an input terminal of the optical matrix switch 1603a.

The 2 × 2 optical coupler splitter 1604b is connected to output terminals of the optical matrix switches 1603a, 1603b and splits the output signal of each matrix switch in half. One split output signal is connected to an East SRV output port and the other split output signal is connected again to an input terminal of the optical matrix switch 1603a.

The configuration of the tenth embodiment is such that the optical matrix switch 1203 of FIG. 19 is divided into two optical matrix switches 1603a, 1603b. The split output signals from the 1 × 2 optical splitters 1602a to 1602f are inputted to the optical matrix switches 1603a and 1603b.

The output port 1605b (West PRT) and output port 1605d (East PRT) are connected to the optical matrix switch 1603a. The output port 1605e (Tributary 1) and output port 1605f (Tributary 2) are connected to the optical matrix switch 1603b.

With the configuration of FIG. 23, one of the two split input signals can pass through the optical matrix switch 1603b and be outputted to either Tributary 1 or Tributary 2. Thus, the six signals inputted to the optical matrix switch 1603b can be connected to the two Tributary output ports arbitrarily. In addition, the other one of the two split input signals can pass through the optical matrix switch 1603a and be connected to the West and East SRV and PRT output ports arbitrarily.

Therefore, the input signals to the West and East SRV and PRT can be outputted to the two Tributary ports and the West and East SRV and PRT output ports.

The individual input signals to the Tributary ports are split by the corresponding 1 × 2 optical splitters 1602e and 1602f and the resulting split signals are inputted to both of the optical matrix switches 1603a, 1603b. The split signals pass through the individual optical matrix switches and are combined at the 2 × 2 optical coupler splitters and the resulting signals are outputted to the West and East SRV ports. Thus, the input signals to Tributary can be connected to a maximum of two output ports for the West and East SRV and PRT. This makes it possible to realize the connection setting in the normal state shown in FIG. 16 in addition to the connection settings shown in FIG. 7.

Furthermore, the signals split by the two 1 × 2 optical splitters can not only be outputted to the West and East SRV but also pass through the optical matrix switch 1603a again and be outputted to either the West or East PRT. Thus, it is possible to realize the bridge function. In addition, the switch function can also be realized by changing the setting of the optical matrix switches 1603a, 1603b. Therefore, all the connection settings shown in FIGS. 7 and 16 can be realized.

Furthermore, the line switch of the tenth embodiment enables loop-back connection and in-node folding connection to be realized.

### (Eleventh Embodiment)

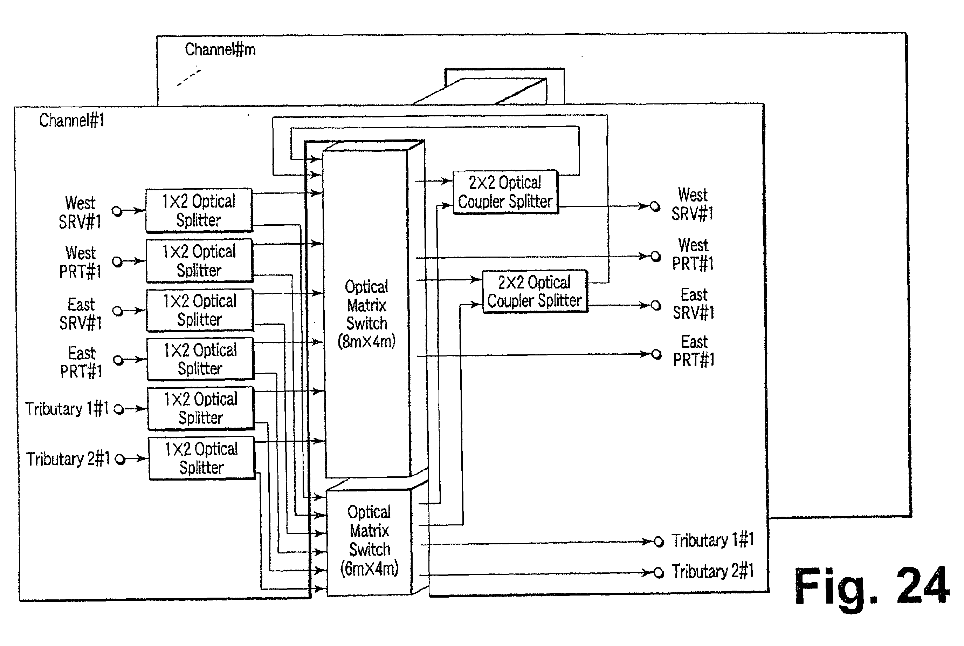

FIG. 24 is a block diagram showing the configuration of a optical switch section according to a eleventh embodiment of the present invention. The configuration of FIG. 24 is an expansion of the configuration of FIG. 23. In the eleventh embodiment, a line switch corresponding to a plurality of channels (#1 to #m) will be explained.

In the line switch of FIG. 24, each of the channels #1 to #m is provided with the West SRV, West PRT, East SRV, East PRT, Tributary 1, and Tributary 2. Each channel is provided with 1 × 2 optical splitters connected in the same manner as in the tenth embodiment. One optical matrix switch has a size of 8m × 4m and the other optical matrix switch has a size of 6m × 4m.

With such a configuration, not only can all the settings in the normal state and failure state shown in FIG. 7 be done as in the tenth embodiment, but wavelength conversion and wavelength selection can also be made.

### (Twelth Embodiment)

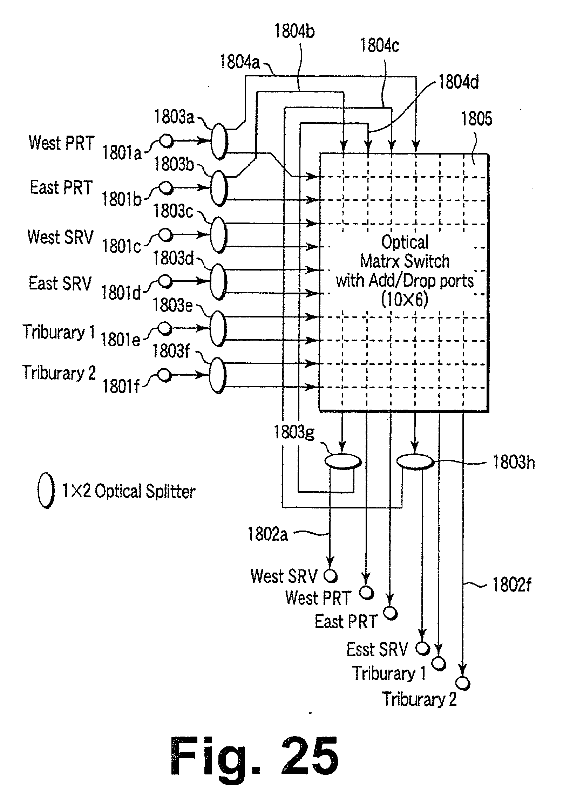

FIG. 25 is a block diagram showing the configuration of a optical switch section according to an twelth embodiment of the present invention. In FIG. 25, reference numerals 1801a to 1801f indicate input ports, 1803a to 1803f indicate 1 × 2 optical splitters for splitting the input signal in half and outputting the split signals, 1805 indicates an optical matrix switch with an Add/Drop ports, 1803g and 1803h indicate 1 × 2 optical splitters each of which splits in half the output of the optical matrix switch 1805 and connects one split signal to an Add port of the optical matrix switch 1805, and 1802a to 1802f indicate output ports.

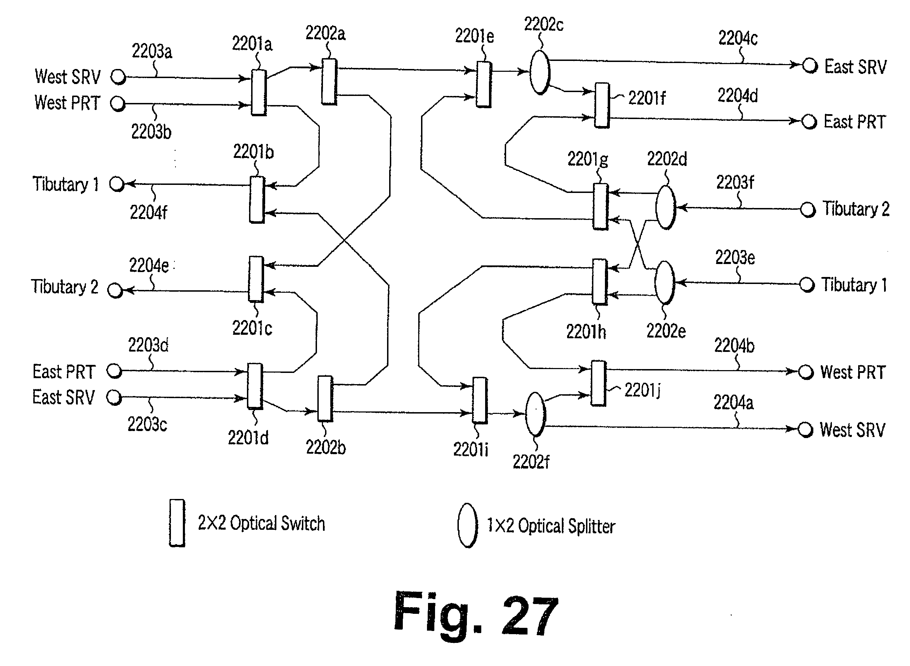

With the configuration of FIG. 27, each of the input signals from the West SRV, East SRV, Tributary 1, and Tributary 2 is split in half and the split signals are inputted to the optical matrix switch 1805. Each of the input signals from the West PRT and East PRT is split in half. One split input signal is connected to an input terminal of the optical matrix switch 1805 and the other split input signal is connected to an Add port of the optical matrix switch 1805.

The output signals from the optical matrix switch 1805 are split in half by the 1 × 2 optical splitters 1803g, 1803h. One split signal from each of the splitters 1803g, 1803h is connected to an Add port of the optical matrix switch 1805. As result, it is possible to output the same signal at the West SRV, West PRT, East SRV, and East PRT.

With the above configuration, the signals inputted to the West SRV, East SRV, Tributary 1, and Tributary 2 can be outputted to a maximum of four output ports of the West SRV, West PRT, East SRV, and East PRT.

Furthermore, the signal inputted to the West PRT can be outputted to a maximum of three output ports, including an arbitrary output port, East-SRV output port, and East-PRT output port. Similarly, the signal inputted to the East PRT can be outputted to a maximum of three output ports, including an arbitrary output port, West-SRV output port, and West-PRT output port. Therefore, it is possible to realize all the connection settings in the normal state and failure state shown in FIG. 18 in addition to the connection settings shown in FIG. 4.

Furthermore, the line switch of the eighteenth embodiment enables loop-back connection and in-node folding connection to be realized.

### (Nineteenth Embodiment)

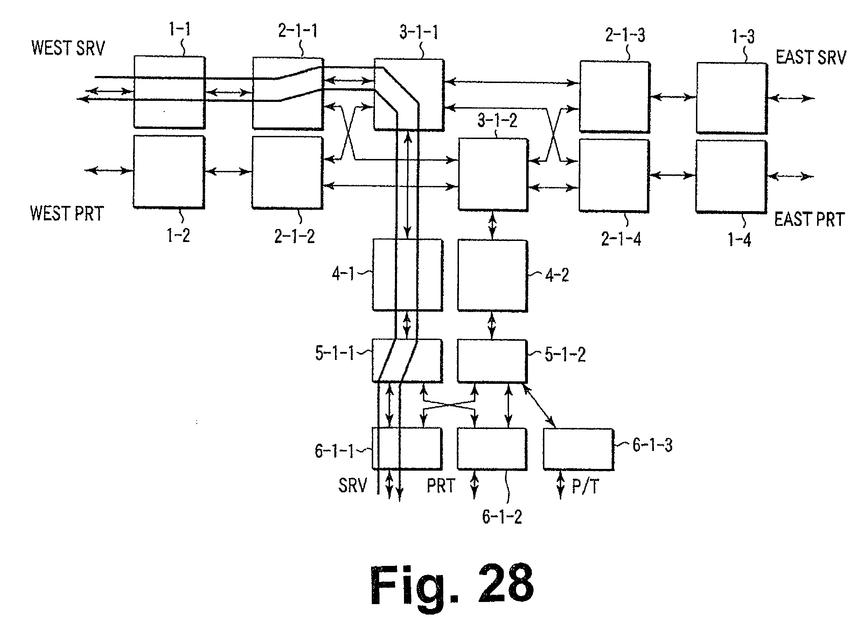

FIG. 28 is a block diagram showing the configuration of a optical switch section according to a nineteenth embodiment of the present invention. The configuration of FIG. 28 is an expansion of the configuration of FIG. 27. In the nineteenth embodiment, a line switch corresponding to a plurality of channels (#1 to #m) will be explained.

In the line switch of FIG. 28, each of the channels #1 to #m is provided with the West SRV, West PRT, East SRV, East PRT, Tributary 1, and Tributary 2. In FIG. 28, reference numeral 1901 indicates an input port group corresponding to channel #1. The input port group 1901 is provided with the West SRV, West PRT, East SRV, East PRT, Tributary 1, and Tributary 2 input ports. Similarly, reference numeral 1902 indicates an input port group corresponding to channel #m. The other channels are also provided with a plurality of input ports as described above.

Reference numeral 1903 indicates an output port group corresponding to channel #1. The output port group 1903 is provided with the West SRV, West PRT, East SRV, East PRT, Tributary 1, and Tributary 2 output ports. Similarly, reference numeral 1904 indicates an output port group corresponding to channel #m. The other channels are also provided with a plurality of output ports as described above.

Reference numeral 1905 indicates a 10m × 6m optical matrix switch. The optical matrix switch 1905 includes an m × m number of 10 × 6 optical matrix switches. Each 10 × 6 optical matrix switch has the same configuration as that of FIG. 27 and includes an Add port and Drop port.

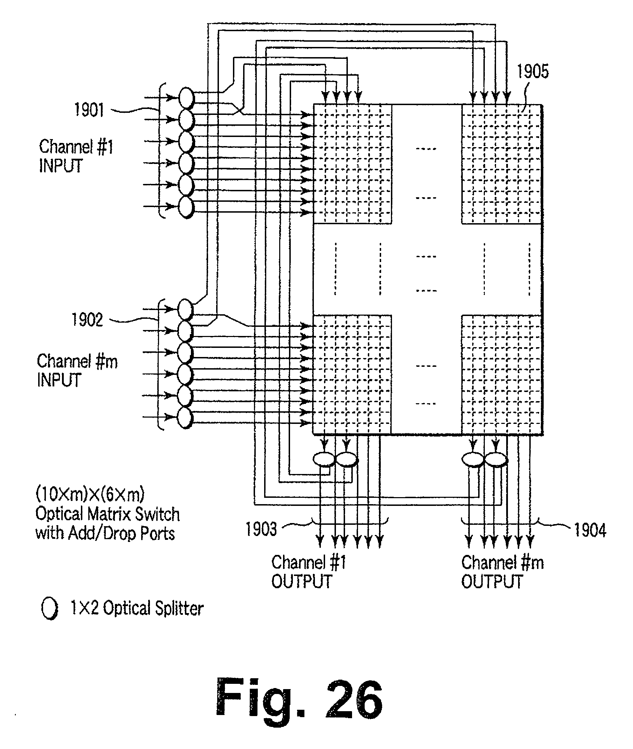

In FIG. 26, a 1 × 2 optical splitter is provided for each channel. The connection relationship between the input ports, output ports, 10 × 6 optical matrix switches, and 1 × 2 optical splitters is the same as in the twelfth embodiment.

With such a configuration, the same connection relationship as in the twelfth embodiment can be realized for each channel. Since the connection setting of the signals for a plurality of channels is processed by the single optical matrix switch 1905, the switching of signals between channels can be done. That is, wavelength conversion can be realized.

Furthermore, in the case of Add connection shown in FIG. 7, for example, the signal inputted to Tributary 1 of channel #1 can be outputted to the West SRV of channel #m. That is, any Tributary of channel #1 to channel #m can be outputted to the output port of any channel. Therefore, the input signal from Tributary can be subjected to wavelength selection.

### (Fourteenth Embodiment)

FIG. 27 is a block diagram showing the configuration of a optical switch section according to a fourteenth embodiment of the present invention. In FIG. 27,reference numerals 2202a to 2202f indicate 1 × 2 optical splitters, 2201a to 2201j indicate 2 × 2 optical switches, 2203a to 2203f indicate input ports, and 2204a to 2204f indicate output ports.

The signal inputted to the West SRV either passes through the optical switch 2201a, optical splitter 2202a, and optical switch 2201c and is outputted to Tributary 1 or passes the optical switch 2201a, optical splitter 2202a, optical switch 2201e, and optical splitter 2202c and is outputted to the East SRV.

The signal inputted to Tributary 1 can pass through the optical splitter 2202e, optical switches 2201h, 2201i, and optical splitter 2202f and be outputted to the West SRV. The signal inputted to the East SRV either passes through the optical switch 2201d, optical splitter 2202b, and optical switch 2201b and is outputted to Tributary 2 or passes the optical switch 2201d, optical splitter 2202b, optical switch 2201i, and optical splitter 2202f and is outputted to the West SRV. The signal inputted to Tributary 2 can pass through the optical splitter 2202d, optical switches 2201g, 2201e, and optical splitter 2202c and be outputted to the East SRV.

The optical switch 2201a switches the optical signals from the input port 2203a and the input port 2203b between its two output terminals. The optical splitter 2202a splits the optical signal from one output terminal of the optical switch 2201a and outputs the split signals at its two output terminals. The optical switch 2201d switches the optical signals from the input port 2203c and the input port 2203d between its two output terminals.

The optical splitter 2202b splits the optical signal from one output terminal of the optical switch 2201d and outputs the split signals at its two output terminals. The optical switch 2201b selectively outputs either the optical signal from the other output terminal of the optical switch 2201a or the optical signal from one output terminal of the optical splitter 2202b to the output port 2204f. The optical switch 2201c selectively outputs either the optical signal from the other output terminal of the optical switch 2201d or the optical signal from one output terminal of the optical splitter 2202a to the output port 2204e.

The optical splitter 2202d splits the optical signal from the input port 2203f and outputs the split signals at its two output terminals. The optical splitter 2202e splits the optical signal from the input port 2203e and outputs the split signals at its two output terminals. The optical switch 2201g switches the optical signals from one output terminal of the optical splitter 2202d and one output terminal of the optical splitter 2202e between its two output terminals.

The optical switch 2201h switches the optical signals from the other output terminal of the optical splitter 2202d and the other output terminal of the optical splitter 2202e between its two output terminals. The optical switch 2201e selectively outputs either the optical signal from the other output terminal of the optical splitter 2202a or the optical signal from one output terminal of the optical switch 2201g. The optical splitter 2202c splits the optical signal outputted from the optical switch 2201e and outputs one split optical signal from one of its output terminals to the output port 2204c and the other split optical signal from its other output terminal.

The optical switch 2201f selectively outputs either the optical signal from the other output terminal of the optical splitter 2202c or the optical signal from the other output terminal of the optical switch 2201g to the output port 2204d. The optical switch 2201i selectively outputs either the optical signal from the other output terminal of the optical splitter 2202b or the optical signal from one output terminal of the optical switch 2201h. The optical splitter 2202f splits the optical signal outputted from the optical switch 2201i and outputs one split optical signal from one of its output terminals to the output port 2204a and the other split optical signal at its other output terminal. The optical switch 2201j selectively outputs either the optical signal from the other output terminal of the optical splitter 2202f or the optical signal from the other output terminal of the optical switch 2201h to the output port 2204b.

With this configuration, it is possible to realize the settings for Add/Drop connection and Through connection in the normal state shown in FIG. 4.

Furthermore, the signal outputted from the East SRV can be split in half by the optical splitter 2202c and be outputted at the East PRT. Similarly, the signal outputted from the West SRV can be split in half by the optical splitter 2202f and be outputted at the West PRT. In addition, the signals inputted to Tributary 1 and Tributary 2 are split in half by the optical splitters 2202e and 2202d, respectively. One split signal passes through the optical switches 2201h and 2201i and is further split in half by the optical splitter 2202f. Alternatively, one split signal passes through the optical switches 2201g and 2201e and is further split in half by the optical splitter 2202c.

Therefore, the same signal can be outputted to a maximum of four ports, that is, the West SRV, West, PRT, East SRV, and East PRT. This makes it possible to realize the bridge function.

Furthermore, with the above configuration, either the signal inputted to the West SRV or the signal inputted to the West PRT can be selectively outputted at Tributary 1 or Tributary 2. Similarly, either the signal inputted to the East SRV or the signal inputted to the East PRT can be selectively outputted at Tributary 1 or Tributary 2. This enables the switch function to be realized.

Those features make it possible to realize not only the connection setting in the failure state shown in FIG. 7 but also all the Point-to-Multi-point connection settings shown in FIG. 16.

### <Embodiment to help explain an optical transmission apparatus which includes a redundancy system and a cross-connect switch and is applied to a 4-fiber system>

### (Fifteenth Embodiment)

Next, an embodiment of an optical transmission apparatus according to the present invention will be explained. The optical transmission apparatus explained below is provided with the optical switches described in any one of the first to fourteenth embodiments.

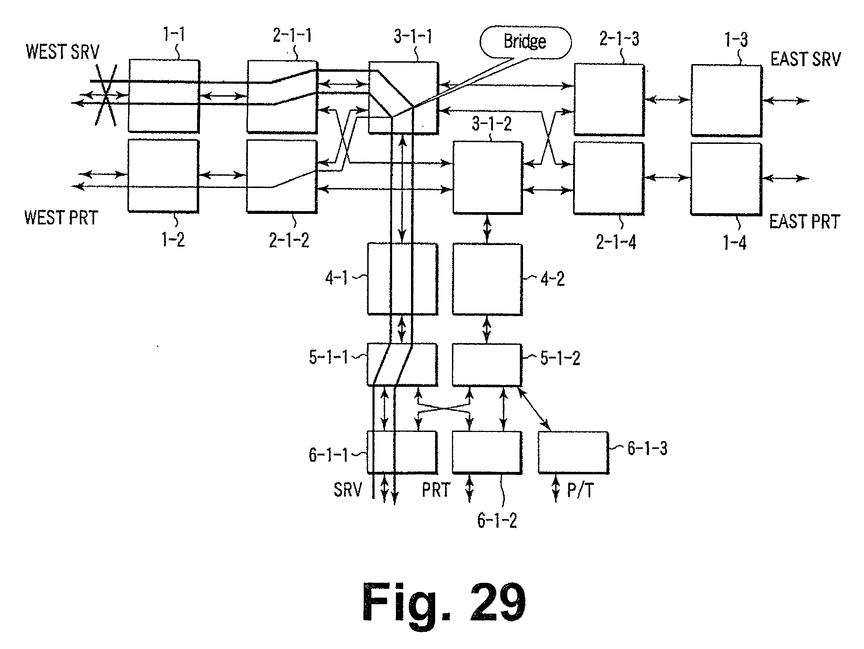

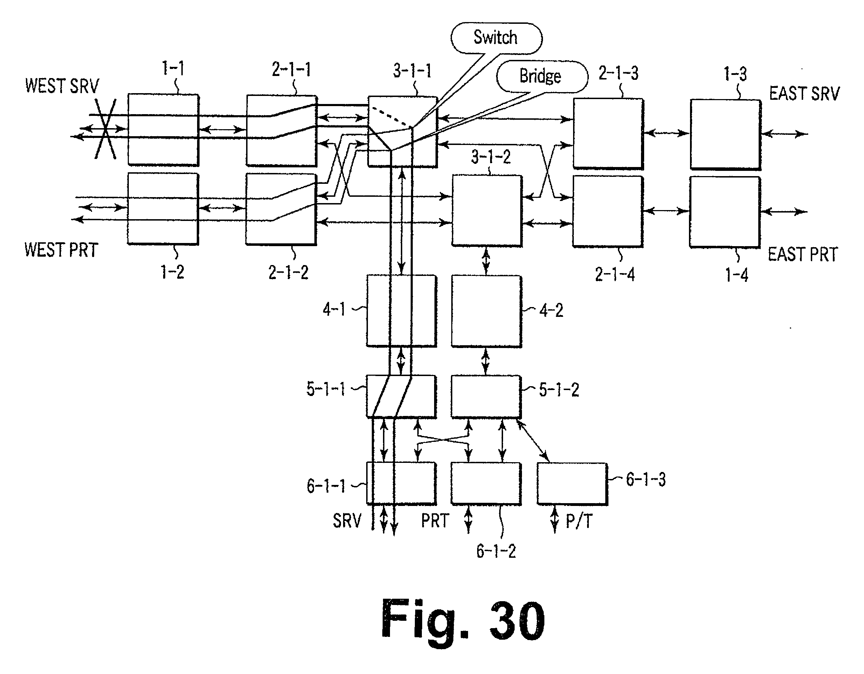

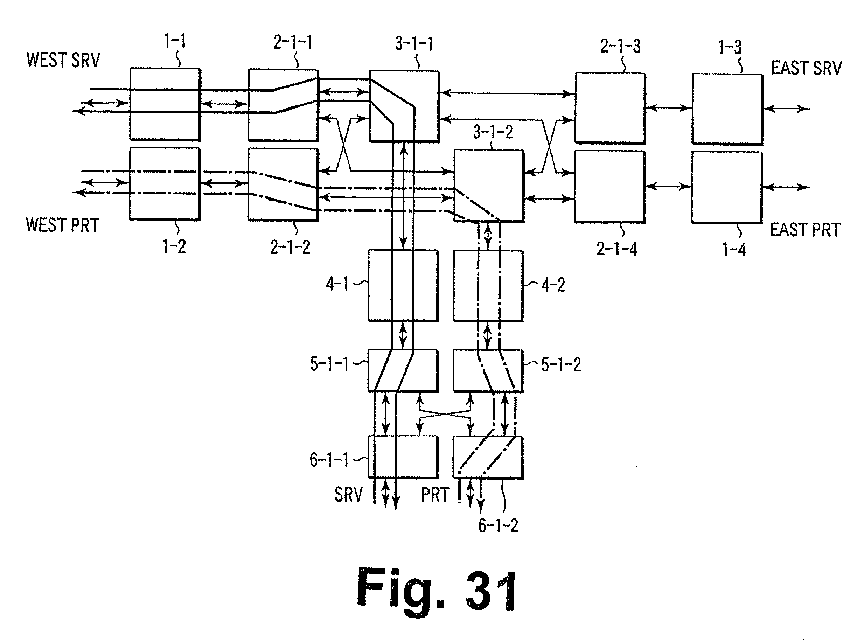

First, protection switching effected in the optical transmission apparatus of FIG. 5 will be described by reference to FIGS. 28 to 37. In FIGS. 28 to 37, the configuration of only the part related to one wavelength is shown for convenience's sake. Specifically, in the figures, let the number of multiplexed wavelengths on the line side (that is, the higher order side) be 1 and the number of channels on the Tributary side (that is, the lower order side) be 1.

The optical transmission apparatus of the fifteenth embodiment includes a redundancy system capable of being switched and an optical cross-connect section for assigning wavelengths between the line side and the Tributary side and is used in a 4-fiber transmission system.

FIG. 28 shows the flow of traffic in the normal state in a case where the optical transmission apparatus of FIG. 5 holds service traffic in the form of Add/Drop in the WEST direction. In the explanation below, it is assumed that the flow of a signal from the Tributary side to the line side is in the Add direction and the flow of a signal from the line side to the Tributary side is in the Drop direction.

### [Add direction]

After the service traffic held in the tributary interface section (SRV) 6-1-1 is subjected to a signal form converting process, a signal monitoring process, or a terminating process as needed, it is split and the split signals are outputted to the tributary switch section (SRV) 5-1-1 and the tributary switch section (PRT) 5-1-2. When the tributary interface side is normal, the tributary switch section (SRV) 5-1-1 selects the signal from the tributary interface section (SRV) 6-1-1 and outputs it to the optical cross-connect section (SRV) 4-1.

The optical cross-connect section (SRV) 4-1 connects the Add-direction service traffic selected at the tributary switch section (SRV) 5-1-1 to a wavelength channel according to the connection setting and outputs the traffic to the line switch section (SRV) 3-1-1. The line switch section (SRV) 3-1-1 outputs the Add-direction service traffic from the optical cross-connect section (SRV) 4-1 to the line interface section (WEST SRV) 2-1-1.

When all the line switch section (SRV) 3-1-1, optical cross-connect section (SRV) 4-1, and tributary switch section (SRV) 5-1-1 are normal, the line interface section (West SRV) 2-1-1 selects the output from the line switch section (SRV) 3-1-1. If a failure has been sensed in any one of the function blocks, the output from the line switch section (PRT) 3-1-2 is selected. Then, after a line overhead signal is inserted into the selected output signal as needed, the resulting signal is outputted to the wavelength-division multiplexing and demultiplexing section (West SRV) 1-1.

The wavelength-division multiplexing and demultiplexing section (West SRV) 1-1 wavelength-multiplexes the signal from the line interface section (West SRV) 2-1-1 with the signal from the line interface section (West SRV) for another wavelength and outputs the resulting signal to the service line SL (WEST SRV).

### [Drop Direction]

The wavelength-division multiplex signal held in the wavelength-division multiplexing and demultiplexing section (West SRV) 1-1 is subjected to wavelength demultiplexing and the resulting signal is outputted to the line interface section (West SRV) 2-1-1. The line interface section (West SRV) 2-1-1 splits the inputted signal and outputs the split signals to the line switch section (SRV) 3-1-1 and the line switch section (PRT) 3-1-2.

The line switch section (SRV) 3-1-1, in the normal state, selects the signal from the line interface section (West SRV) 2-1-1 and outputs the selected signal as service traffic in the Drop direction to the optical cross-connect section (SRV) 4-1.

The optical cross-connect section (SRV) 4-1 connects the Drop-direction service traffic from the line switch section (SRV) 3-1-1 to a tributary channel according to the connection setting and outputs the traffic to the tributary switch section (SRV) 5-1-1.

The tributary switch section (SRV) 5-1-1 splits the Drop-direction service traffic from the optical cross-connect section (SRV) 4-1 and outputs the split signals to the tributary interface section (SRV) 6-1-1 and tributary interface section (PRT) 6-1-2.

When all the line switch section (SRV) 3-1-1, optical cross-connect section (SRV) 4-1, and tributary switch section (SRV) 5-1-1 are normal, the tributary interface section (SRV) 6-1-1 selects the output from the tributary switch section (SRV) 5-1-1. If a failure has been sensed in any of the function blocks, the output from the tributary switch (PRT) 5-1-2 is selected. Then, a tributary overhead signal is inserted into the selected signal and the resulting signal is outputted as a tributary signal.

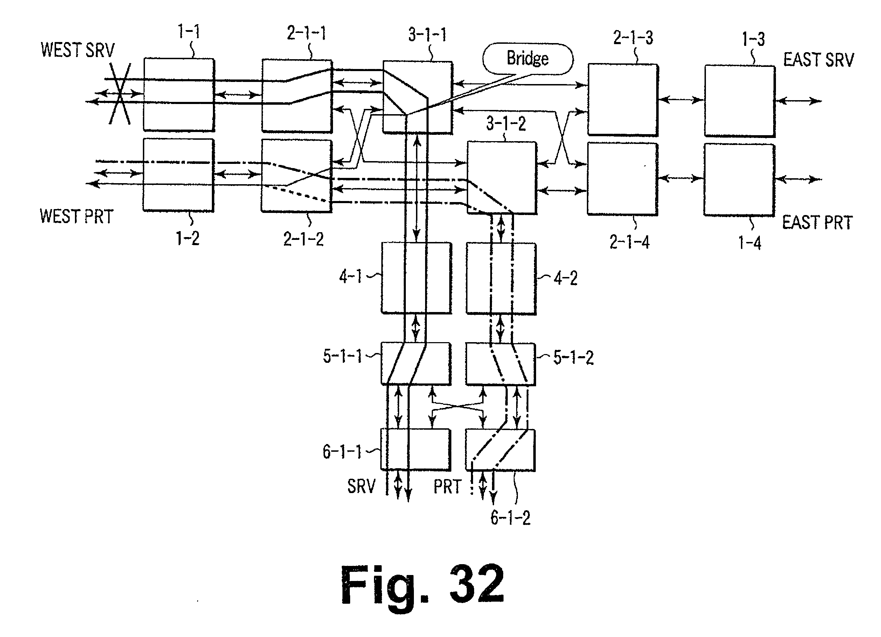

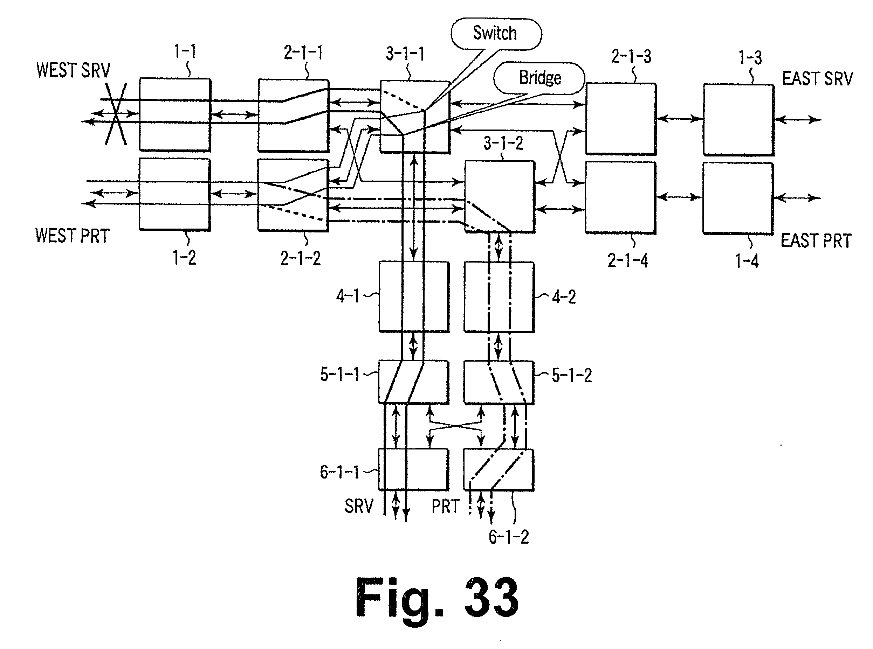

An intermediate stage of protection switching when a failure has occurred in the service line SL (WEST SRV) of FIG. 32 will be explained by reference to FIG. 33.

### [Add Direction]

Only the part where the flow of service traffic differs from the state shown in FIG. 32 will be explained. The line switch section (SRV) 3-1-1 splits the Add-direction service traffic from the optical cross-connect section (SRV) 4-1 and outputs the split signals to the line interface section (WEST SRV) 2-1-1 and line interface section' (WEST PRT) 2-1-2.

The operation of the line interface section (West SRV) 2-1-1 and wavelength-division multiplexing and demultiplexing section (West SRV) 1-1 is the same as in the normal state.

The line interface section (WEST PRT) 2-1-2 selects the output signal from the line switch section (SRV) 3-1-1, inserts a line overhead signal to the selected signal as needed, and outputs the resulting signal to the wavelength-division multiplexing and demultiplexing section (WEST SRV) 1-1.

The wavelength-division multiplexing and demultiplexing section (WEST PRT) 1-2 wavelength-multiplexes the signal from the line interface section (WEST PRT) 2-1-2 with the signal from the line interface section (WEST PRT) for another wavelength, and outputs the resulting signal to the protection line PL (WEST PRT).

The line switch section (SRV) 3-1-1 bridges the optical signal given via the optical cross-connect section (SRV) 4-1. This enables a node (not shown) facing the WEST side to receive service traffic via the protection line. Therefore, before switching is done to the protection line, not only can the normality of the received signal be checked, but the instantaneous cutoff time in switching can also be minimized.

### [Drop Direction]

In this state, the flow of service traffic is the same as in FIG. 32.

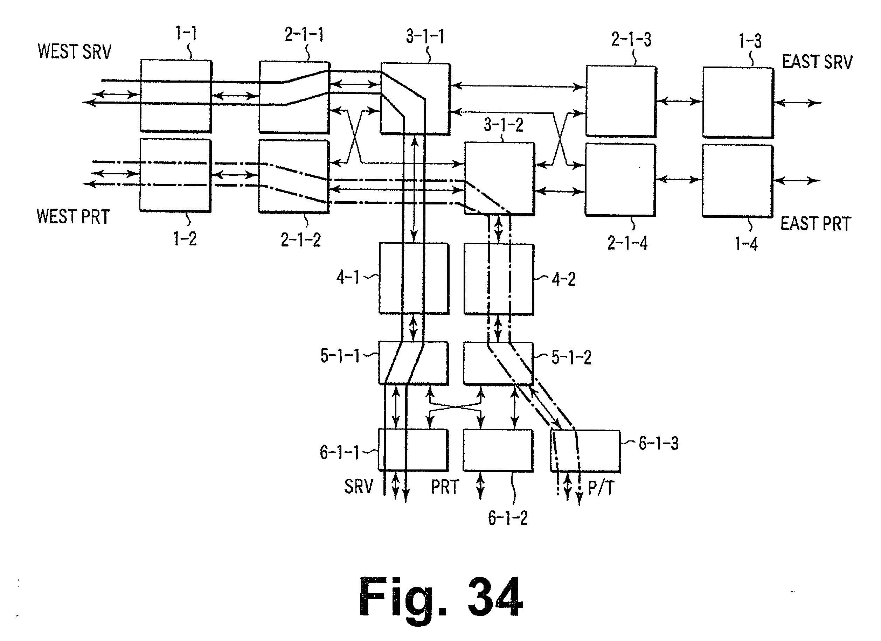

FIG. 34 shows the state of traffic at the final stage of protection switching following FIG. 33 when a failure has occurred in the service line SL (WEST SRV).

### [Add Direction]

The flow of service traffic in the Add direction is the same as in FIG. 33.

### [Drop Direction]

Only the part where the flow of service traffic differs from the state of FIG. 32 will be explained. The operation of the wavelength-division multiplexing and demultiplexing section (West SRV) 1-1 and line interface section (West SRV) 2-1-1 is the same as in the normal state.

The wavelength-division multiplex signal held in the wavelength-division multiplexing and demultiplexing section (WEST PRT) 1-2 is wavelength-demultiplexed and the resulting signal is outputted to the line interface section (WEST PRT) 2-1-2. The line interface section (WEST PRT) 2-1-2 splits the received signal and outputs the split signals to the line switch section (SRV) 3-1-1 and line switch section (PRT) 3-1-2.

Because there is a failure in the service line SL (WEST SRV), the line switch section (SRV) 3-1-1 selects the signal from the line interface section (WEST PRT) 2-1-2 and outputs the selected signal as Drop-direction service traffic to the optical cross-connect section (SRV) 4-1. The processes from this point on are the same as in the normal state.

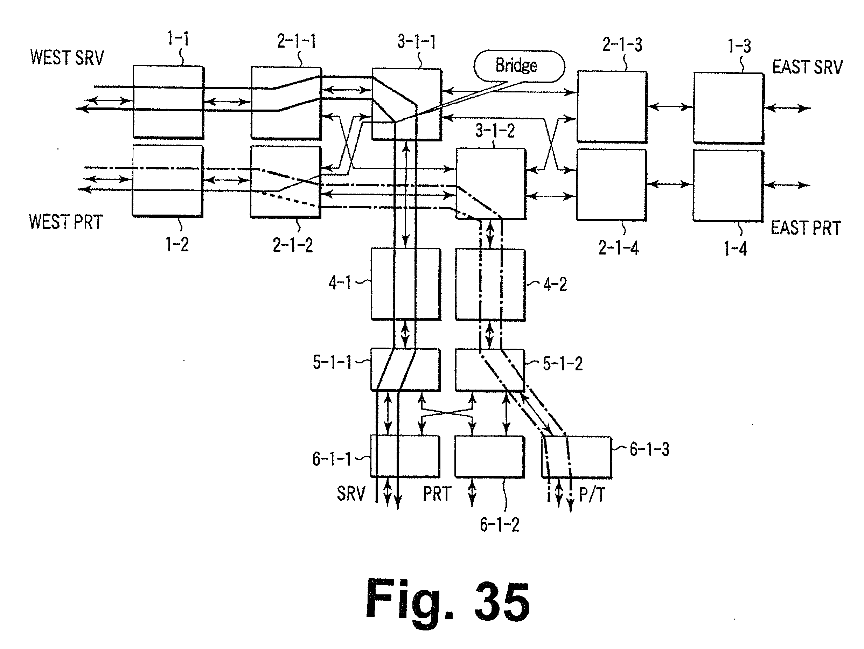

An example of setting another traffic is shown in FIG. 35. FIG. 35 shows the flow of traffic in the normal state when service traffic is held in Add/Drop form in the WEST direction and part-time traffic is held in Add/Drop form in the WEST direction.

In FIG. 35, the flow of service traffic is the same as in FIG. 32, where the protection system for the node is not used. In this case, part-time traffic can be held via the protection system. Hereinafter, the flow of part-time traffic will be explained.

### [Add Direction]

The part-time traffic held in the tributary interface section (PRT) 6-1-2 is subjected to a signal form converting process, a signal monitoring process, or a terminating process as needed, and the resulting signal is outputted to the tributary switch section (PRT) 5-1-2.

When the tributary interface section (SRV) 6-1-1 is normal, the tributary switch section (PRT) 5-1-2 selects the signal from the tributary interface section (PRT) 6-1-2 and outputs the selected signal to the optical cross-connect section (PRT) 4-2.

The optical cross-connect section (PRT) 4-2 connects the Add-direction part-time traffic selected at the tributary switch section (PRT) 5-1-2 to a wavelength channel according to the connection setting and outputs the traffic to the line switch section (PRT) 3-1-2.

The line switch section (PRT) 3-1-2 outputs the Add-direction part-time traffic from the optical cross-connect section (PRT) 4-2 to the line interface section (WEST PRT) 2-1-2.

The line interface section (WEST PRT) 2-1-2, in the normal state, selects the signal from the line switch section (PRT) 3-1-2, inserts a line overhead signal into the selected signal, and outputs the resulting signal to the wavelength-division multiplexing and demultiplexing section (WEST PRT) 1-2.

The wavelength-division multiplexing and demultiplexing section (WEST PRT) 1-2 wavelength-multiplexes the signal from the line interface section (WEST PRT) 2-1-2 with the signal from the line interface section (WEST PRT) for another wavelength and outputs the resulting signal to the protection line PL (WEST PRT).

### [Drop Direction]

The wavelength-division multiplex signal held in the wavelength-division multiplexing and demultiplexing section (WEST PRT) 1-2 is wavelength-demultiplexed and the resulting signal is outputted to the line interface section (WEST PRT) 2-1-2. The line interface section (WEST PRT) 2-1-2 splits the received signal and outputs the split signals to the line switch section (SRV) 3-1-1 and line switch section (PRT) 3-1-2.

When the line switch section (SRV) 3-1-1, optical cross-connect section (SRV) 4-1, and tributary switch section (SRV) 5-1-1 are normal, the line switch section (PRT) 3-1-2 selects the signal from the line interface section (WEST PRT) 2-1-2 and outputs the selected signal as Drop-direction part-time traffic to the optical cross-connect section (PRT) 4-2.

The optical cross-connect section (PRT) 4-2 connects the Drop-direction part-time traffic from the line switch section (PRT) 3-1-2 to a tributary channel according to the connecting setting and outputs the traffic to the tributary switch section (PRT) 5-1-2.

The tributary switch section (PRT) 5-1-2 splits the Drop-direction part-time traffic from the optical cross-connect section (PRT) 4-2 and outputs the split signals to the tributary interface section (SRV) 6-1-1 and tributary interface section (PRT) 6-1-2.

When the line switch section (SRV) 3-1-1, optical cross-connect section (SRV) 4-1, and tributary switch section (SRV) 5-1-1 are normal, the tributary interface section (PRT) 6-1-2 selects the output signal from the tributary switch section (PRT) 5-1-2, inserts a tributary overhead signal into the selected signal as needed, and outputs the resulting signal to the tributary line protection system.

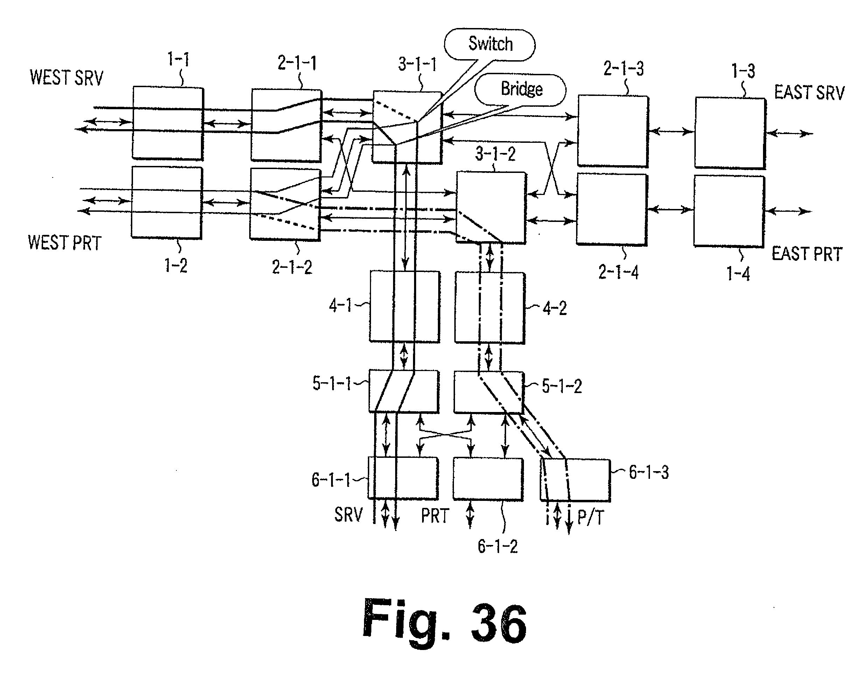

FIG. 36 shows the flow of traffic at an intermediate stage of protection switching when a failure has occurred in the service line SL (WEST SRV) in the state shown in FIG. 35. The flow of service traffic is the same as in FIG. 33. Hereinafter, only the part where the flow of part-time traffic differs from the state shown in FIG. 35 will be explained.

### [Add Direction]

As a result of a failure in the service line SL (WEST SRV), the line interface section (WEST PRT) 2-1-2 selects the signal from the line switch section (SRV) 3-1-1 to bridge service traffic to the protection line PL (WEST PRT). Then, the line interface section (WEST PRT) 2-1-2 inserts a line overhead signal into the selected signal as needed and outputs the service traffic to the wavelength-division multiplexing and demultiplexing section (WEST PRT) 1-2.

The wavelength-division multiplexing and demultiplexing section (WEST PRT) 1-2 wavelength-multiplexes the signal from the line interface section (WEST PRT) 2-1-2 with the signal from the line interface section (WEST PRT) for another wavelength and outputs the resulting signal to the protection line PL (WEST PRT).

At this stage, the part-time traffic being transmitted via the protection line PL (WEST PRT) is cut off.

### [Drop Direction]

In this state, the flow of part-time traffic is the same as in FIG. 35.

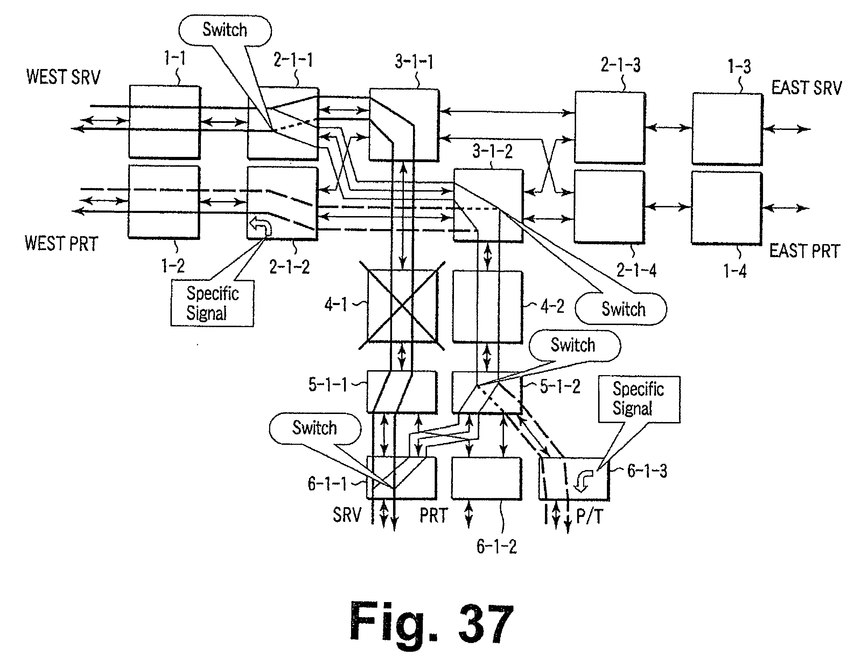

FIG. 37 shows the flow of traffic at the final stage of protection switching when a failure has occurred in the service line SL (WEST SRV) in the state shown in FIG. 35. The flow of service traffic is the same as in FIG. 34. Hereinafter, only the part where the flow of part-time traffic differs from the state shown in FIG. 36 will be explained.

### [Add Direction]

The flow of part-time traffic in the Add direction is the same as in FIG. 36.

### [Drop Direction]

Since at a node (not shown) facing the WEST side, service traffic has been bridged to the protection line at the stage shown in FIG. 36, part-time traffic cannot be received via the protection line PL (West PRT).

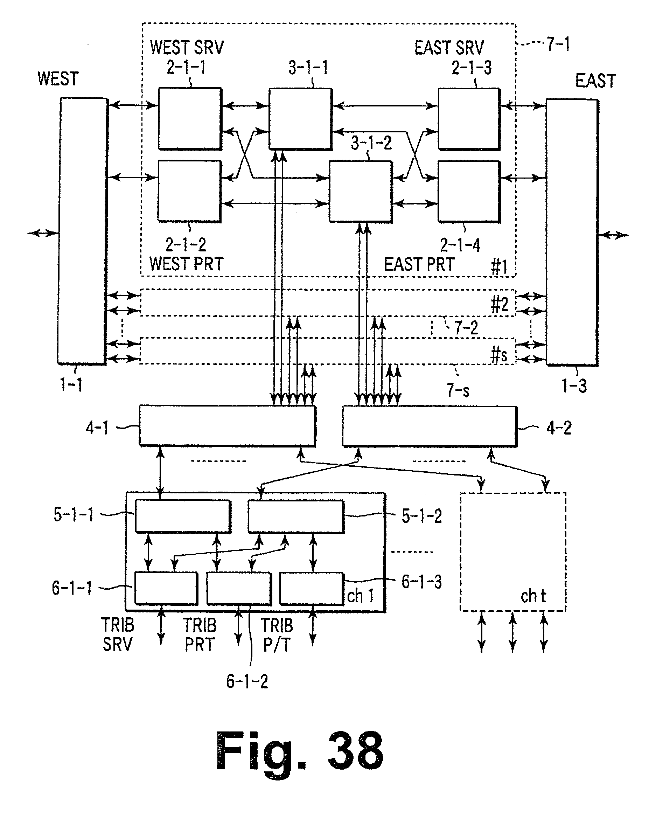

FIG. 38 shows the flow of traffic in the normal state when service traffic is held in Add/Drop form in the WEST direction and part-time traffic is held in Add/Drop form in the WEST direction.

In FIG. 38, the flow of service traffic is the same as in FIG. 32, where the protection system for the node is not used. In this case, part-time traffic can be held via the protection system. Hereinafter, the flow of part-time traffic will be explained.

### [Add Direction]

The part-time traffic held in the tributary interface section (P/T) 6-1-3 is subjected to a signal form converting process, a signal monitoring process, or a terminating process as needed, and the resulting signal is outputted to the tributary switch section (PRT) 5-1-2.

When the tributary interface section (SRV) is normal, the tributary switch section (PRT) 5-1-2 selects the signal from the tributary interface section (P/T) 6-1-3 and outputs the selected signal to the optical cross-connect section (PRT) 4-2.

The optical cross-connect section (PRT) 4-2 connects the Add-direction part-time traffic selected at the tributary switch section (PRT) 5-1-2 to a wavelength channel according to the connection setting and outputs the traffic to the line switch section (PRT) 3-1-2.

The line switch section (PRT) 3-1-2 outputs the Add-direction part-time traffic from the optical cross-connect section (PRT) 4-2 to the line interface section (WEST PRT) 2-1-2.

The line interface section (WEST PRT) 2-1-2, in the normal state, selects the signal from the line switch section (PRT) 3-1-2, inserts a line overhead signal into the selected signal, and outputs the resulting signal to the wavelength-division multiplexing and demultiplexing section (WEST PRT) 1-2.

The wavelength-division multiplexing and demultiplexing section (WEST PRT) 1-2 wavelength-multiplexes the signal from the line interface section (WEST PRT) 2-1-2 with the signal from the line interface section (WEST PRT) for another wavelength and outputs the resulting signal to the protection line PL (WEST PRT).

### [Drop Direction]

The wavelength-division multiplex signal held in the wavelength-division multiplexing and demultiplexing section (WEST PRT) 1-2 is wavelength-demultiplexed and the resulting signal is outputted to the line interface section (WEST PRT) 2-1-2.

The line interface section (WEST PRT) 2-1-2 splits the inputted signal and outputs the split signals to the line switch section (SRV) 3-1-1 and line switch section (PRT) 3-1-2.

When the line switch section (SRV) 3-1-1, optical cross-connect section (SRV) 4-1, and tributary switch section (SRV) 5-1-1 are normal, the line switch section (PRT) 3-1-2 selects the signal from the line interface section (WEST PRT) 2-1-2 and outputs the selected signal as Drop-direction part-time traffic to the optical cross-connect section (PRT) 4-2.

The optical cross-connect section (PRT) 4-2 connects the Drop-direction part-time traffic from the line switch section (PRT) 3-1-2 to a tributary channel according to the connecting setting and outputs the traffic to the tributary switch section (PRT) 5-1-2.

The tributary switch section (PRT) 5-1-2 outputs the Drop-direction part-time traffic from the optical cross-connect section (PRT) 4-2 to the tributary interface section (P/T) 6-1-3.

When the line switch section (SRV) 3-1-1, optical cross-connect section (SRV) 4-1, and tributary switch section (SRV) 5-1-1 are normal, the tributary interface section (P/T) 6-1-3 selects the output signal from the tributary switch section (PRT) 5-1-2, inserts a tributary overhead signal into the selected signal as needed, and outputs the resulting signal to the tributary, line (P/T).

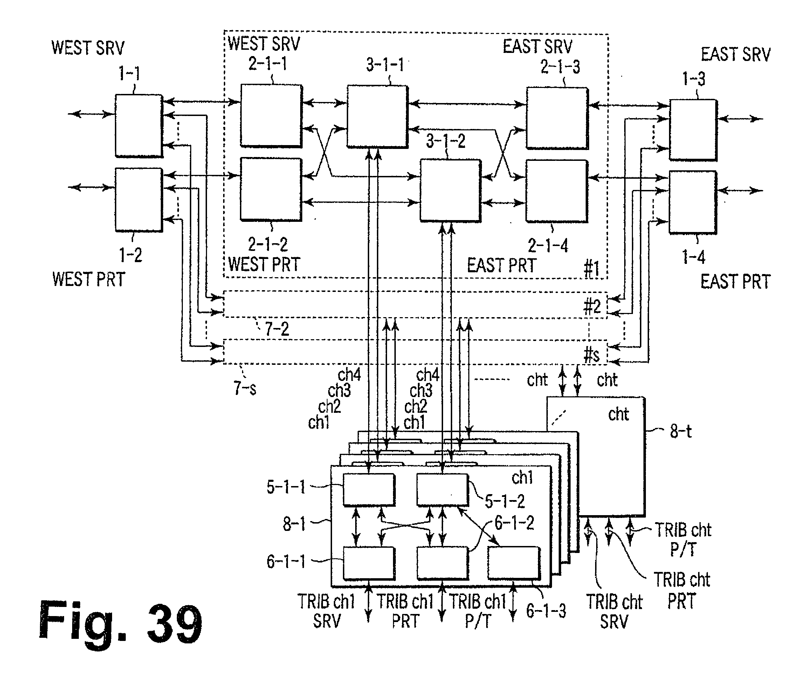

FIG. 39 shows the flow of traffic at an intermediate stage of protection switching when a failure has occurred in the service line SL (WEST SRV) in the state shown in FIG. 38. The flow of service traffic is the same as in FIG. 33. Hereinafter, only the part where the flow of part-time traffic differs from the state shown in FIG. 38 will be explained.

### [Add Direction]

As a result of a failure in the service line SL (WEST SRV), the line interface section (WEST PRT) 2-1-2 selects the signal from the line switch section (SRV) 3-1-1 to bridge service traffic to the protection line PL (WEST PRT). Then, the line interface section (WEST PRT) 2-1-2 inserts a line overhead signal into the selected signal as needed and outputs the service traffic to the wavelength-division multiplexing and demultiplexing section (WEST PRT) 1-2.

The wavelength-division multiplexing and demultiplexing section (WEST PRT) 1-2 wavelength-multiplexes the signal from the line interface section (WEST PRT) 2-1-2 with the signal from the line interface section (WEST PRT) for another wavelength and outputs the resulting signal to the protection line PL (WEST PRT).

At this stage, the part-time traffic being transmitted via the protection line PL (WEST PRT) is cut off.

### [Drop Direction]

In this state, the flow of part-time traffic is the same as in FIG. 38.

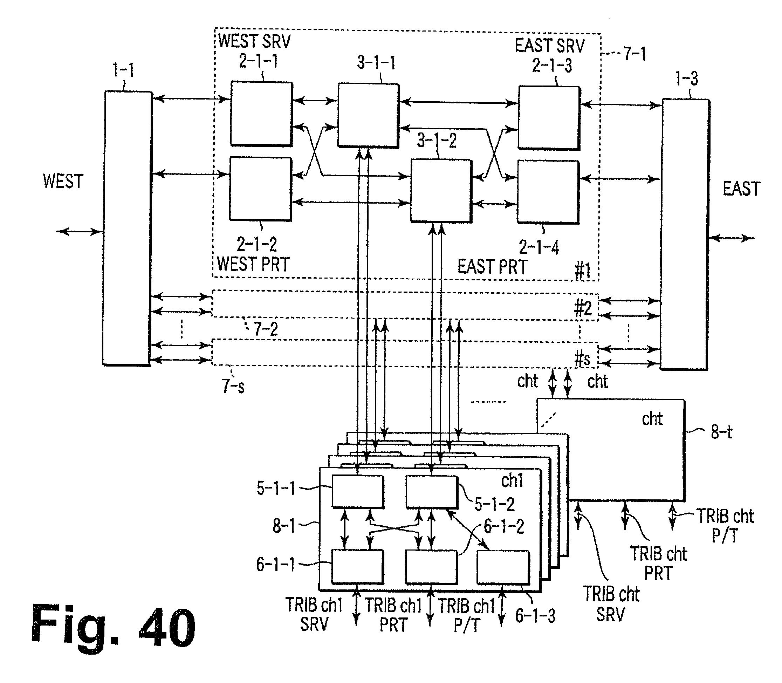

FIG. 40 shows the flow of traffic at the final stage of protection switching when a failure has occurred in the service line SL (WEST SRV) in the state shown in FIG. 38. The flow of service traffic is the same as in FIG. 34. Hereinafter, only the part where the flow of part-time traffic differs from the state shown in FIG. 39 will be explained.

### [Add Direction]

The flow of part-time traffic in the Add direction is the same as in FIG. 39.

### [Drop Direction]

Since at a node (not shown) facing the WEST side, service traffic has been bridged to the protection line at the stage shown in FIG. 39, part-time traffic cannot be received via the protection line PL (West PRT).

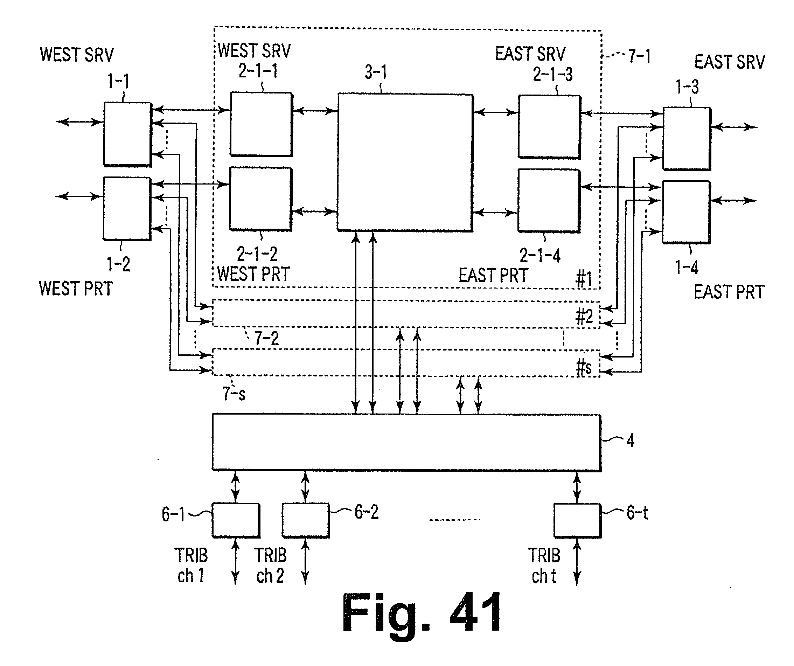

FIG. 41 shows the flow of traffic when a node holds service traffic in Add/Drop form in the WEST direction and the node holds part-time traffic in Add/Drop form in the WEST direction and when a failure has occurred in the optical cross-connect section (SRV) 4-1 using a redundancy configuration in the node and therefore the service traffic has been switched to the protection-system function block side.

FIG. 41 also shows a specific signal inserting function for preventing the misconnection between service traffic and part-time traffic during protection switching.

The specific signal inserting function can be applied to not only a case where a failure has occurred in a function block using a redundancy configuration in the node explained later but also a case where part-time traffic is held as shown in FIGS. 36, 37, 39, and 40 and service traffic is processed by a protection-system function block.

A signal obtaining by collapsing the information in the payload of a transmission frame, such as P-AIS (Path Alarm Indication Signal) or UNEQ (Unequipped) in a conventional SDH transmission system, may be used as the specific signal.

### [Add Direction]

In FIG. 41, after the service traffic held in the tributary interface section (SRV) 6-1-1 is subjected to a signal form converting process, a signal monitoring process, or a terminating process as needed, the resulting traffic is split and the split signals are outputted to the tributary switch section (SRV) 5-1-1 and tributary switch section (PRT) 5-1-2.

The operations of the tributary switch section (SRV) 5-1-1, optical cross-connect section (SRV) 4-1, and line switch section (SRV) 3-1-1 are the same as those before protection switching (see FIG. 32).

When the tributary interface side is normal, the tributary switch section (PRT) 5-1-2 selects the signal from the tributary interface section (SRV) 6-1-1 and outputs the selected signal to the optical cross-connect section (PRT) 4-2.

The optical cross-connect section (PRT) 4-2 connects the Add-direction service traffic selected at the tributary switch section (PRT) 5-1-2 to a wavelength channel according to the connection setting and outputs the traffic to the line switch section (PRT) 3-1-2.

The line switch section (PRT) 3-1-2 outputs the Add-direction service traffic from the optical cross-connect section (PRT) 4-2 to the line interface section (WEST SRV) 2-1-2.

Because a failure has been sensed in the optical cross-connect section (SRV) 4-1, the line interface section (West SRV) 2-1-1 selects the signal from the line switch section (PRT) 3-1-2, inserts a line overhead signal into the selected signal, and outputs the resulting signal to the wavelength-division multiplexing and demultiplexing section (West SRV) 1-1.

The wavelength-division multiplexing and demultiplexing section (West SRV) 1-1 wavelength-multiplexes the signal from the line interface section (West SRV) 2-1-1 with the signal from the line interface section (West SRV) for another wavelength and outputs the resulting signal to the service line SL (WEST SRV).

Because the line switch section (PRT) 3-1-2, optical cross-connect section (PRT) 4-2, and tributary switch section (PRT) 5-1-2 are used as a detour circuit for service traffic due to a failure in the optical cross-connect section (SRV) 4-1, part-time traffic cannot be transmitted.

At this time, the line interface section (WEST PRT) 2-1-2 inserts a specific signal into the protection line, thereby preventing service traffic from flowing into the protection line PL (WEST PRT). The time that the specific signal is inserted is before protection switching is started and the time that the insertion of the specific signal is stopped is after the completion of revertive switching.

Inserting the specific signal prevents the misconnection between service traffic and part-time traffic in the Add direction.

### [Drop Direction]

The wavelength-division multiplex signal held in the wavelength-division multiplexing and demultiplexing section (West SRV) 1-1 is wavelength-demultiplexed and the resulting signal is outputted to the line interface section (West SRV) 2-1-1.

The line interface section (West SRV) 2-1-1 subjects the inputted signal to a terminating process as needed, splits the resulting signal, and outputs the split signals to the line switch section (SRV) 3-1-1 and line switch section (PRT) 3-1-2.

The operations of the line switch section (SRV) 3-1-1, optical cross-connect section (SRV) 4-1, and tributary switch section (SRV) 5-1-1 are the same as those before protection switching (see FIG. 32).

Because a failure has occurred in the optical cross-connect section (SRV) 4-1, the line switch section (SRV) 3-1-2 selects the signal from the line interface section (West SRV) 2-1-1 and outputs the selected signal as the Drop-direction service traffic to the optical cross-connect section (PRT) 4-2.

The optical cross-connect section (PRT) 4-2 connects the Drop-direction service traffic from the line switch section (SRV) 3-1-1 to a tributary channel according to the connection setting and outputs the traffic to the tributary switch section (PRT) 5-1-2.

The tributary switch section (PRT) 5-1-2 splits the Drop-direction service traffic from the optical cross-connect section (PRT) 4-2 and outputs the split signals to the tributary interface section (SRV) 6-1-1 and tributary interface section (PRT) 6-1-2.

Because a failure has been sensed in the optical cross-connect section (SRV) 4-1, the tributary interface section (SRV) 6-1-1 selects the signal from the tributary switch section (PRT) 5-1-2, inserts a tributary overhead signal into the selected signal as needed, and outputs the tributary signal.

Because the line switch section (PRT) 3-2, optical cross-connect section (PRT) 4-2, and tributary switch section (PRT) 5-1-2 are used as a detour circuit for service traffic due to a failure in the optical cross-connect section (SRV) 4-1, part-time traffic cannot be transmitted.

At this time, the tributary interface section (P/T) 6-1-3 inserts a specific signal, thereby preventing service traffic from flowing into the tributary part-time line.

The time that the specific signal is inserted is before protection switching is started and the time that the insertion of the specific signal is stopped is after the completion of revertive switching. This prevents the misconnection between service traffic and part-time traffic in the Drop direction.

### <Embodiment to help explain an optical transmission apparatus which includes a redundancy system and a cross-connect switch and is applied to a 2-fiber system>

### (Sixteenth Embodiment)

Next, another embodiment of an optical transmission apparatus according to the present invention will be explained. The optical transmission apparatus of the sixteenth embodiment includes a switchable redundancy system and an optical cross-connect section for assigning wavelengths between the line side and the tributary side and is used in a 2-fiber transmission system.

FIG. 38 is a block diagram showing another configuration of an optical transmission apparatus according to the present invention. The optical transmission apparatus comprises wavelength-division multiplexing and demultiplexing sections (WEST: 1-1, EAST: 1-3), line redundancy units 7-1 to 7-s, tributary interface sections (ch 1 SRV: 6-1-1, ch 1 PRT: 6-1-2, ch 1 P/T use: 6-1-3), tributary switch sections (ch 1 SRV: 5-1-1, ch 1 PRT: 5-1-2, ... (holding the tributaries for t channels)), and optical cross-connect sections (SRV: 4-1, PRT: 4-2).

The wavelength-division multiplexing and demultiplexing sections 1-1, 1-3 carry out a wavelength-division multiplexing/demultiplexing process of a wavelength-division multiplex signal whose degree of multiplexing is S (S is a natural number). The tributary interface sections 6-1-1, 6-1-2, 6-1-3 interface with the tributary side. The tributary switch sections 5-1-1 and 5-1-2 effects protection switching on the tributary side. The optical cross-connect sections 4-1, 4-2 connect the channels on the tributary interface side arbitrarily with the line switch sections provided for the respective wavelengths.

The line redundancy units 7-1 to 7-s each include line interface sections (WEST SRV: 2-1-1, WEST PRT: 2-1-2, EAST SRV:2-1-3, EAST PRT:2-1-4) for interfacing with the line side using specific wavelengths and line switch sections (SRV: 3-1-1, PRT: 3-2-2).

Here, the line switch sections (SRV) 3-1-1, 3-2-2 take the configuration of any one of the first to fifteenth embodiments. Therefore, the optical transmission apparatus of the sixteenth embodiment can not only make an Add/Drop/Through connection of the signal of each wavelength from the line interface section but also bridge the signal.

The basic operation of the optical transmission apparatus shown in FIG. 38 will be explained. Here, only the operation when a tributary signal is added or dropped to a line on the WEST side will be described.

### [Add Direction]

In FIG. 38, after the service traffic held in the tributary interface sections (SRV) 6-1-1 and 6-1-2 is subjected to a signal form converting process, a signal monitoring process, and a terminating process as needed, the traffic is split and the split signals are outputted to the tributary switch section (SRV) 5-1-1 and tributary switch section (PRT) 5-1-2. When the tributary interface side is normal, the tributary switch section (SRV) 5-1-1 selects the signal from the tributary interface section (SRV) 6-1-1 and outputs the selected signal to the optical cross-connect section (SRV) 4-1. The optical cross-connect section (SRV) 4-1 connects the signal selected at the tributary switch section (SRV) 5-1-1 to the line redundancy unit 7-1 according to the connection setting.

The line switch section (SRV) 3-1-1 connects the service traffic to the line interface section (SRV) 2-1-1 according to the connection setting. The line interface section (SRV) 2-1-1 converts the signal form of the inputted signal as needed and outputs the converted signal as a signal of a specific wavelength.

The wavelength-division multiplexing and demultiplexing section 1-1 wavelength-multiplexes the signal inputted from the line interface section (SRV) 2-1-1 with the signal from the line interface section for another wavelength and outputs the resulting signal to the transmission line.

In this state, the redundancy function part and the line-side protection wavelength are in the unused state. Therefore, an unused protection-system function block can perform signal processing related to the extra traffic held in the tributary interface section (PRT) 6-1-2 or the part-time traffic held in the tributary interface section (P/T) 6-1-3.

In this state, if a failure has occurred in the WEST-side line or the line interface section (SRV) 2-1-1, the line switch section (SRV) 3-1-1 detours the path to the line interface section 2-1-2. Furthermore, if a failure has occurred in the WEST-side line, the line switch section (SRV) 3-1-1 detours the path to the line interface section (WEST PRT) 2-1-4.

### [Drop Direction]

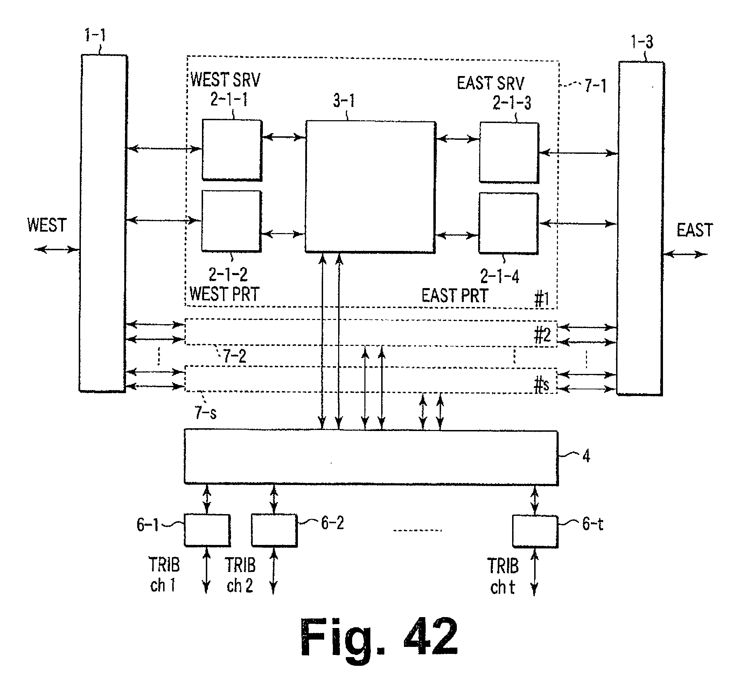

In FIG. 42, the wavelength-division multiplex light inputted to the wavelength-division multiplexing and demultiplexing section 1-1 is demultiplexed in wavelength units and one of the demultiplexed signals is inputted to the line interface section (WEST SRV) 2-1-1. The line interface section (WEST SRV) 2-1-1 converts the signal form of the inputted signal as needed, splits the converted signal, and outputs the split signals to the line switch section (SRV) 3-1-1 and line switch section (PRT) 3-1-2. The line switch section (SRV) 3-1-1 outputs the inputted signal to the optical cross-connect section (SRV) 4-1 according to the connection setting.

The optical cross-connect section (SRV) 4-1 outputs the inputted signal to the tributary switch section (SRV) 5-1-1 according to the connection setting. The tributary switch section (SRV) 5-1-1 splits the signal from the optical cross-connect section (SRV) 4-1 and outputs the split signals to the tributary interface section (SRV) 6-1-1 and tributary interface section (PRT) 6-1-2. Each tributary interface section converts the signal form of the received signal as needed and outputs the converted signal to an external unit.

In this state, the redundancy function part and the line-side protection-system wavelength are in the unused state. Therefore, an unused protection-system function block can perform signal processing related to the extra traffic or part-time traffic transmitted using a protection wavelength.

In this state, if a failure has occurred in the line interface section (WEST SRV) 2-1-1, the line switch section (SRV) 3-1-1 outputs the path detoured from the line interface section 2-1-2 to optical cross-connect section (SRV) 4-1. Furthermore, if a failure has occurred in the WEST-side line, the line switch section (SRV) 3-1-1 outputs the path detoured from the line interface section (WEST PRT) 2-1-4 to the optical cross-connect section (SRV) 4-1.

### [Through Direction]

In FIG. 42, the wavelength-division multiplex light inputted to the wavelength-division multiplexing and demultiplexing section 1-1 is demultiplexed in wavelength units and one of the demultiplexed signals is inputted to the line interface section (WEST SRV) 2-1-1 in the line redundancy unit 7-1. The line interface section (WEST SRV) 2-1-1 converts the signal form of the inputted optical signal as needed and inputs the resulting signal to the line switch section (SRV) 3-1-1. The line switch section (SRV) 3-1-1 connects the path to the line interface section (SRV) 2-1-3 according to the connection setting. The line interface section (EAST SRV) 2-1-3 converts the signal form of the inputted path as needed and outputs the resulting signal as a signal of a specific wavelength. The wavelength-division multiplexing and demultiplexing section 1-3 wavelength-multiplexes the signals from the line interface sections corresponding to the individual wavelengths and outputs the resulting signal to the transmission line.

On the other hand, the wavelength-division multiplex signal inputted to the wavelength-division multiplexing and demultiplexing section 1-3 is demultiplexed in wavelength units and one of the demultiplexed signal is inputted to the line interface section 2-1-3 of the line redundancy unit 7-1. The line interface section (EAST SRV) 2-1-3 converts the signal form of the inputted optical signal as needed and inputs the resulting signal to the line switch section (SRV) 3-1-1. The line switch section (SRV) 3-1-1 connects the path to the line interface section (SRV) 2-1-1 according to the connection setting. The line interface section (WEST SRV) 2-1-1 converts the signal form of the inputted path and outputs the resulting signal as a signal of a specific wavelength. The wavelength-division multiplexing and demultiplexing section 1-1 wavelength-multiplexes the signals from the line interface sections for the individual wavelengths and outputs the resulting signal to the transmission line.

In this state, if a failure has occurred in the line interface section (WEST SRV) 2-1-1, the line switch section (SRV) 3-1-1 outputs the path detoured via the line interface section (WEST PRT) 2-1-2 to the line interface section (EAST SRV) 2-1-3.

Furthermore, if a failure has occurred in the line interface section (EAST SRV) 2-1-3, the line switch section (SRV) 3-1-1 detours the path by way of the line interface section (EAST PRT) 2-1-4.

The above configuration produces the following effects:
a) Use of the line switch section capable of splitting an optical signal and outputting the split signals enables the path to be detoured quickly in case of failure. Consequently, it is possible to shorten the time during which the pass is interrupted in the case of the switching or revertive switching of the path.
b) Use of the optical cross-connect section and line switch section enables any tributary channel to be connected to any wavelength on either the WEST side or the EAST side.
c) When there is no failure in the network, the extra traffic or part-time traffic can be held.
d) Furthermore, it is possible to provide the line interface section and tributary interface section with a specific signal inserting function. This prevents a misconnection between service traffic and extra traffic or between service traffic and part-time traffic in the failure state.

### <Embodiment to help explain an optical transmission apparatus which includes a redundancy system but no cross-connect switch and is applied to a 4-fiber system>

### (Seventeenth Embodiment)

FIG. 39 is a block diagram showing another configuration of an optical transmission apparatus according to the present invention. The optical transmission apparatus of the seventeenth embodiment includes a switchable redundancy system, but is not provided with an optical cross-connect section for assigning wavelengths of optical signals between the line side and the tributary side. The optical transmission apparatus is used in a 4-fiber transmission system.

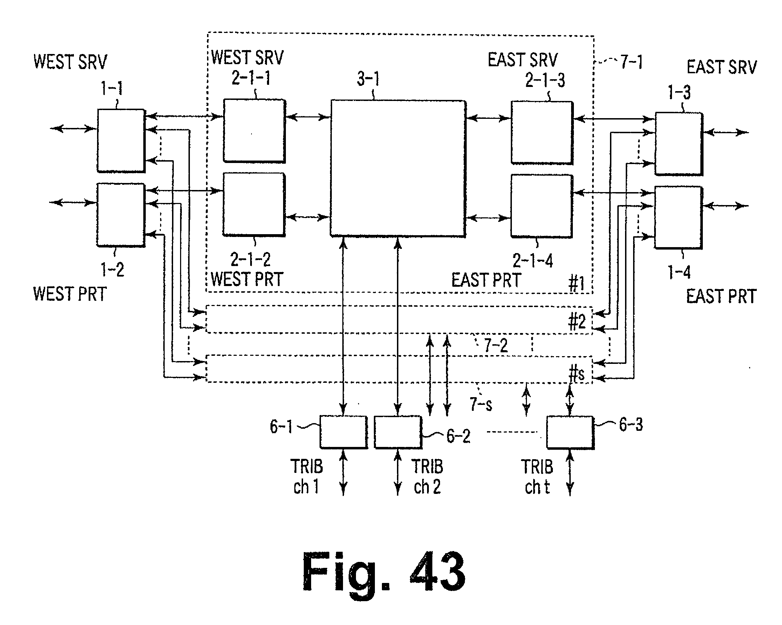

The optical transmission apparatus of FIG. 43 comprises wavelength-division multiplexing and demultiplexing sections (WEST SRV: 1-1, WEST PRT: 1-2, EAST SRV: 1-3, EAST PRT: 1-4), line redundancy units 7-1 to 7-s, and tributary units 8-1 to 8-t.

The line redundancy units 7-1 to 7-s include line interface sections (WEST SRV: 2-1-1, WEST PRT: 2-1-2, EAST SRV: 2-1-3, EAST PRT: 2-1-4) for interfacing with the line side for each wavelength and line switch sections (SRV: 3-1-1, PRT: 3-1-2) having the same function as that in the twenty-fourth embodiment.

Each of the tributary units 8-1 to 8-t includes tributary switch sections (SRV: 5-1-1, PRT: 5-1-2) for effecting protection switching on the tributary side and tributary interface sections (SRV: 6-1-1, PRT: 6-1-2, P/T: 6-1-3) for interfacing with the tributary side.

The basic operation of the optical transmission apparatus shown in FIG. 43 will be explained, centering on a path set via the line redundancy unit 7-1.

### [Add Direction]

### (1) Service System

In FIG. 43, after the service traffic held in the tributary interface section (SRV) 6-1-1 is subjected to a signal form converting process, a signal monitoring process, or a terminating process as needed, the resulting traffic is outputted to the tributary switch section (SRV) 5-1-1. The signal outputted from the tributary switch section (SRV) 5-1-1 is connected to the line redundancy unit 7-1.

The line switch section (SRV) 3-1-1 in the line redundancy unit 7-1 connects the path to the line interface section (WEST SRV) 2-1-1 according to the connection setting. The line interface section (WEST SRV) 2-1-1 converts the signal form of the inputted path and outputs the resulting signal as a signal of a specific wavelength.

The wavelength-division multiplexing and demultiplexing section (WEST SRV) 1-1 wavelength-multiplexes the signals from the line interface sections for the individual wavelengths and outputs the resulting signal to the transmission line.

While in the above explanation, the service traffic from the tributary unit is connected to the WEST SRV, the same service traffic may be connected to the EAST SRV.

### (2) Protection System

If a failure has occurred in the tributary-side service system, the service traffic held in the tributary interface section (PRT) 6-1-2 is subjected to a signal form converting process, a signal monitoring process, or a terminating process as needed and then the resulting traffic is outputted to the tributary switch section (SRV) 5-1-1. The connection from this point on is the same as that of the service traffic.

### (3) Part-time System

After the part-time traffic held in the tributary interface section (P/T) 6-1-3 is subjected to a signal form converting process, a signal monitoring process, or a terminating process as needed, the resulting traffic is outputted to the tributary switch section (PRT) 5-1-2. The signal outputted from the tributary switch section (SRV) 5-1-1 is further connected to the line redundancy unit 7-1.

The line switch section (PRT) 3-1-2 in the line redundancy unit 7-1 connects the path to the line interface section (EAST PRT) 2-1-4 according to the connection setting. The line interface section (EAST PRT) 2-1-4 converts the signal form of the inputted path and outputs the resulting signal as a signal of a specific wavelength.

The wavelength-division multiplexing and demultiplexing section (EAST PRT) 1-4 wavelength-multiplexes the signals from the line interface sections for the individual wavelengths and outputs the resulting signal to the transmission line. While in the above explanation, the part-time traffic from the tributary unit is connected to the EAST PRT, the same part-time traffic may be connected to the WEST PRT.

### (4) In Case of Failure

If a failure has occurred in the line interface section (WEST SRV) 2-1-1, the line switch section (SRV) 3-1-1 detours the service traffic to the line interface section (WEST PRT) 2-1-2. At this time, the connection form of the line switch section (SRV) 3-1-1 is in the bridge connection state where the same path is connected to not only the line interface section (WEST SRV) 2-1-1 but also the line interface section (WEST PRT) 2-1-2.

The line interface section (WEST PRT) 2-1-2 subjects the inputted path to signal conversion and outputs the resulting signal of a specific wavelength. The wavelength-division multiplexing and demultiplexing section (WEST PRT) 1-2 wavelength-multiplexes the signals from the line interface sections for the individual wavelengths and outputs the resulting signal to the transmission line.

If failures have occurred in both of the SRV and PRT on the WEST side, the path'is detoured to the line interface section (WEST PRT) 2-1-4. In this case, the connection form of the line switch section (SRV) 3-1-1 is in the bridge connection state where the same path is connected to not only the line interface section (WEST SRV) 2-1-1 but also the line interface section (WEST PRT) 2-1-4.

The line interface section (WEST PRT) 2-1-4 subjects the inputted service traffic to signal conversion and outputs the resulting signal of a specific wavelength. The wavelength-division multiplexing and demultiplexing section (WEST PRT) 1-4 wavelength-multiplexes the signals from the line interface sections for the individual wavelengths and outputs the resulting signal to the transmission line. At this time, the part-time traffic is dropped from the EAST PRT.

### [Drop Direction]

The wavelength-division multiplex light inputted to the wavelength-division multiplexing and demultiplexing section (WEST SRV) 1-1 is demultiplexed in wavelength units and one of the demultiplexed signal is inputted to the line interface section (WEST SRV) 2-1-1. The line interface section (WEST SRV) 2-1-1 converts the signal form of the inputted signal and inputs the resulting signal to the line switch section (SRV) 3-1-1. The line switch section (SRV) 3-1-1 outputs the inputted signal to the tributary interface section 8-1 according to the connection setting. The tributary interface section 8-1 converts the form of the signal to be inputted as needed and outputs the resulting signal to an external unit.

In this state, if a failure has occurred in the line(WEST SRV), wavelength-division multiplexing and demultiplexing section 1-1, or line interface section 2-1-1, the line switch section (SRV) 3-1-1 outputs the path detoured via the optical line(WEST PRT), wavelength-division multiplexing and demultiplexing section 1-2, and line interface section 2-1-2 to the optical cross-connect section.

Furthermore, if failures have occurred in both of the WEST SRV line and the WEST PRT line, the line switch section (SRV) 3-1-1 connects the path detoured via the EAST PRT line, wavelength-division multiplexing and demultiplexing section 1-4, and line interface section (WEST PRT) 2-1-4 to the tributary interface section 8-1. The tributary interface section 8-1 converts the signal form as needed and outputs the resulting signal to an external unit.

### [Through Direction]

In FIG. 43, the wavelength-division multiplex signal inputted to the wavelength-division multiplexing and demultiplexing section 1-1 is demultiplexed into wavelength units and one of the demultiplexed signals is inputted to the line interface section (WEST SRV) 2-1-1 in the line redundancy unit 7-1. The line interface section (WEST SRV) 2-1-1 converts the signal form of the inputted optical signal as needed and inputs the resulting signal to the line switch section (SRV) 3-1-1. The line switch section (SRV) 3-1-1 connects the path to the line interface section (SRV) 2-1-3 according to the connection setting. The line interface section (EAST SRV) 2-1-3 converts the signal form of the inputted path as needed and outputs the resulting signal of a specific wavelength. The wavelength-division multiplexing and demultiplexing section 1-3 wavelength-multiplexes the signals from the line interface sections corresponding to the individual wavelengths and outputs the resulting signal to the transmission line.

In this state, if a failure has occurred in the WEST-SRV line, wavelength-division multiplexing and demultiplexing section 1-1, or line interface section 2-1-1, the line switch section (SRV) 3-1-1 outputs the path detoured via the WEST-PRT line, wavelength-division multiplexing and demultiplexing section 1-2, and line interface section 2-1-2 to the line interface section (EAST SRV) 2-1-3.

Furthermore, in this state, if a failure has occurred in the EAST-SRV line, wavelength-division multiplexing and demultiplexing section 1-3, or line interface section 2-1-3, the line switch section (SRV) 3-1-1 connects the same path to the line interface section (EAST SRV) 2-1-3 and line interface section (WEST PRT) 2-1-4. That is, the line switch section (SRV) 3-1-1 bridges the path. This enables the path to be detoured via the line interface section (WEST PRT) 2-1-4.

With the seventeenth embodiment, the following effects are produced:
a) Use of the line switch section capable of splitting an optical signal and connecting the split signals enables the path to be detoured quickly in case of failure. Consequently, it is possible to shorten the time during which the pass is interrupted in the case of the switching or revertive switching of the path.
b) Since each section constituting the optical transmission apparatus is designed to have a redundancy structure, the path can be detoured in case of failure in the apparatus.
c) Since a 2-fiber pair transmission path is used as each of the WEST-side line and the EAST-side line, the path can be detoured in case of failure in the line.
d) Since each of the tributary switch sections and tributary lines is provided with a tributary interface section, the path can be detoured in case of failure in the tributary transmission.
e) Part-time traffic can be transmitted via the tributary interface section (P/T).

### <Embodiment to help explain an optical transmission apparatus which includes a redundancy system but no cross-connect switch and is applied to a 2-fiber system>

### (Eighteenth Embodiment)

FIG. 40 is a block diagram showing another configuration of an optical transmission apparatus according to the present invention. The optical transmission apparatus of the eighteenth embodiment includes a switchable redundancy system, but is not provided with an optical cross-connect section for assigning wavelengths between the line side and the tributary side. The optical transmission apparatus is used in a 2-fiber transmission system.

The optical transmission apparatus of FIG. 40 comprises wavelength-division multiplexing and demultiplexing sections (WEST SRV: 1-1, EAST SRV: 1-3), line redundancy units 7-1 to 7-s, and tributary units 8-1 to 8-t.

The line redundancy units 7-1 to 7-s include line interface sections (WEST SRV: 2-1-1, WEST PRT: 2-1-2, EAST SRV: 2-1-3, EAST PRT: 2-1-4) for interfacing with the line side for each wavelength and line switch sections (SRV: 3-1-1, PRT: 3-1-2) having the same function as that in the sixteenth embodiment.

Each of the tributary units 8-1 to 8-t includes tributary switch sections (SRV: 5-1-1, PRT: 5-1-2) for effecting protection switching on the tributary side and tributary interface sections (SRV: 6-1-1, PRT: 6-1-2, P/T: 6-1-3) for interfacing with the tributary side.

The basic operation of the optical transmission apparatus shown in FIG. 40 will be explained, centering on a path set via the line redundancy unit 7-1.

### [Add Direction]

In FIG. 40, after the service traffic held in the tributary interface section (SRV) 6-1-1 is subjected to a signal form converting process, a signal monitoring process, or a terminating process as needed, the resulting traffic is outputted to the tributary switch section (SRV) 5-1-1. The signal outputted from the tributary switch section (SRV) 5-1-1 is connected to the line switch section 3-1-1.

The line switch section (SRV) 3-1-1 in the line redundancy unit 7-1 connects the path to the line interface section (WEST SRV) 2-1-1 according to the connection setting. The line interface section (WEST SRV) 2-1-1 converts the signal form of the inputted path and outputs the resulting signal of a specific wavelength.

The wavelength-division multiplexing and demultiplexing section (WEST SRV) 1-1 wavelength-multiplexes the signals from the line interface sections for the individual wavelengths and outputs the resulting signal to the transmission line.

In this state, if a failure has occurred in the line interface section (WEST SRV) 2-1-1, the line switch section (SRV) 3-1-1 detours the service traffic to the line interface section (WEST PRT) 2-1-2. If a failure has occurred in the WEST-side line, the line switch section (SRV) 3-1-1 detours the service traffic to the line interface section (WEST PRT) 2-1-4.

After the path held in the tributary interface section (P/T) 6-1-1 is subjected to a signal form converting process, a signal monitoring process, or a terminating process as needed, the resulting traffic is connected to the line redundancy unit 7-1.

The line switch section (PRT) 3-1-2 in the line redundancy unit 7-1 connects the path to the line interface section (EAST PRT) 2-1-3 according to the connection setting. The line interface section 2-1-3 converts the signal form of the inputted path as needed and outputs the resulting signal of a specific wavelength. The wavelength-division multiplexing and demultiplexing section (EAST) 1-3 wavelength-multiplexes the signals from the line interface sections for the individual wavelengths and outputs the resulting signal to the transmission line.

In this state, if a failure has occurred in the line interface section (EAST SRV) 2-1-3, the line switch section 3-1-2 detours the path to the line interface section (EAST PRT) 2-1-4. Furthermore, if a failure has occurred in the EAST-side line, the line switch section 3-1-2 detours the path to the line interface section (WEST PRT) 2-1-2.

With the above configuration, part-time traffic can be held.

After the part-time traffic held in the tributary interface section (P/T) 6-1-3 is subjected to a signal form converting process, a signal monitoring process, or a terminating process as needed, the resulting traffic is outputted to the tributary switch section (PRT) 5-1-2 and then connected to the line switch section 3-1-2.

The line switch section 3-1-2 connects the path to the line interface section (WEST PRT) 2-1-4 according to the connection setting. The line interface section (WEST PRT) 2-1-4 converts the signal form of the inputted path and outputs the resulting signal of a specific wavelength.

### [Drop Direction]

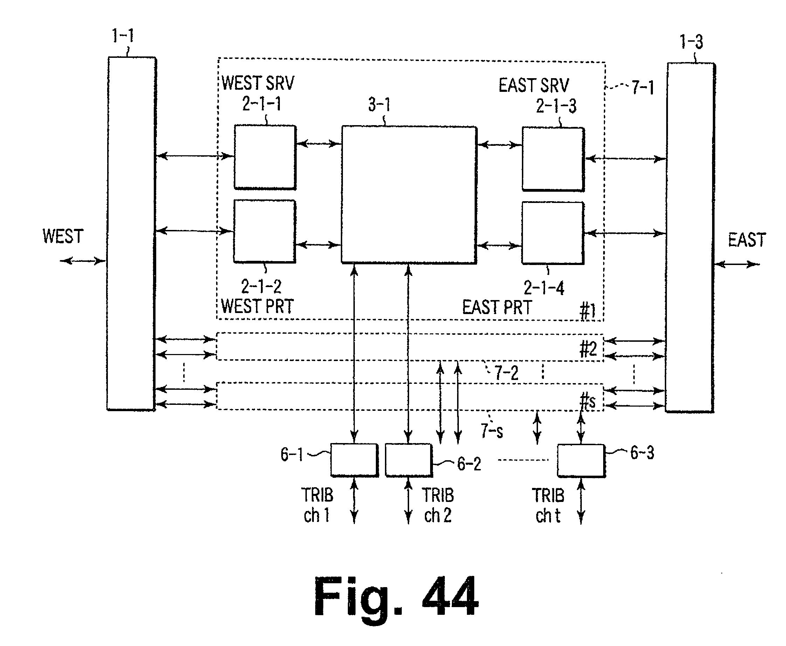

In FIG. 44, the wavelength-division multiplex light held in the wavelength-division multiplexing and demultiplexing section (WEST) 1-1 is wavelength-demultiplexed and a part of the resulting signal is inputted to the line interface section (WEST PRT) 2-1-1.

The line interface section (WEST PRT) 2-1-2 outputs the inputted signal to the line switch section (SRV) 3-1-1.

The line switch section (SRV) 3-1-1 connects the inputted signal to the tributary interface section 8-1 according to the connection setting. The tributary interface section 8-1 converts the signal form of the connected signal as needed and then outputs the resulting signal to an external unit.

In this state, if a failure has occurred in the line interface section (WEST SRV) 2-1-1, the line switch section (SRV) 3-1-1 outputs the path detoured via the line interface section 2-1-2 to the tributary interface section 8-1. Furthermore, if a failure has occurred in the WEST-side line, the line switch section (SRV) 3-1-1 outputs the path detoured via the line interface section (WEST PRT) 2-1-4 to the tributary interface section 8-1.

In FIG. 44, the wavelength-division multiplex signal inputted to the wavelength-division multiplexing and demultiplexing section 1-3 is demultiplexed in wavelength units and one of the demultiplexed signals is inputted to the line interface section (EAST SRV) 2-1-3 in the line redundancy unit 7-1. The line interface section (EAST SRV) 2-1-3 converts the signal form of the inputted signal as needed and inputs the resulting signal to the line switch section (SRV) 3-1-1. The line switch section (SRV) 3-1-1 connects the path to the tributary interface section 8-1 according to the connection setting. The tributary interface section 8-1 converts the signal form of the inputted path as needed and outputs the resulting signal to an external unit.

In this state, if a failure has occurred in the line interface section (EAST SRV) 2-1-3, the line switch section 3-1-1 outputs the path detoured via the line interface section (WEST PRT) 2-1-4 to the tributary interface section 6-2. On the other hand, if a failure has occurred in the EAST-side line, the line switch section 3-1-1 outputs the path detoured via the line interface section (WEST PRT) 2-1-2 to the tributary interface section 8-2.

### [Through Direction]

In FIG. 44, the wavelength-division multiplex signal inputted to the wavelength-division multiplexing and demultiplexing section 1-1 is demultiplexed in wavelength units and one of the split signals is inputted to the line interface section (WEST SRV) 2-1-1 in the line redundancy unit 7-1. The line interface section (WEST SRV) 2-1-1 converts the signal form of the inputted optical signal as needed and inputs the resulting signal to the line switch section (SRV) 3-1-1. The line switch section (SRV) 3-1-1 connects the path to the line interface section (SRV) 2-1-3 according to. the connection setting. The line interface section (SRV) 2-1-3 converts the signal form of the inputted path as needed and outputs the resulting signal of a specific wavelength. The wavelength-division multiplexing and demultiplexing section 1-3 wavelength-multiplexes the signals from the line interface sections corresponding to the individual wavelengths and outputs the resulting signal to the transmission line.

On the other hand, the wavelength-division multiplex signal inputted to the wavelength-division multiplexing and demultiplexing section 1-1 is demultiplexed in wavelength units and one of the split signals is inputted to the line interface section (WEST PRT) 2-1-1 in the line redundancy unit 7-1. The line interface section (WEST PRT) 2-1-1 converts the signal form of the inputted optical signal as needed and inputs the resulting signal to the line switch section (SRV) 3-1-1. The line switch section (SRV) 3-1-1 connects the path to the line interface section (PRT) 2-1-4 according to the connection setting. The line interface section 2-1-4 converts the signal form of the inputted path as needed and outputs the resulting signal of a specific wavelength.

The wavelength-division multiplexing and demultiplexing section 1-3 wavelength-multiplexes the signals from the line interface sections corresponding to the individual wavelengths and outputs the resulting signal to the transmission line.

In this state, if a failure has occurred in the line interface section (WEST SRV) 2-1-1, the line switch section (SRV) 3-1-1 outputs the path detoured via the line interface section (WEST PRT) 2-1-2 to the line interface section (EAST SRV) 2-1-3.

Furthermore, if a failure has occurred in the line interface section (EAST SRV) 2-1-3, the line switch section (SRV) 3-1-1 detours the path via the line interface section (EAST SRV) 2-1-4.

With the eighteenth embodiment, the following effects are produced:
a) Use of the line switch section capable of splitting an optical signal and connecting the split signals enables the path to be detoured quickly in case of failure. Consequently, it is possible to shorten the time during which the pass is interrupted in the case of the switching or revertive switching of the path.
b) Since only one fiber pair is used as each of the WEST-side line and EAST-side line, the cost of the transmission paths can be reduced.
c) Since each section constituting the optical transmission apparatus is designed to have a redundancy structure, the path can be detoured in case of failure in the apparatus.
d) Since each of the tributary switch sections and tributary transmission paths is provided with a tributary interface section, the path can be detoured in case of failure in the tributary transmission.
e) The optical cross-connect section can connect any tributary to any wavelength on the WEST side or EAST side.
f) Part-time traffic can be transmitted via the tributary interface section (P/T).

### <Embodiment to help explain an optical transmission apparatus which includes a cross-connect switch but no redundancy system and is applied to a 4-fiber system>

### (Nineteenth Embodiment)

FIG. 41 is a block diagram showing another configuration of an optical transmission apparatus according to the present invention. The optical transmission apparatus of the nineteenth embodiment includes no switchable redundancy system and is provided with an optical cross-connect section for assigning wavelengths between the line side and the tributary side. The optical transmission apparatus is used in a 4-fiber transmission system.

The optical transmission apparatus of FIG. 41 comprises wavelength-division multiplexing and demultiplexing sections (WEST SRV: 1-1, WEST PRT: 1-2, EAST SRV: 1-3, EAST PRT: 1-4) for performing wavelength-division multiplexing and demultiplexing, line redundancy units 7-1 to 7-s, tributary interface sections (6-1 for ch 1, 6-2 for ch 2, 6-t for ch t), and an optical cross-connect section 4 for setting arbitrarily the connection between the tributary interface channels and the line switch sections provided for the individual wavelengths.

The line redundancy units 7-1 to 7-s include line interface sections (WEST SRV: 2-1-1, WEST PRT: 2-1-2, EAST SRV: 2-1-3, EAST PRT: 2-1-4) for interfacing with the line side using a specific wavelength and a line switch section 3 having the same function as that in the sixteenth embodiment.

The basic operation of the optical transmission apparatus shown in FIG. 41 will be explained, centering on a path set via the line redundancy unit 7-1.

### [Add Direction]

In FIG. 41, after the service traffic held in the tributary interface section 6-1 is subjected to a signal form converting process, a signal monitoring process, or a terminating process as needed, the resulting traffic is outputted to the optical cross-connect section 4. The optical cross-connect section 4 connects the signal from the tributary interface section 6-1 to the line redundancy unit 7-1 according to the connection setting.

The line switch section 3-1 in the line redundancy unit 7-1 connects the path to the line interface section (WEST SRV) 2-1-1 according to the connection setting. The line interface section (WEST SRV) 2-1-1 converts the signal form of the inputted path as needed and outputs the resulting signal of a specific wavelength.

The wavelength-division multiplexing and demultiplexing section (WEST SRV) 1-1 wavelength-multiplexes the signals from the line interface sections for the individual wavelengths and outputs the resulting signal to the transmission line.

In this state, if a failure has occurred in the WEST-SRV line, wavelength-division multiplexing and demultiplexing section 1-1, or line interface section (WEST SRV) 2-1-1, the line switch section 3-1 detours the path to the line interface section (WEST PRT) 2-1-2. On the other hand, if failures have occurred simultaneously in the WEST-side SRV system and PRT system, the line switch section 3-1 detours the path to the line interface section (EAST PRT) 2-1-4.

In FIG. 45, after the path held in the tributary interface section 6-t (ch t) is subjected to a signal form converting process, a signal monitoring process, or a terminating process as needed, the resulting signal is outputted to the optical cross-connect section 4. The optical cross-connect section 4 connects the signal from the tributary section 6-t to the line redundancy unit 7-1 according to the connection setting. The line switch section 3-1 in the line redundancy unit 7-1 connects the path to the line interface section (EAST PRT) 2-1-3 according to the connection setting. The line interface section 2-1-3 converts the signal form of the inputted path and outputs the resulting signal of a specific wavelength. The wavelength-division multiplexing and demultiplexing section (EAST) 1-3 wavelength-multiplexes the signals from the line interface sections for the individual wavelengths and outputs the resulting signal to the transmission line.

In this state, if a failure has occurred in the EAST-SRV line, wavelength-division multiplexing and demultiplexing section 1-3, or line interface section 2-1-3, the line switch section 3-1 detours the path to the line interface section (EAST PRT) 2-1-4. On the other hand, if failures have occurred simultaneously in the EAST-side SRV system and PRT system, the line switch section 3-1 detours the path to the line interface section 2-1-2 (WEST PRT).

### [Drop Direction]

In FIG. 45, the wavelength-division multiplex light held in the wavelength-division multiplexing and demultiplexing section (WEST SRV) 1-1 is demultiplexed in wavelength units and one of the separated signals is inputted to the line interface section (WEST SRV) 2-1-1 in the line redundancy unit 7-1. The line interface section (WEST SRV) 2-1-1 converts the signal form of the inputted signal as needed and outputs the resulting signal to the transmission line switch section 3-1. The line switch section 3-1 connects the inputted signal to the optical cross-correct section 4 according to the connection setting.

The optical cross-connect section 4 connects the inputted signal to the tributary interface section 6-1 according to the connection setting. The tributary interface section 6-1 converts the signal form of the inputted signal as needed and outputs the resulting signal to an external unit.

In this state, if a failure has occurred in the WEST-SRV line, wavelength-division multiplexing and demultiplexing section 1-1, or line interface section 2-1-1, the line switch section 3-1 outputs the path detoured via the line interface section (WEST PRT) 2-1-2 to the optical cross-connect section 4. On the other hand, if failures have occurred simultaneously in the WEST-side SRV system and PRT system, the line switch section 3-1 outputs the path detoured via the line interface section (EAST PRT) 2-1-4 to the optical cross-connect section 4.

In FIG. 45, the wavelength-division multiplex signal inputted to the wavelength-division multiplexing and demultiplexing section (EAST SRV) 1-3 is demultiplexed in wavelength units and one of the separated signals is inputted to the line interface section 2-1-3 in the line redundancy unit 7-1. The line interface section 2-1-3 converts the signal form of the inputted signal as needed and outputs the resulting signal to the transmission line switch section 3-1. The line switch section 3-1 connects the inputted signal to the optical cross-connect section 4 according to the connection setting.

The optical cross-connect section 4 connects the inputted signal to the tributary interface section 6-t according to the connection setting. The tributary interface section 6-t converts the signal form of the inputted path as needed and outputs the resulting signal to an external unit.

In this state, if a failure has occurred in the EAST-SRV line or line interface section 2-1-3, the line switch section 3-1 outputs the path detoured via the line interface section (EAST PRT) 2-1-4 to the optical cross-connect section 4. On the other hand, if failures have occurred simultaneously in the EAST-side SRV system and PRT system, the line switch section 3-1 outputs the path detoured via the line interface section (WEST PRT) 2-1-2 to the optical cross-connect section 4.

### [Through Direction]

In FIG. 45, the wavelength-division multiplex signal inputted to the wavelength-division multiplexing and demultiplexing section (WEST SRV) 1-1 is demultiplexed in wavelength units and one of the split signals is inputted to the line interface section (WEST SRV) 2-1-1 in the line redundancy unit 7-1. The line interface section (WEST SRV) 2-1-1 converts the signal form of the inputted optical signal as needed and inputs the resulting signal to the line switch section 3-1. The line switch section 3-1 connects the path to the line interface section (EAST SRV) 2-1-3 according to the connection setting. The line interface section 2-1-3 converts the signal form of the inputted path as needed and outputs the resulting signal of a specific wavelength. The wavelength-division multiplexing and demultiplexing section (EAST SRV) 1-3 wavelength-multiplexes the signals from the line interface sections corresponding to the individual wavelengths and outputs the resulting signal to the transmission line.

The wavelength-division multiplex signal inputted to the wavelength-division multiplexing and demultiplexing section (WEST PRT) 1-2 is demultiplexed in wavelength units and one of the split signals is inputted to the line interface section (WEST PRT) 2-1-2 in the line redundancy unit 7-1. The line interface section 2-1-2 converts the signal form of the inputted optical signal as needed and outputs the resulting signal to the transmission line switch section 3-1. The line switch section 3-1 connects the path to the line interface section (EAST PRT) 2-1-4 according to the connection setting. The line interface section 2-1-4 converts the signal form of the inputted path as needed and outputs the resulting signal of a specific wavelength. The wavelength-division multiplexing and demultiplexing section (EAST PRT) 1-4 wavelength-multiplexes the signals from the line interface sections corresponding to the individual wavelengths and outputs the resulting signal to the transmission line.

In this state, if a failure has occurred in the WEST-SRV line, wavelength-division multiplexing and demultiplexing section 1-1 or line interface section 2-1-1, the line switch section 3-1 outputs the path detoured via the line interface section (WEST PRT) 2-1-2 to the line interface section (EAST SRV) 2-1-3. On the other hand, if a failure has occurred in the line interface section (EAST SRV) 2-1-3, the line switch section 3-1 detours the path via the line interface section (EAST PRT) 2-1-4.

With the nineteenth embodiment, the following effects are produced:
a) Use of the line switch section capable of splitting an optical signal and connecting the split signals enables the path to be detoured quickly in case of failure. Consequently, it is possible to shorten the time during which the pass is interrupted in the case of the switching or revertive switching of the path.
b) Use of the optical cross-connect section and line switch section enables any tributary channel to be connected to any wavelength on the WEST side or EAST side.

### <Embodiment to help explain an optical transmission apparatus which includes a cross-connect switch but no redundancy system and is applied to a 2-fiber system>

### (Twentieth Embodiment)

FIG. 42 is a block diagram showing another configuration of an optical transmission apparatus according to the present invention. The optical transmission apparatus of the twentieth embodiment includes no switchable redundancy system and is provided with an optical cross-connect section for assigning wavelengths between the line side and the tributary side. The optical transmission apparatus is used in a 2-fiber transmission system.

The optical transmission apparatus of FIG. 42 comprises wavelength-division multiplexing and demultiplexing sections (WEST: 1-1, EAST: 1-3), line redundancy units 7-1 to 7-s, a t number of tributary interface sections (6-1 for ch 1, 6-2 for ch 2, 6-t for ch t) for interfacing with the tributary side, and an optical cross-connect section 4 for setting arbitrarily the connection between the tributary interface channels and the line switch sections provided for the individual wavelengths.

The line redundancy units 7-1 to 7-s include line interface sections (WEST SRV: 2-1-1, WEST PRT: 2-1-2, EAST SRV: 2-1-3, EAST PRT: 2-1-4) for interfacing with the line using a specific wavelength and a line switch section 3-1 having the same function as that in the sixteenth embodiment.

The basic operation of the optical transmission apparatus shown in FIG. 42 will be explained, centering on a path set via the line redundancy unit 7-1.

### [Add Direction]

In FIG. 42, after the path held in the tributary interface section 6-1 is subjected to a signal form converting process, a signal monitoring process, or a terminating process as needed, the resulting path is outputted to the optical cross-connect section 4. The optical cross-connect section 4 connects the signal from the tributary interface section 6-1 to the line redundancy unit 7-1 according to the connection setting.

The line switch section 3-1 in the line redundancy unit 7-1 connects the path to the line interface section (WEST SRV) 2-1-1 according to the connection setting. The line interface section (WEST SRV) 2-1-1 converts the signal form of the inputted path as needed and outputs the resulting signal of a specific wavelength. The wavelength-division multiplexing and demultiplexing section (WEST) 1-1 wavelength-multiplexes the signals from the line interface sections for the individual wavelengths and outputs the resulting signal to the transmission line.

In this state, if a failure has occurred in the line interface section (WEST SRV) 2-1-1, the line switch section 3-1 detours the path to the line interface section (WEST PRT) 2-1-2. On the other hand, if a failure has occurred in the WEST-side line or wavelength-division multiplexing and demultiplexing section 1-1, the line switch section 3-1 detours the path to the line interface section (EAST PRT) 2-1-4.

In FIG. 46, after the path held in the tributary interface section 6-t is subjected to a signal form converting process, a signal monitoring process, or a terminating process as needed, the resulting signal is outputted to the optical cross-connect section 4. The optical cross-connect section 4 connects the signal from the tributary interface section 6-t to the line redundancy unit 7-1 according to the connection setting.

The line switch section 3-1 in the line redundancy unit 7-1 connects the path to the line interface section (EAST SRV) 2-1-3 according to the connection setting. The line interface section 2-1-3 converts the signal form of the inputted path as needed and outputs the resulting signal of a specific wavelength.

The EAST-side wavelength-division multiplexing and demultiplexing section 1-3 wavelength-multiplexes the signals from the line interface sections for the individual wavelengths and outputs the resulting signal to the transmission line.

In this state, if a failure has occurred in the line interface section (EAST SRV) 2-1-3, the line switch section 3-1 detours the path to the line interface section (EAST PRT) 2-1-4. On the other hand, if a failure has occurred in the EAST-side line or wavelength-division multiplexing and demultiplexing section 1-3, the line switch section 3-1 detours the path to the line interface section (WEST PRT) 2-1-2.

### [Drop Direction]

In FIG. 46, the wavelength-division multiplex light held in the wavelength-division multiplexing and demultiplexing section 1-1 is demultiplexed in wavelength units and one of the separated signals is inputted to the line interface section (WEST SRV) 2-1-1 in the line redundancy unit 7-1. The line interface section 2-1-1 converts the signal form of the inputted signal as needed and outputs the resulting signal to the transmission line switch section 3-1. The line switch section 3-1 outputs the inputted signal to the optical cross-correct section 4 according to the connection setting. The optical cross-connect section 4 connects the inputted signal to the tributary interface section 6-1 according to the connection setting. The tributary interface section 6-1 converts the signal form of the inputted signal as needed and outputs the resulting signal to an external unit.

In this state, if a failure has occurred in the line interface section (WEST SRV) 2-1-1, the line switch section 3-1 outputs the path detoured via the line interface section (WEST PRT) 2-1-2 to the optical cross-connect section 4. On the other hand, if a failure has occurred in the WEST-side transmission line or wavelength-division multiplexing and demultiplexing section 1-1, the line switch section 3-1 outputs the path detoured via the line interface section (EAST PRT) 2-1-4 to the optical cross-connect section 4.

In FIG. 46, the wavelength-division multiplex signal inputted to the wavelength-division multiplexing and demultiplexing section 1-3 is demultiplexed into wavelength units and one of the separated signals is inputted to the line interface section 2-1-3 in the line redundancy unit 7-1. The line interface section 2-1-3 converts the signal form of the inputted signal as needed and outputs the resulting signal to the transmission line switch section 3-1. The line switch section 3-1 outputs the inputted signal to the optical cross-connect section 4 according to the connection setting. The optical cross-connect section 4 connects the inputted signal to the tributary interface section 6-t according to the connection setting. The tributary interface section 6-t converts the signal form of the inputted signal as needed and outputs the resulting signal to an external unit.

In this state, if a failure has occurred in the line interface section (EAST SRV) 2-1-3, the line switch section 3-1 outputs the path detoured via the line interface section (EAST PRT) 2-1-4 to the optical cross-connect section 4. On the other hand, if a failure has occurred in the EAST-side transmission line or wavelength-division multiplexing and demultiplexing section 1-3, the line switch section 3-1 outputs the path detoured via the'line interface section (WEST PRT) 2-1-2 to the optical cross-connect section 4.

### [Through Direction]

In FIG. 46, the wavelength-division multiplex signal inputted to the wavelength-division multiplexing and demultiplexing section 1-1 is demultiplexed in wavelength units and one of the split signals is inputted to the line interface section (WEST SRV) 2-1-1 in the line redundancy unit 7-1. The line interface section 2-1-1 converts the signal form of the inputted optical signal as needed and inputs the resulting signal to the line switch section 3-1. The line switch section 3-1 connects the path to the line interface section (EAST SRV) 2-1-3 according to the connection setting. The line interface section 2-1-3 converts the signal form of the inputted path as needed and outputs the resulting signal of a specific wavelength.

The wavelength-division multiplexing and demultiplexing section (EAST SRV) 1-3 wavelength-multiplexes the signals from the line interface sections corresponding to the individual wavelengths and outputs the resulting signal to the transmission line.

Furthermore, the wavelength-division multiplex signal inputted to the wavelength-division multiplexing and demultiplexing section (WEST) 1-1 is demultiplexed in wavelength units and one of the separated signals is inputted to the line interface section (WEST PRT) 2-1-2 in the line redundancy unit 7-1. The line interface section 2-1-2 converts the signal form of the inputted optical signal as needed and outputs the resulting signal to the transmission line switch section 3-1. The line switch section 3-1 connects the path to the line interface section (EAST PRT) 2-1-4 according to the connection setting. The line interface section (WEST PRT) 2-1-4 converts the signal form of the inputted path as needed and outputs the resulting signal of a specific wavelength.

The wavelength-division multiplexing and demultiplexing section 1-3 wavelength-multiplexes the signals from the line interface sections corresponding to the individual wavelengths and outputs the resulting signal to the transmission line.

In this state, if a failure has occurred in the line interface section (WEST SRV) 2-1-1, the line switch section 3-1 outputs the path detoured via the line interface section (WEST PRT) 2-1-2 to the line interface section (EAST SRV) 2-1-3. On the other hand, if a failure has occurred in the line interface section (EAST SRV) 2-1-3, the line switch section 3-1 detours the path via the line interface section (EAST PRT) 2-1-4.

With the twentieth embodiment, the following effects are produced:
a) Use of the line switch section capable of splitting an optical signal and connecting the split signals enables the path to be detoured quickly in case of failure. Consequently, it is possible to shorten the time during which the pass is interrupted in the case of the switching or revertive switching of the path.
b) Since only one fiber pair is used as each of the WEST-side line and EAST-side line, the cost of the transmission paths can be reduced.
c) The optical cross-connect section 4 can connect any tributary channel to any wavelength on the WEST side or EAST side.

### <Embodiment to help explain an optical transmission apparatus which includes neither a redundancy system nor a cross-connect switch and is applied to a 4-fiber system>

### (Twenty-first Embodiment)

FIG. 43 is a block diagram showing another configuration of an optical transmission apparatus according to the present invention. The optical transmission apparatus of the twenty-first embodiment includes neither a switchable redundancy system nor an optical cross-connect section for assigning wavelengths between the line side and the tributary side. The optical transmission apparatus is used in a 4-fiber transmission system.

The optical transmission apparatus of FIG. 43 comprises wavelength-division multiplexing and demultiplexing sections (WEST SRV: 1-1, WEST PRT: 1-2, EAST SRV: 1-3, EAST PRT: 1-4), line redundancy units 7-1 to 7-s, a t number of tributary interface sections (6-1 for ch 1, 6-2 for ch 2, 6-t for ch t) for interfacing with the tributary side, and an optical cross-connect section 4.

The line redundancy units 7-1 to 7-s include line interface sections (WEST SRV: 2-1-1, WEST PRT: 2-1-2, EAST SRV: 2-1-3, EAST PRT: 2-1-4) for interfacing with the line side using a specific wavelength and a line switch section 3 having the same function as that in the sixteenth embodiment.

The basic operation of the optical transmission apparatus shown in FIG. 47 will be explained, centering on a path set via the line redundancy unit 7-1.

### [Add Direction]

In FIG. 47, after the path held in the tributary interface section 6-1 is subjected to a signal form converting process, a signal monitoring process, or a terminating process as needed, the resulting path is outputted to the line redundancy unit 7-1.

The line switch section 3-1 in the line redundancy unit 7-1 connects the path to the line interface section (WEST SRV) 2-1-1 according to the connection setting. The line interface section (WEST SRV) 2-1-1 converts the signal form of the inputted path as needed and outputs the resulting signal of a specific wavelength. The wavelength-division multiplexing and demultiplexing section (WEST SRV) 1-1 wavelength-multiplexes the signals from the line interface sections for the individual wavelengths and outputs the resulting signal to the transmission line.

In this state, if a failure has occurred in the WEST-SRV line, wavelength-division multiplexing and demultiplexing section 1-1, or line interface section (WEST SRV) 2-1-1, the line switch section 3-1 detours the path to the line interface section (WEST PRT) 2-1-2. On the other hand, if failures have occurred simultaneously in the WEST-side SRV system and PRT system, the line switch section 3-1 detours the path to the line interface section (EAST PRT) 2-1-4.

In FIG. 47, after the path held in the tributary interface section 6-2 is subjected to a signal form converting process, a signal monitoring process, or a terminating process as needed, the resulting signal is connected to the line redundancy unit 7-1.

The line switch section 3-1 in the line redundancy unit 7-1 connects the path to the line interface section (EAST SRV) 2-1-3 according to the connection setting. The line interface section 2-1-3 converts the signal form of the inputted path as needed and outputs the resulting signal of a specific wavelength. The wavelength-division multiplexing and demultiplexing section 1-3 wavelength-multiplexes the signals from the line interface sections for the individual wavelengths and outputs the resulting signal to the transmission line.

In this state, if a failure has occurred in the EAST-SRV line, wavelength-division multiplexing and demultiplexing section 1-3, or line interface section 2-1-3, the line switch section 3-1 detours the path to the line interface section (EAST PRT) 2-1-4. On the other hand, if failures have occurred simultaneously in the EAST-side SRV system and PRT system, the line switch section 3-1 detours the path to the line interface section (WEST PRT) 2-1-2.

### [Drop Direction]

In FIG. 47, the wavelength-division multiplex light held in the wavelength-division multiplexing and demultiplexing section 1-1 is demultiplexed in wavelength units and one of the separated signals is inputted to the line interface section (WEST SRV) 2-1-1 in the line redundancy unit 7-1. The line interface section 2-1-1 converts the signal form of the inputted signal as needed and outputs the resulting signal to the transmission line switch section 3-1. The line switch section 3-1 connects the inputted signal to the tributary interface section 6-1 according to the connection setting. The tributary interface section 6-1 converts the signal form of the inputted signal as needed and outputs the resulting signal to an external unit.

In this state, if a failure has occurred in the WEST-SRV line, wavelength-division multiplexing and demultiplexing section 1-1, or line interface section 2-1-1, the line switch section 3-1 outputs the path detoured via the line interface section (WEST PRT) 2-1-2 to the tributary interface section. On the other hand, if failures have occurred simultaneously in the WEST-side SRV system and PRT system, the line switch section 3-1 outputs the path detoured via the line interface section (EAST PRT) 2-1-4 to the tributary interface section.

In FIG. 47, the wavelength-division multiplex signal inputted to the wavelength-division multiplexing and demultiplexing section 1-3 is demultiplexed in wavelength units and one of the separated signals is inputted to the line interface section 2-1-3 in the line redundancy unit 7-1. The line interface section 2-1-3 converts the signal form of the inputted signal as needed and outputs the resulting signal to the transmission line switch section 3-1. The line switch section 3-1 connects the inputted signal to the tributary interface section 6-2 according to the connection setting. The tributary interface section 6-2 converts the signal form of the inputted signal and outputs the resulting signal to an external unit.

In this state, if a failure has occurred in the EAST-SRV line, wavelength-division multiplexing and demultiplexing section 1-3, or line interface section 2-1-3, the line switch section 3-1 outputs the path detoured via the line interface section (EAST PRT) 2-1-4 to the tributary interface section. On the other hand, if failures have occurred simultaneously in the EAST-side SRV system and PRT system, the line switch section 3-1 outputs the path detoured via the line interface section (WEST PRT) 2-1-2 to the tributary interface section.

### [Through Direction]

In FIG. 47, the wavelength-division multiplex signal inputted to the wavelength-division multiplexing and demultiplexing section 1-1 is demultiplexed in wavelength units and one of the split signals is inputted to the line interface section (WEST SRV) 2-1-1 in the line redundancy unit 7-1. The line interface section 2-1-1 converts the signal form of the inputted optical signal as needed and inputs the resulting signal to the line switch section 3-1. The line switch section 3-1 connects the path to the line interface section (EAST SRV) 2-1-3 according to the connection setting. The line interface section 2-1-3 converts the signal form of the inputted path as needed and outputs the resulting signal of a specific wavelength. The wavelength-division multiplexing and demultiplexing section 1-3 wavelength-multiplexes the signals from the line interface sections corresponding to the individual wavelengths and outputs the resulting signal to the transmission line.

Furthermore, the wavelength-division multiplex signal inputted to the wavelength-division multiplexing and demultiplexing section 1-2 is demultiplexed in wavelength units and one of the split signals is inputted to the line interface section (WEST PRT) 2-1-2 in the line redundancy unit 7-1. The line interface section 2-1-2 converts the signal form of the inputted signal as needed and outputs the resulting signal to the transmission line switch section 3-1. The line switch section 3-1 connects the path to the line interface section (EAST PRT) 2-1-4 according to the connection setting. The line interface section 2-1-4 converts the signal form of the inputted path as needed and outputs the resulting signal of a specific wavelength. The wavelength-division multiplexing and demultiplexing section 1-4 wavelength-multiplexes the signals from the line interface sections corresponding to the individual wavelengths and outputs the resulting signal to the transmission line.

In this state, if a failure has occurred in the WEST-SRV line, wavelength-division multiplexing and demultiplexing section 1-1, or line interface section 2-1-1, the line switch section 3-1 outputs the path detoured via the line interface section (WEST PRT) 2-1-2 to the line interface section (EAST SRV) 2-1-3. In addition, if a failure has occurred in the line interface section (EAST SRV) 2-1-3, the line switch section 3-1 detours the path via the line interface section (EAST PRT) 2-1-4.

### [Tributary → Tributary Direction]

After the path held in the tributary interface section 6-1 is subjected to a signal form converting process, a signal monitoring process, or a terminating process as needed, the resulting signal is connected to the line redundancy unit 7-1. The line switch section 3-1 in the line redundancy unit 7-1 connects the path to the line interface section (WEST SRV) 2-1-1 according to the connection setting. The line interface section 2-1-1 converts the signal form of the inputted path and outputs the resulting signal of a specific wavelength. The wavelength-division multiplexing and demultiplexing section 1-1 wavelength-multiplexes the signals from the line interface sections for the individual wavelengths and outputs the resulting signal to the transmission line.

In this state, if a failure has occurred in the WEST-side or EAST-side transmission line, the wavelength-division multiplexing and demultiplexing sections 1-1 or 1-3, or the line interface section, the line switch section 3-1 detours the path to the tributary interface section 6-2.

With the twenty-ninth embodiment, the following effect is produced:
a) Use of the line switch section capable of splitting an optical signal and connecting the split signals enables the path to be detoured quickly in case of failure. Consequently, it is possible to shorten the time during which the pass is interrupted in the case of the switching or revertive switching of the path.

### <Embodiment to help explain an optical transmission apparatus which includes neither a redundancy system nor a cross-connect switch and is applied to a 2-fiber system>

### (Twenty-second Embodiment)

FIG. 44 is a block diagram showing another configuration of an optical transmission apparatus according to the present invention. The optical transmission apparatus of the twenty-second embodiment includes neither a switchable redundancy system nor an optical cross-connect section for assigning wavelengths between the line side and the tributary side. The optical transmission apparatus is used in a 2-fiber transmission system.

The optical transmission apparatus of FIG. 44 comprises wavelength-division multiplexing and demultiplexing sections (WEST: 1-1, EAST: 1-3), line redundancy units 7-1 to 7-s, and a t number of tributary interface sections (6-1 for ch 1, 6-2 for ch 2, 6-t for ch t) for interfacing with the tributary side.

The line redundancy units 7-1 to 7-s include line interface sections (WEST SRV: 2-1-1, WEST PRT: 2-1-2, EAST SRV: 2-1-3, EAST PRT: 2-1-4) for interfacing with the line using a specific wavelength and a line switch section 3 having the same function as that in the twentieth embodiment.

The basic operation of the optical transmission apparatus shown in FIG. 44 will be explained, centering on a path set via the line redundancy unit 7-1.

### [Add Direction]

After the path held in the tributary interface section 6-1 is subjected to a signal form converting process, a signal monitoring process, or a terminating process as needed, the resulting path is outputted to the line redundancy unit 7-1.

The line switch section 3-1 in the line redundancy unit 7-1 connects the path to the line interface section (WEST SRV) 2-1-1 according to the connection setting. The line interface section (WEST SRV) 2-1-1 converts the signal form of the inputted path as needed and outputs the resulting signal of a specific wavelength. The wavelength-division multiplexing and demultiplexing section 1-1 wavelength-multiplexes the signals from the line interface sections for the individual wavelengths and outputs the resulting signal to the transmission line.

In this state, if a failure has occurred in the line interface section (WEST SRV) 2-1-1, the line switch section 3-1 detours the path to the line interface section (WEST PRT) 2-1-2. On the other hand, if a failure has occurred in the WEST-side transmission line or wavelength-division multiplexing and demultiplexing section 1-1, the line switch section 3-1 detours the path to the line interface section (EAST PRT) 2-1-4.

After the path held in the tributary interface section 6-2 is subjected to a signal form converting process, a signal monitoring process, or a terminating process as needed, the resulting signal is connected to the line redundancy unit 7-1.

The line switch section 3-1 in the line redundancy unit 7-1 connects the path to the line interface section (EAST SRV) 2-1-3 according to the connection setting. The line interface section 2-1-3 converts the signal form of the inputted path and outputs the resulting signal of a specific wavelength. The wavelength-division multiplexing and demultiplexing section 1-3 wavelength-multiplexes the signals from the line interface sections for the individual wavelengths and outputs the resulting signal to the transmission line.

In this state, if a failure has occurred in the line interface section (EAST SRV) 2-1-3, the line switch section 3-1 detours the path to the line interface section (EAST PRT) 2-1-4. On the other hand, if a failure has occurred in the EAST-side transmission line or wavelength-division multiplexing and demultiplexing section 1-3, the line switch section 3-1 detours the path to the line interface section (WEST PRT) 2-1-2.

### [Drop Direction]

The wavelength-division multiplex light held in the wavelength-division multiplexing and demultiplexing section 1-1 is demultiplexed in wavelength units and one of the separated signals is inputted to the line interface section (WEST SRV) 2-1-1 in the line redundancy unit 7-1. The line interface section 2-1-1 converts the signal form of the inputted signal as needed and outputs the resulting signal to the transmission line switch section 3-1. The line switch section 3-1 connects the inputted signal to the tributary interface section 6-1 according to the connection setting. The tributary interface section 6-1 converts the signal form of the inputted signal as needed and outputs the resulting signal to an external unit.

In this state, if a failure has occurred in the line interface section (WEST SRV) 2-1-1, the line switch section 3-1 outputs the path detoured via the line interface section (WEST PRT) 2-1-2 to the tributary interface section 6-1. On the other hand, if a failure has occurred in the WEST-side transmission line or wavelength-division multiplexing and demultiplexing section 1-1, the line switch section 3-1 outputs the path detoured via the line interface section (EAST PRT) 2-1-4 to the tributary interface section 6-1.

In FIG. 48, the wavelength-division multiplex signal inputted to the wavelength-division multiplexing and demultiplexing section 1-3 is demultiplexed in wavelength units and one of the separated signals is inputted to the line interface section 2-1-3 in the line redundancy unit 7-1. The line interface section 2-1-3 converts the signal form of the inputted signal as needed and outputs the resulting signal to the transmission line switch section 3-1. The line switch section 3-1 connects the inputted signal to the tributary interface section 6-2 according to the connection setting. The tributary interface section 6-2 converts the signal form of the inputted signal and outputs the resulting signal to an external unit.

In this state, if a failure has occurred in the line interface section (EAST SRV) 2-1-3, the line switch section 3-1 outputs the path detoured via the line interface section (EAST PRT) 2-1-4 to the tributary interface section 6-2. On the other hand, if a failure has occurred in the EAST-side transmission line or wavelength-division multiplexing and demultiplexing section 1-3, the line switch section 3-1 outputs the path detoured via the line interface section (WEST PRT) 2-1-2 to the tributary interface section 6-2.

### [Through Direction]

In FIG. 48, the wavelength-division multiplex signal inputted to the wavelength-division multiplexing and demultiplexing section 1-1 is demultiplexed in wavelength units and one of the split signals is inputted to the line interface section (WEST SRV) 2-1-1 in the line redundancy unit 7-1. The line interface section 2-1-1 converts the signal form of the inputted optical signal as needed and inputs the resulting signal to the line switch section 3-1. The line switch section 3-1 connects the path to the line interface section (EAST SRV) 2-1-3 according to the connection setting. The line interface section 2-1-3 converts the signal form of the inputted path as needed and outputs the resulting signal of a specific wavelength. The wavelength-division multiplexing and demultiplexing section 1-3 wavelength-multiplexes the signals from the line interface sections corresponding to the individual wavelengths and outputs the resulting signal to the transmission line.

Furthermore, the wavelength-division multiplex signal inputted to the wavelength-division multiplexing and demultiplexing section 1-1 is demultiplexed in wavelength units and one of the split signals is inputted to the line interface section (WEST PRT) 2-1-2 in the line redundancy unit 7-1. The line interface section 2-1-2 converts the signal form of the inputted signal as needed and outputs the resulting signal to the transmission line switch section 3-1. The line switch section 3-1 connects the path to the line interface section (EAST PRT) 2-1-4 according to the connection setting. The line interface section 2-1-4 converts the signal form of the inputted path as needed and outputs the resulting signal of a specific wavelength. The wavelength-division multiplexing and demultiplexing section 1-3 wavelength-multiplexes the signals from the line interface sections corresponding to the individual wavelengths and outputs the resulting signal to the transmission line.

In this state, if a failure has occurred in the line interface section (WEST SRV) 2-1-1, the line switch section 3-1 outputs the path detoured via the line interface section (WEST PRT) 2-1-2 to the line interface section (EAST SRV) 2-1-3. On the other hand, if a failure has occurred in the line interface section (EAST SRV) 2-1-3, the line switch section 3-1 detours the path via the line interface section (EAST PRT) 2-1-4.

### [Tributary → Tributary Direction]

In FIG. 48, after the path held in the tributary interface section 6-1 is subjected to a signal form converting process, a signal monitoring process, or a terminating process as needed, the resulting signal is connected to the line redundancy unit 7-1. The line switch section 3-1 in the line redundancy unit 7-1 connects the path to the line interface section (WEST SRV) 2-1-1 according to the connection setting. The line interface section (WEST SRV) 2-1-1 converts the signal form of the inputted path as needed and outputs the resulting signal of a specific wavelength. The wavelength-division multiplexing and demultiplexing section 1-1 wavelength-multiplexes the signals from the line interface sections for the individual wavelengths and outputs the resulting signal to the transmission line.

In this state, if a failure has occurred in the WEST-side or EAST-side transmission line, the wavelength-division multiplexing and demultiplexing section, or the line interface section, the line switch section 3-1 detours the path to the tributary interface section 6-2.

With the thirtieth embodiment, the following effects are produced:
a) Use of the line switch section capable of splitting an optical signal and connecting the split signals enables the path to be detoured quickly in case of failure. Consequently, it is possible to shorten the time during which the pass is interrupted in the case of the switching or revertive switching of the path.
b) Since only one fiber pair is used as each of the WEST-side line and EAST-side line, the cost of the transmission paths can be reduced.

As explained in the above embodiments, the present invention performs control in a wavelength-division multiplexing transmission system in such a manner that not only just switching is done, but switching is also done after the working system and protection system are brought into the Bridge state temporarily in the line switch section for performing protection switching. This way of switching produces the following effects:
1) Since service traffic is transmitted via the protection line before the start of switching, the optical transmission apparatus can check the quality of traffic. This prevents unnecessary switching and revertive switching.
2) When switching is done in the line switch section, the service traffic transmitted via the protection line can be caused to have already been inputted to the line switch section. This enables the duration of instantaneous cutoff of traffic due to switching to be decreased by the value equivalent to the delay time in transmitting the signal via the protection line.
3) When revertive switching is done in recovering from a failure, the service traffic can be inputted to the line switch section from both of the protection line and service line as described in item 2). This enables the duration of instantaneous cutoff of traffic due to revertive switching to be decreased by the value equivalent to the delay time in transmitting the signal via the service line.

Moreover, in the normal state, extra traffic or part-time traffic can be held.

Furthermore, in these embodiments, each of the line interface section and tributary interface section is provided with the function of inserting a specific signal. This prevents the misconnection between service traffic and extra traffic or between service traffic and part-time traffic.

As has been explained above, the embodiments of the present invention make it possible to design the algorithm for protection switching in a wavelength-division multiplexing network in the same manner as in a transmission apparatus that operates on an existing electric interface. Therefore, the self-healing function can be operated more stably. Moreover, the maintainability of the wavelength-division multiplexing network can be improved.

This invention is not limited to the above embodiments.

For instance, while in FIG. 4, a four-fiber ring system has been shown, the application of the optical switching apparatus and optical transmission apparatus according to the present invention is not restricted to this type of system. The optical switching apparatus and optical transmission apparatus according to the present invention may be applied to a two-fiber ring transmission system or a transmission system connected by means of more than four fibers.

Although the ring network where nodes are connected in a ring has been shown in FIG. 4, the present invention is not necessarily limited to the ring form. For instance, the present invention may be applied to a system where a plurality of optical transmission apparatuses are connected linearly via optical transmission lines.

## Claims

1. An optical switching apparatus provided for an optical signal transmitting apparatus (1 to 4) connected to a plurality of optical transmission lines (SL, PL), said optical switching apparatus **characterized by** having means of splitting optical signals arrived via said optical transmission lines into a plurality of sub-signals and sending them to a plurality of optical transmission lines other than the optical transmission lines over which the optical signals came;
and **characterized in that**
said optical switching apparatus forms Point-to-Point connection paths which connect senders of signals and receivers of signals in a one-to-one correspondence, between the optical signal transmitting apparatus in which said optical switching apparatus is provided and another optical signal transmitting apparatus, and **in that** the apparatus comprises
n x m input ports (301 a to 301f) to which optical signals are inputted;
n x m output ports (304a to 304f) for outputting optical signals;
an optical matrix switch (302) including (n + 2) x m input terminals and n x m output terminals; and
a 2m number of optical splitting elements (303a, 303b) which are connected to 2m of the output terminals of the optical matrix switch (302) and which each splits in half the optical signal outputted from the corresponding one of the connected output terminals, wherein
one-side split ends of the optical splitting elements (303a, 303b) are connected to 2m of said input terminals of said optical matrix switch in a one-to-one correspondence and the other-side split ends of said optical splitting elements (303a, 303b) are connected to 2m of said output ports (304a, 304c) in a one-to-one correspondence,
said input ports (301 a to 301 f) are connected to the remaining n x m input terminals of said optical matrix switch in a one-to-one correspondence, and
the remaining (n - 2) x m output terminals of said optical matrix switch are connected to the remaining (n - 2) x m (304b, 304d, 304e, 304f) output ports.

2. The optical switching apparatus according to claim 1, **characterized in that** said input ports and output ports are grouped into an m number of port groups caused to correspond to different wavelengths and an n number of input ports and an n number of output ports belong to each of the port groups.

3. An optical switching apparatus according to claim 1, **characterized by** comprising:
n x m input ports (5b01a to 5b01f) to which optical signals are inputted;
n x m output ports (5b06a to 5b06f) for outputting optical signals;
a 2m number of first optical splitting elements(5b02, 5b03) for each splitting in half the optical signal inputted from the corresponding one of 2m of said input ports;
an optical matrix switch with expansion ports (5b09) each of which includes (n + 2) x m input terminals and an expansion output terminal and n x m output terminals and an expansion input terminal;
a 2m number of second optical splitting elements (5b04, 5b05) which are connected to 2m of said output terminals of the optical matrix switch (5b09) with expansion ports in a one-to-one correspondence and which each split in half the optical signal outputted from the corresponding one of the connected output terminals, wherein
two split ends of said first optical splitting elements (5b02, 5b03) and said input ports (5b01a to 5b01f) are connected to input terminals of said optical matrix switch (5b09) with expansion ports in a one-to-one correspondence,
one-side split ends of said second optical splitting elements (5b04f 5b05) are connected to 2m of the expansion input terminals of said optical matrix switch (5b09) with expansion ports,
the other-side split ends of the second optical splitting elements (5b04, 5b05) are connected to 2m of said output ports, and
the remaining (n - 2) x m of said output terminals of said optical matrix switch (5b09) with expansion ports and the remaining (n - 2) x m of said output ports are connected to each other.

4. The optical switching apparatus according to claim 3, **characterized in that** said input ports and output ports are grouped into an m number of port groups caused to correspond to different wavelengths and an n number of input ports and an n number of output ports belong to each of the port groups.

5. An optical switching apparatus according to claim 1, **characterized by** comprising:
first to sixth input ports (903a to 903f) to which optical signals are inputted;
first to sixth output ports (904a to 904f) for outputting optical signals;
first optical switching means (901 a) which has two output terminals and switches the optical signals from the first port (903a) and the second input port (903b) between its two output terminals;
second optical switching means (901 b) which has two output terminals and selectively outputs the optical signal from one output terminal of said first optical switching means (901 a) at one of its two output terminals;
third optical switching means (901 e) which has two output terminals and switches the optical signals from the third port (903c) and the fourth input port (903d) between its two output terminals;
fourth optical switching means (901f) which has two output terminals and selectively outputs the optical signal from one output terminal of said third optical switching means (901 e) at one of its two output terminals;
fifth optical switching means (901c) which selectively outputs either the optical signal from the other output terminal of said first optical switching means (901 a) or the optical signal from one output terminal of said fourth optical switching means (901f) to the sixth output port (904f);
sixth optical switching means (901 d) which selectively outputs either the optical signal from the other output terminal of said third optical switching means (901e) or the optical signal from one output terminal of said second optical switching means (901 b) to the fifth output port (904e);
a first optical splitting element (902b) which has two output terminals and which splits the optical signal from the sixth input port (903f) and outputs the split signals at its two output terminals;
a second optical splitting element (902c) which has two output terminals and which splits the optical signal from the fifth input port (903e) and outputs the split signals at its two output terminals;
seventh optical switching means (901g) which selectively outputs either the optical signal from the other output terminal of said second optical switching means (901 b) or the optical signal from one output terminal of said first optical splitting element (902b);
eighth optical switching means (901j) which selectively outputs either the optical signal from the other output terminal of said fourth optical switching means (901f) or the optical signal from one output terminal of said second optical splitting element (902c);
a third optical splitting element (902a) which has two output terminals and which splits the optical signal outputted from said seventh optical switching means (901g) and outputs one split optical signal from one of its two output terminal to the third output port (904c) and the other split optical signal at its other output terminal;
ninth optical switching means (901h) which selectively outputs either the optical signal from the other output terminal of the third optical splitting element (902a) or the optical signal from the other output terminal of said second optical splitting element (902c) to the fourth output port (904d);
a fourth optical splitting element (902d) which has two output terminals and which splits the optical signal outputted from said eighth optical switching means (901j) and outputs one split optical signal from one of its two output terminal to the first output port (904a) and the other split optical signal at its other output terminal; and
tenth optical switching means (901 i) which selectively outputs either the optical signal from the other output terminal of the fourth optical splitting element (902d) or the optical signal from the other output terminal of said first optical splitting element (902b) to the second output port (904b).

6. An optical switching apparatus provided for an optical signal transmitting apparatus (1 to 4) connected to a plurality of optical transmission lines (SL, PL), said optical switching apparatus **characterized by** having means of splitting optical signals arrived via said optical transmission lines into a plurality of sub-signals and sending them to a plurality of optical transmission lines other than the optical transmission lines over which the optical signals came;
and **characterized in that**
said optical switching apparatus forms Point-to-Multi-point connection paths which connect a plurality of receivers of signals to a sender of an optical signal, between the optical signal transmitting apparatus in which said optical switching apparatus is provided and another optical signal transmitting apparatus, and **in that** the apparatus comprises
n x m input ports (1201a to 1201f) to which optical signals are inputted;
n x m output ports (1205a to 1205f) for outputting optical signals;
n x m first optical splitting elements (1202a to 1202f) each of which splits in half the optical signal inputted from the corresponding one of said input ports (1201a to 1201f);
an optical matrix switch (1203) including (2 x n + 2) x m input terminals and n x m output terminals; and
a 2m number of second optical splitting elements (1204a, 1204b) which are connected to 2m of the output terminals of the optical matrix switch (1203) in a one-to-one correspondence and each of which splits in half the optical signal outputted from the corresponding one of the connected output terminals, wherein
the split ends of said first optical splitting elements (1202a to 1202f) are inputted to 2 x n x m input terminals of said optical matrix switch (1203) in a one-to-one correspondence,
the remaining 2 x m input terminals of the optical matrix switch (1203) are connected to one-side split ends of said second optical splitting elements (1204a, 1204b),
the other-side split ends of the second optical splitting elements (1204a, 1204b) are connected to 2m of said output ports in a one-to-one correspondence, and
the remaining (n - 2) x m output terminals of said optical matrix switch (1203) are connected to the remaining (n - 2) x 4 of said output ports.

7. The optical switching apparatus according to claim 6, **characterized in that** said input ports and output ports are grouped into an m number of port groups caused to correspond to different wavelengths and an n number of input ports and an n number of output ports belong to each of the port groups.

8. An optical switching apparatus according to claim 6, **characterized by** comprising:
a 6m number of input ports (1401a to 1401f) to which optical signals are inputted;
a 6m number of output ports (1405a to 1405f) for outputting optical signals;
a 6m number of optical splitting elements (1402a to 1402f) each of which splits in half the optical signal inputted from the corresponding one of said input ports (1401a to 1401f);
a first optical matrix switch (1403a) including a 10m number of input terminals and a 4m number of output terminals;
a second optical matrix switch (1403b) including a 4m number of input terminals to which one-side ends of 4m of said first optical splitting elements are connected in a one-to-one correspondence and a 2m number of output terminals connected to 2m of said output ports in a one-to-one correspondence; and
a 2m number of second optical splitting elements (1404a, 1404b) which are connected to 2m of the output terminals of said first optical matrix switch (1403a) and each of which splits in half the optical signal outputted from the corresponding one of the connected output terminals, wherein
the other-side split ends of 4m of said first optical splitting elements and the two split ends of the remaining 2m ones of said first optical splitting elements are connected to 8m of the input terminals of said first matrix switch (1403a) in a one-to-one correspondence,
one-side split ends of said second optical splitting elements are connected to the remaining 2m input terminals of said first matrix switch (1403a), and
the remaining 2m output terminals of said first matrix switch (1403a) and the other-side split ends of said second optical splitting elements are connected to the remaining 4m ones of said output ports in a one-to one correspondence.

9. The optical switching apparatus according to claim 8, **characterized in that** said input ports and output ports are grouped into an m number of port groups caused to correspond to different wavelengths and six input ports and six output ports belong to each of the port groups.

10. An optical switching apparatus according to claim 6, **characterized by** comprising:
a 6m number of input ports (1601a to 1601f) to which optical signals are inputted;
a 6m number of output ports (1605a to 1605f) for outputting optical signals;
a 6m number of optical splitting elements (1602a to 1602f) each of which splits in half the optical signal inputted from the corresponding one of said input ports;
a first optical matrix switch (1603a) including an 8m number of input terminals and a 4m number of output terminals;
a second optical matrix switch (1603b) including a 6m number of input terminals and a 4m number of output terminals; and
a 2m number of optical coupler splitters (1604a, 1604b) each of which has two input terminals and two output terminals and which couples the optical signals inputted from its two input terminals and then splits the coupled signal and outputs the split signals at its two output terminals, wherein
one-side split ends of said 6m optical splitting elements (1602a to 1602f) are connected to 6m of the input terminals of said first optical matrix switch (1603a) and the other-side split ends of the optical splitting elements (1602a to 1602f) are connected to 6m input terminals of said second optical matrix switch,
2m of the output terminals of said second optical matrix switch (1603b) are connected to 2m of said output ports,
the remaining 2m of the output terminals of said second optical matrix switch (1603b) are connected to one-side input terminals of said optical coupler splitters (1604a, 1604b) in a one-to-one correspondence,
2m of the output terminals of said first optical matrix switch (1603a) are connected to the remaining 2m of said output ports,
the remaining 2m output terminals of the first optical matrix switch (1603a) are connected to the other-side input terminals of said optical coupler splitters (1604a, 1604b) in a one-to-one correspondence,
one-side output terminals of said optical coupler splitters (1604a, 1604b) are connected to the remaining 2m input terminals of said first optical matrix switch (1603a), and
the other-side output terminals of the optical coupler splitters (1604a, 1604b) are connected to the remaining 2m of said output port.

11. The optical switching apparatus according to claim 10, **characterized in that** said input ports and output ports are grouped into an m number of port groups caused to correspond to different wavelengths and six input ports and six output ports belong to each of the port groups.

12. An optical switching apparatus according to claim 6, **characterized by** comprising:
a 6m number of input ports (1801a to 1801f) to which optical signals are inputted;
a 6m number of output ports (1802a to 1802f) for outputting optical signals;
n x m first optical splitting elements (1803a to 1803f) each of which splits in half the optical signal inputted from the corresponding one of said input ports (1801a to 1801f);
an optical matrix switch with expansion ports (1805) each of which includes a 10m number of input terminals and an expansion output terminal and a 6m number of output terminals and an expansion input terminal; and
a 2m number of second optical splitting elements (1803g, 1803h) which are connected to 2m of said expansion output terminals of said optical matrix switch (1805) with expansion ports and each of which splits in half the optical signal outputted from the corresponding one of the connected output terminals, wherein
two split ends of 4m of said first optical splitting elements and one-side split ends of the remaining 2m first optical splitting elements are connected to input terminals of said optical matrix switch (1805),
the other-side split ends of said remaining 2m first optical splitting elements are connected to 2m of said expansion input terminals,
one-side split ends of said second optical splitting elements are connected to the remaining 2m expansion input terminals, and
the remaining 4m output terminals of said optical matrix switch (1805) and the other-side split ends of said second optical splitting elements are connected to said output ports in a one-to-one correspondence.

13. The optical switching apparatus according to claim 12, **characterized in that** said input ports and output ports are grouped into an m number of port groups caused to correspond to different wavelengths and six input ports and six output ports belong to each of the port groups.

14. An optical switching apparatus according to claim 6, **characterized by** comprising:
first to sixth input ports (2203a to 2203f) to which optical signals are inputted;
first to sixth output ports (2204a to 2204f) for outputting optical signals;
first optical switching means (2201 a) which has two output terminals and switches the optical signals from the first port (2203a) and the second input port (2203b) between its two output terminals;
a first optical splitting element (2202a) which has two output terminals and which splits the optical signal from one output terminal of said first optical switching means (2201 a) and outputs the split signals at its two output terminals;
second optical switching means (2201d) which has two output terminals and switches the optical signals from the third input port (2203c) and the fourth input port (2203d) between its two output terminals;
a second optical splitting element (2202b) which has two output terminals and which splits the optical signal from one output terminal of said second optical switching means (2201d) and outputs the split signals at its two output terminals;
third optical switching means (2201 b) which selectively outputs either the optical signal from the other output terminal of said first optical switching means (2201a) or the optical signal from one output terminal of said second optical splitting element (2202b) to the sixth output port (2204f);
fourth optical switching means (2201c) which selectively outputs either the optical signal from the other output terminal of said second optical switching means (2201d) or the optical signal from one output terminal of said first optical splitting element (2202a) to the fifth output port (2204e);
a third optical splitting element (2202d) which has two output terminals and which splits the optical signal from the sixth input port (2203f) and outputs the split signals at its two output terminals;
a fourth optical splitting element (2202e) which has two output terminals and which splits the optical signal from the fifth input port (2203e) and outputs the split signals at its two output terminals;
fifth optical switching means (2201 g) which has two output terminals and which switches the optical signals from one output terminal of said third optical splitting element (2202d) and from one output terminal of said fourth optical splitting element (2202e) between its two output terminals;
sixth optical switching means (2201 h) which has two output terminals and which switches the optical signals from the other output terminal of said third optical splitting element (2202d) and from the other output terminal of said fourth optical splitting element (2202e) between its two output terminals;
seventh optical switching means (2201e) which selectively outputs either the optical signal from the other output terminal of said first optical switching means (2202a) or the optical signal from one output terminal of said fifth optical switching means (2201g);
a fifth optical splitting element (2202c) which has two output terminals and which splits the optical signal outputted from said seventh optical switching means (2201 e) and outputs one split optical signal from one of its two output terminals to the third output port (2204c) and the other split optical signal at its other output terminal;
eighth optical switching means (2201f) which selectively outputs either the optical signal from the other output terminal of said fifth optical splitting element (2202c) or the optical signal from the other output terminal of said fifth optical switching means (2201g) to the fourth output port (2204d) ;
ninth optical switching means (2201 i) which selectively outputs either the optical signal from the other output terminal of said second optical splitting element (2202b) or the optical signal from one output terminal of said sixth optical switching means (2201h);
a sixth optical splitting element (2202f) which has two output terminals and which splits the optical signal outputted from said ninth optical switching means (2201 i) and outputs one split optical signal from one of its two output terminals to the first output port (2204a) and the other split optical signal at its other output terminal; and
tenth optical switching means (2201j) which selectively outputs either the optical signal from the other output terminal of said sixth optical splitting element (2202f) or the optical signal from the other output terminal of said sixth optical switching means (2201 h) to the second output port (2204b).

## Patentansprüche

1. Optische Vermittlungsvorrichtung, die für eine optische Signalübertragungsvorrichtung (1 bis 4) vorgesehen ist, mit einer Mehrzahl optischer Übertragungsleitungen (SL, PL) verbunden, wobei die optische Vermittlungsvorrichtung **dadurch gekennzeichnet ist, dass** sie Mittel zum Aufteilen optischer Signale besitzt, die über die optischen Übertragungsleitungen ankommen, In eine Mehrzahl von Untersignalen und zum Senden derselben an eine Mehrzahl optischer Übertragungsleitungen, die sich von den optischen Übertragungsieltungen unterscheiden, über welche die optischen Signale kamen,
und **dadurch gekennzeichnet, dass**
die optische Vermittlungsvorrichtung Punkt-zu-Punkt-Verbindungswege, welche die Sender der Signale und die Empfänger der Signale In einer eindeutigen Beziehung verbinden, zwischen der optischen Signalübertragungsvorrichtung, in der die optische Vermittlungsvorrichtung vorgesehen ist, und einer weiteren optischen Signalübertragungsvorrichtung bildet, wobei die Vorrichtung n x m Eingangsschnittstellen (301a bis 301f), denen optische Signale eingegeben werden;
n x m Ausgangsschnittstellen (304a bis 304f) zum Ausgeben optischer Signale;
einen optischen Matrixschalter (302) mit (n + 2) x m Einganganschlüssen und n x m Ausgangsanschlüssen; und
2m optische Aufteilelemente (303a, 303b) umfasst, die mit 2m Ausgangsanschlüssen des optischen Matrixschalters (302) verbunden sind und die jeweils das optische Signal hälftig aufteilen, das von dem entsprechenden Ausgangsanschluss ausgegeben wird, wobei die aufgeteilten Enden der einen Seite der optischen Aufteilelemente (303a, 303b) mit 2m der Eingangsanschlüsse des optischen Matrixschalters in einer eindeutigen Beziehung verbunden sind und die aufgeteilten Enden der anderen Seite der optischen Aufteilelemente (303a, 303b) mit 2m der Ausgangsschnittstellen (304a, 304c) in einer eindeutigen Beziehung verbunden sind,
wobei die Eingangsschnittstellen (301a bis 301f) mit den verbleibenden n x m Eingangsanschlüssen des optischen Matrixschalters in einer eindeutigen Beziehung verbunden sind, und
die verbleibenden (n - 2) x m Ausgangsanschlüsse des optischen Matrixschalters mit den verbleibenden (n - 2) x m (304b, 304d, 304e, 304f) Ausgangsschnittstellen verbunden sind.

2. Optische Vermittlungsvorrichtung nach Anspruch 1, **dadurch gekennzeichnet, dass** die Eingangsschnittstellen und die Ausgangsschnittstellen in m Schnittstellengruppen gruppiert sind, die darauf basieren, dass sie unterschiedlichen Wellenlängen entsprechen und n Eingangsschnittstellen und n Ausgangsschnittstellen gehören zu jeder der Schnittstellengruppen.

3. Optische Vermittlungsvorrichtung nach Anspruch 1, **dadurch gekennzeichnet, dass** sie umfasst:
n x m Eingangsschnittstellen (5b01a bis 5b01f), denen optische Signale eingegeben werden;
n x m Ausgangsschnittstellen (5b06a bis 5b06f) zum Ausgeben optischer Signale;
2m erste optische Aufteilelemente (5b02, 5b03), wobei jedes das eingegebene optische Signal hälftig aufteilt, das von den entsprechenden der 2m Eingangsschnittstellen eingegeben wird;
einen optischen Matrixschalter mit Erweiterungsschhittstellen (5b09), wobei jede (n + 2) x m Eingangsanschlüsse und einen Erweiterungsausgangsanschluss und n x m Ausgangsanschlüsse und einen Erweiterungmingangsanschluss aufweist;
2m zweite optische Aufteilelemente (5b04, 5b05), die mit 2m der Ausgangsanschlüsse des optischen Matrixschalters (5b09) mit Erweiterungsschnittstellen in einer eindeutigen Beziehung verbunden sind und die jeweils das optische Signal hälftig aufteilen, das von den entsprechenden verbundenen Ausgangsanschlüssen ausgegeben wird, wobei die aufgetellten Enden der ersten optischen Aufteilelemente (5b02, 5b03) und die Eingangsschnittstellen (5b01a bis 5b01f) mit den Eingangsanschlüssen des optischen Matrixschalters (5b09) mit Erweiterungsschnittstellen in einer eindeutigen Beziehung verbunden sind, zwei aufgeteilte Enden der ersten optischen Auftellelemente (5b02, 5b03) und die Eingangschnittstellen (5b01a bis 5b01f) mit den Eingangsanschlüssen des optischen Matrixschalters (5b09) mit Erwelterungsschnittstellen In einer eindeutigen Beziehung verbunden sind, aufgeteilte Enden in der einen Seite der zweiten optischen Aufteilelemente (5b04f, 5b05) mit 2m Erweiterungseingangsanschlüssen des optischen Matrixschalters (5b09) mit Erweiterungsschnittstellen verbunden sind, die aufgeteilten Enden der anderen Seite der zweiten optischen Aufteilelemente (5b04, 5b05) mit 2m Ausgangsschnittstellen verbunden sind, und die verbleibenden (n - 2) x m der Ausgangsanschlüsse des optischen Matrixschalters (5b09) mit Erweiterungsschnittstellen und die verbleibenden (n - 2) x m der Ausgangsschnittstellen miteinander verbunden sind.

4. Optische Vermittlungsvorrichtung nach Anspruch 3, **dadurch gekennzeichnet, dass** die Eingangsschnittstellen und die Ausgangsschnittstellen in m Schnittstellengruppen gruppiert sind, die darauf basieren, dass sie verschiedenen Wellenlängen entsprechen und n Eingangsechnittstellen und n Ausgangsschnittstellen gehören jeweils zu den Schnittsteilengruppen.

5. Optische Vermittlungsvorrichtung nach Anspruch 1, **dadurch gekennzeichnet, dass** sie umfasst:
erste bis sechste Eingangsschnittstellen (903a bis 903f), denen optische Signale eingegeben werden;
erste bis sechste Ausgangsschnittstellen (904a bis 904f) zum Ausgeben optischer Signale;
ein erstes optisches Vermittlungsmittel (901a), das zwei Ausgangsanschlüsse aufweist und die optischen Signale von der ersten Schnittstelle (903a) und der zweiten Eingangsschnittstelle (903b) zwischen seinen zwei Ausgangsanschlüssen vermittelt;
ein zweites optisches Vermittlungsmittel (901b), das zwei Ausgangsanschlüsse aufweist und selektiv das optische Signal von dem einen Ausgangsanschluss des ersten optischen Vermittlungsmittels (901a) an einem seiner zwei Ausgangsanschlüsse ausgibt;
ein drittes optisches Vermittlungsmittel (901e), das zwei Ausgangsanschlüsse aufweist und die optischen Signale von der ersten Schnittstelle (903c) und der vierten Eingangsschnittstelle (903d) zwischen seinen zwei Ausgangsanschlüssen vermittelt;
ein viertes optisches Vermittlungsmittel (901f), das zwei optische Ausgangsanschlüsse aufweist und selektiv das optische Signal von dem einen Ausgangsanschluss des dritten optischen Vermittlungsmittels (901e) an einem seiner zwei Ausgangsanschlüsse ausgibt;
ein fünftes optisches Vermittlungsmittel (901c), das selektiv entweder das optische Signal von dem anderen Ausgangsanschluss des ersten optischen Vermittlungsmittels (901a) oder das optische Signal von dem einen Ausgangsanschluss des vierten optischen Vermittlungsmittels (901f) der sechsten Ausgangsschnitistelle (904f) ausgibt;
ein sechstes optisches Vermittlungsmittel (901d), das selektiv entweder das optische Signal von dem anderen Ausgangsanschluss des dritten optischen Vermittlungsmittels (901e) oder das optische Signal von einem Ausgangssignal des zweiten optischen Vermittlungsmittels (901b) der fünften Ausgangsschnittstelle (904e) ausgibt;
ein erstes optisches Aufteilelement (902b), das zwei Ausgangsanschlüsse besitzt und welches das optische Signal von der sechsten Eingangsschnittstelle (903f) aufteilt und die aufgeteilten Signale an seinen zwei Ausgangsanschlüssen ausgibt;
ein zweites optisches Aufteilelement (902c), das zwei Ausgangsnnschlüsse aufweist und welches das optische Signal von der fünften Eingangsschnittstelle (903e) aufteilt und die aufgeteilten Signale an seinen zwei Ausgangsanschlussen ausgibt;
ein siebtes optisches Vermittlungsmittel (901g), das selektiv entweder das optische Signal von dem anderen Ausgangsanschluss des zweiten optischen Vermittlungsmittels (901b) oder das optische Signal von einem Ausgangsanschluss des ersten optischen Aufteilelements (902b) ausgibt;
ein achtes optisches Vermittlungsmittel (901j), das selektiv entweder das optische Signal von dem anderen Ausgangsanschluss des vierten optischen Vermittlungsmittels (901f) oder das optische Signal von einem Ausgangsanschluss des zweiten optischen Aufteilelements (902c) ausgibt;
ein drittes optisches Aufteilelement (902a), das zwei Ausgangsanschlüsse aufweist und welches das optische Signal aufteilt, das von dem siebten optischen Vermittlungsmittel (901g) ausgegeben wird und welches ein aufgeteiltes optisches Signal von einem seiner zwei Ausgangsanschlüsse der dritten Ausgangsschnittstelle (904c) und das andere aufgeteilte optische Signal an seinem anderen Ausgangsanschluss ausgibt;
ein neuntes optisches Vermittlungsmittel (901h), das selektiv entweder das optische Signal von dem anderen Ausgangsanschluss des dritten optischen Aufteilelements (902a) oder das optische Signal von dem anderen Ausgangsanschluss des zweiten optischen Aufteilelements (902c) der vierten Ausgangsschnittstelle (904d) ausgibt;
ein viertes optisches Aufteilelement (902d), das zwei Ausgangsanschlüsse aufweist und welches das optische Signal aufteilt, das von dem achten optischen Vermittlungsmittel (901j) ausgegeben wird und welches ein aufgeteiltes optisches Signal von einem seiner zwei Ausgangsanschlüsse der ersten Ausgangsschnittstelle (904a) und das andere aufgeteilte optische Signal an seinen anderen Ausgangsanschluss ausgibt; und
ein zehntes optisches Vermittlungsmittel (901i), das selektiv entweder das optische Signal von dem anderen Ausgangsanschluss des vierten optischen Vermittlungselements (902d) oder das optische Signal von dem anderen Ausgangsanschluss des ersten optischen Aufteilelements (902b) der zweiten Ausgangsschnittstelle (904b) ausgibt.

6. Optische Vermittlungsvorrichtung, die für eine optische Signalübertragungsvorrichtung (1 bis 4) vorgesehen ist, die an eine Mehrzahl optischer Übertragungsleitungen (SL, PL) verbunden ist, wobei die optische Vermittlungseinrichtung **dadurch gekennzeichnet ist, dass** sie Mittel zum Aufteilen optischer Signale aufweist, die über die optischen Übertragungsleitungen ankommen, in eine Mehrzahl von Untersignalen und zum Senden derselben an eine Mehrzahl optischer Übertragungsleitungen, die sich von den optischen Übertragungsleitungen unterscheiden, Ober welche die optischen Signale kamen,
und **dadurch gekennzeichnet, dass**
die optische Vermittlungsvorrichtung Punkt-zu Mehrfachpunktverbindungswege, die eine Mehrzahl von Signalempfängern mit einem Sender eines optischen Signals verbinden, zwischen der optischen Signalübertragungsvorrichtung, in welcher die optische Vermittlungsvorrichtung vorgesehen ist, und einer weiteren optischen Signalübertragungsvorrichtung bildet, und dadurch, dass die Vorrichtung umfasst
n x m Eingangsschnittstellen (1201a bis 1201f), denen optische Signale eingegeben werden;
n x m Ausgangsschnittstellen (1205a bis 1205f) zum Ausgeben optischer Signale;
n x m erste optische Aufteilelemente (1202a bis 1202f), wobei jedes das optische Signal hälftig aufteilt, das von einer der entsprechenden Eingabeschnittstellen (1201a bis 1201f) eingegeben wird;
ein optischer Matrixschalter (1203), der (2 x n + 2) x m Eingangsanschlüsse und n x m Ausgangsanschlüsse aufweist; und
2m zweite optische Aufteilemente (1204a, 1204b), die mit 2m der Ausgangsanschlüsse des optischen Matrixschalters (1203) in einer eindeutigen Beziehung verbunden sind und wobei jeder derselben das optische Signal hälftig aufteilt, das von einem der entsprechenden Ausgangsanschlüsse ausgegeben wird, wobei die einen aufgeteilten Enden des ersten optischen Aufteilelements (1202a bis 1202f) 2 x n x m Eingangsanschlüssen des optischen Matrixschalters (1203) in einer eindeutigen Beziehung eingegeben werden,
die verbleibenden 2 x m Eingangsanschlüsse des optischen Matrixschalters (1203) mit einer Seite der aufgeteilten Enden des zweiten optischen Aufteilelements (1204a, 1204b) verbunden sind,
die anderen aufgeteilten Enden des zweiten optischen Aufteilelements (1204a, 1204b) mit 2m der Ausgangsanschlüsse in einer eindeutigen Beziehung verbunden sind, und
die verbleibenden (n - 2) x m Ausgangsanschlüsse des optischen Matrixschalters (1203) mit den verbleibenden (n - 2) x 4 der Ausgangsschnittstellen verbunden sind.

7. Optische Vermittlungsvorrichtung nach Anspruch 6; **dadurch gekennzeichnet, dass** die Eingangsschnittstellen und Ausgangsschnittstellen in m Schnittstellengruppen gruppiert sind, die darauf basieren, dass sie unterschiedlichen Wellenlängen entsprechen und n der Eingangsschnittstellen und n der Ausgangsschnittstellen jeweils zu den Schnittstellengruppen gehören.

8. Optische Vermittlungsvorrichtung nach Anspruch 6, **dadurch gekennzeichnet, dass** sie umfasst:
6m Eingangsschnittstellen (1401a bis 1401f), denen optische Signale eingegeben werden;
6m Ausgangsschnittstellen (1405a bis 1405f) zum Ausgeben optischer Signale;
6m optische Aufteilelemente (1402a bis 1402f), wobei jedes derselben das optische Signal hälftig aufteilt, das von einer der entsprechenden Eingangsschnittstellen (1401a bis 1401f) eingegeben wurde;
ein erster optischer Matrixschalter (1403a), der 10m Eingangsanschlüsse und 4m Ausgangsanschlüsse aufweist;
ein zweiter optischer Matrixschalter (1403b), der 4m Eingangsanschlüsse aufweist, mit dem die einen Enden von 4m ersten optischen Aufteilelementen in einer eindeutigen Beziehung verbunden sind und 2m Ausgangsanschlüsse mit 2m Ausgangsschnittstellen in einer eindeutigen Beziehung verbunden sind; und
2m zweite optische Aufteilelemente (1404a, 1404b), die mit 2m Ausgangsschnittstellen des ersten optischen Matrixschalters (1403a) verbunden sind und wobei jeder derselben das optische Signal hälftig aufteilt, das von einem der entsprechend verbundenen Ausgangsanschlüsse ausgegeben wird, wobei
die aufgeteilten Enden der einen Seite der 4m ersten optischen Aufteilelemente und die zwei aufgeteilten Enden der verbleibenden 2m ersten optischen Aufteilelemente mit 8m Eingangsanschlüssen des ernsten Matrixschalters (1403a) in einer eindeutigen Beziehung verbunden sind,
die aufgeteilten Enden der einen Seite der zweiten optischen Aufteilelemente mit den verbleibenden 2m Eingangsanschlüssen des ersten Matrixschalters (1403a) verbunden sind, und
die verbleibenden 2m Ausgangsanschlüsse des ersten Matrixschalters (1403a) und die der aufgeteilten Enden der anderen Seite der zweiten optischen Aufteilelemente mit den verbleibenden 4m Ausgangsschnittstellen in einer eindeutigen Beziehung verbunden sind.

9. Optische Vermittlungsvorrichtung nach Anspruch 8, **dadurch gekennzeichnet, dass** die Eingangsschnittstellen und Ausgangsschnittstellen in m Schnittstellengruppen gruppiert sind, die darauf basieren, dass sie verschiedenen Wellenlängen entsprechen und sechs Eingangsschnittstellen an sechs Ausgangsschnittstellen zu jeder der Schnittstellengruppe gehören.

10. Optische Vermittlungsvorrichtung nach Anspruch 6, **dadurch gekennzeichnet, dass** sie umfasst:
6m Eingangsschnittstellen (1601a bis 1601f), denen optische Signale eingegeben werden;
6m Ausgangsschnittstellen (1605a bis 1605f) zum Ausgeben optischer Signale;
6m optische Aufteilelemente (1602a bis 1602f), wobei jedes derselben das optische Signal hälftig aufteilt, das von der entsprechenden Eingangsschnittstelle eingegeben wird;
einen ersten optischen Matrixschalter (1603a), der 8m Eingangsanschlüsse und 4m Ausgangsanschlüsse aufweist;
ein zweiter optischer Matrixschalter (1603b), der 6m Eingangsanschlüsse und 4m Ausgangsanschlüsse aufweist; und
2m optische Kopplungsaufteiler (1604a, 1604b), wobei jeder derselben zwei Eingangsanschlüsse und zwei Ausgangsanschlüsse besitzt und der die optischen Signale, die von seinen zwei Einganganschlüssen eingegeben werden, koppelt und dann das gekoppelte Signal aufteilt und die aufgeteilten Signale an zwei Ausgangsanschlüssen ausgibt, wobei die aufgeteilten Enden der einen Seite der 6m optischen Aufteilelemente (1602a bis 1602f) mit 6m der Eingangsanschlüsse des ersten optischen Matrixschalters (1603a) verbunden sind und die aufgeteilten Enden der anderen Seite der optischen Aufteilelemente (1602a bis 1602f) mit 6m Eingangsanschlüssen des zweiten optischen Matrixschalters verbunden sind, 2m der Ausgangsanschlüsse des zweiten optischen Matrixschalters (1603b) mit 2m Ausgangsschnittstellen verbunden sind,
die verbleibenden 2m Ausgangsanschlüsse des zweiten optischen Matrixschalters (1603b) mit Eingangsanschlüssen einer Seite des optischen Kopplungsaufteilers (1604a, 1604b) in einer eindeutigen Beziehung verbunden sind,
2m der Ausgangsanschlüsse des ersten optischen Matrixschalters (1603a) mit den verbleibenden 2m Ausgangsschnittstellen verbunden sind,
die verbleibenden 2m Ausgangsänschlüsse des ersten optischen Matrixschalters (1603a) mit den Eingangsanschlüssen der anderen Seite des optischen Kopplungsaufteilers (1604a, 1604b) in einer eindeutigen Beziehung verbunden sind,
Ausgangsanschlüsse der einen Seite des optischen Kopplungsauftellers (1604a, 1604b) mit den verbleibenden 2m Eingangsanschlüssen des ersten optischen Matrixschalters (1603a) verbunden sind, und
die Ausgangsanschlüsse der anderen Seite des optischen Kopplungsauftellers (1604a, 1604b) mit den verbleibenden 2m der Ausgangsschnittstelle verbunden sind.

11. Optische Vermittlungsvorrichtung nach Anspruch 10, **dadurch gekennzeichnet, dass** die Eingangsschnittstellen und die Ausgangsschnittstellen in m Schnittstellengruppen gruppiert sind, die darauf basieren, dass sie unterschiedlichen Wellenlängen entsprechen und sechs Eingangsschnittstellen und sechs Ausgangsschnittstellen jeweils zu den Schnittstellengruppen gehören.

12. Optische Vermittlungsvorrichtung nach Anspruch 6, **dadurch gekennzeichnet, dass** sie umfasst:
6m Eingangsschnittstellen (1801a bis 1801f), denen optische Signale eingegeben werden;
6m Ausgangsschnittstellen (1802a bis 1802f) zum Ausgeben optischer Signale;
n x m erste optische Aufteilelemente (1803a bis 1803f), wobei jedes derselben das optische Signal hälftig aufteilt, das von einer der entsprechenden Eingangsschnittstellen (1801a bis 1801f) eingegeben wird;
einen optischen Matrixschalter mit weiteren Schnittstellen (1805), wobei jede derselben 10m Eingangsanschlüsse und einen Erweiterungsausgangsanschluss und 6m Ausgangsanschlüsse und einen Erweiterungseingangsanschluss aufweist; und
2m zweite optische Aufteilelemente (1803g, 1803h), die mit 2m der Erweiterungsausgangsanschlüsse des optischen Matrixschalters (1805) mit Erwelterungsanschlüssen verbunden sind und wobei jedes derselben das optische Signal hälftig aufteilt, das von einem der entsprechenden verbundenen Ausgangsanschlüsse ausgegeben wird, wobei zwei aufgeteilte Enden der 4m ersten optischen Aufteilelemente und
aufgeteilte Enden der einen Seite der verbleibenden 2m ersten optischen Aufteilelemente mit Eingangsanschlüssen des optischen Matrixschalters (1805) verbunden sind,
die aufgeteilten Enden der anderen Seite der verbleibenden 2m ersten optischen Aufteilelemente mit 2m der Erwelterungseingangsanschlüsse verbunden sind,
die aufgeteilten Enden der einen Seite der zweiten optischen Aufteilelemente mit den verbleibenden 2m Erweiterungseingangsanschlüssen verbunden sind, und
die verbleibenden 4m Ausgangsanschlüsse des optischen Matrixschalters (1805) und die aufgeteilten Enden der anderen Seite der zweiten optischen Aufteilelemente mit den Ausgangsschnittstellen in einer eindeutigen Beziehung verbunden sind.

13. Optische Vermittlungsvorrichtung nach Anspruch 12, **dadurch gekennzeichnet, dass** die Eingangsschnittstellen und die Ausgangsschnittstellen in m Schnittstellengruppen gruppiert sind, die darauf basieren, dass sie unterschiedlichen Wellenlängen entsprechen und sechs Eingangsschnittstellen und sechs Ausgangsschnittstellen jeweils zu den Schnittstellengruppen gehören.

14. Optische Vermittlungsvorrichtung nach Anspruch 6, **dadurch gekennzeichnet, dass** sie umfasst:
erste bis sechste Eingangsschnittstellen (2203a bis 2203f), denen optische Signale eingegeben werden;
erste bis sechste Ausgangsschnittstellen (2204a bis 2204f) zum Ausgeben optischer Signale;
ein erstes optisches Vermittlungsmittel (2201a), das zwei Ausgangsschnittstellen aufweist und welches die optischen Signale von der ersten Schnittstelle (2203a) und der zweiten Eingangsschnittstelle (2203b) zwischen seinen zwei Ausgangsschnittstellen vermittelt;
ein erstes optisches Aufteilelement (2202a), das zwei Ausgangsschnittstellen aufweist und welches das optische Signal von einem Ausgangsanschluss des ersten optischen Vermittlungsmittels (2201a) aufteilt und die aufgeteilten Signale an seinen zwei Ausgangsanschlüssen ausgibt;
ein zweites optisches Vermittlungsmittel (2201d), das zwei Ausgangsanschlüsse aufweist und welches die optischen Signale von der dritten Eingangsschnittstelle (2203c) und der vierten Eingangsschnittstelle (2203d) zwischen seinen zwei Ausgangsanschlüssen vermittelt;
ein zweites optisches Aufteilelement (2202b), das zwei Ausgangsanschlüsse aufweist und welches das optische Signal von einem Ausgangsanschluss des zweiten optischen Vermittlungsmittels (2201d) aufteilt und die aufgeteilten Signale an seinen zwei Ausgangsanschlüssen ausgibt;
ein drittes optisches Vermittlungsmittel (2201b), welches selektiv entweder das optische Signal von dem anderen Ausgangsanschluss des ersten optischen Vermittlungsmittels (2201a) oder das optische Signal von einem Ausgangsanschluss des zweiten optischen Aufteilelements (2202b) der sechsten Ausgangsschnittstelle (2204f) ausgibt;
ein viertes optisches Vermittlungsmittel (2201c), das selektiv entweder das optische Signal von dem anderen Ausgangsanschluss des zweiten optischen Vermittlungsmittels (2201d) oder das optische Signal von einem Ausgangsanschluss des ersten optischen Aufteilelements (2202a) der fünften Ausgangsschnittstelle (2204e) ausgibt;
ein drittes optisches Aufteilelement (2202d), das zwei Ausgangsanschlüsse aufweist und welches das optische Signal von der sechsten Eingangsschnittstelle (2203f) aufteilt und die aufgeteilten Signale an seinen zwei Ausgangsanschlüssen ausgibt;
ein viertes optisches Aufteilelement (2202e), das zwei Ausgangsanschlüsse aufweist und welches das optische Signal von der fünften Eingangsschnittstelle (2203e) aufteilt und die aufgeteilten Signale an seinen zwei Ausgangsanschlüssen ausgibt;
ein fünftes optisches Vermittlungsmittel (2201g), das zwei Ausgangsanschlüsse aufweist und welches die optischen Signale von einem Ausgangsanschluss des dritten optischen Aufteilelements (2202d) und von einem Ausgangsanschluss des vierten optischen Aufteilelements (2202e) zwischen seinen zwei Ausgangsanschlüssen vermittelt;
ein sechstes optisches Vermittlungsmittel (2201h), das zwei Ausgangsanschlüsse aufweist und welches die optischen Signale von dem einen Ausgangsanschluss des dritten optischen Aufteilelements (2202d) und von dem anderen Ausgangsanschluss des vierten optischen Aufteilelements (2202e) zwischen seinen zwei Ausgangsanschlüssen vermittelt;
ein siebtes optisches Vermittlungsmittel (2201e), das selektiv entweder das optische Signal von dem anderen Ausgangsanschluss des ersten optischen Vermittlungsmittels (2202a) oder das optische Signal von einem Ausgangsanschluss des fünften optischen Vermittlungsmittels (2201g) ausgibt;
ein fünftes optisches Aufteilelement (2202c), das zwei Ausgangsanschlüsse aufweist und welches das optische Signal aufteilt, das von dem siebten optischen Vermittlungsmittel (2201e) ausgegeben wird und ein aufgeteiltes optisches Signal von einem seiner zwei Ausgangsanschlüsse der dritten Ausgangsschnittstelle (2204c) und das andere aufgeteilte optische Signal an seinem anderen Ausgangsanschluss ausgibt;
ein achtes optisches Vermittlungsmittel (2201f), das selektiv entweder das optische Signal von dem anderen Ausgangsanschluss des fünften optischen Aufteilelements (2202c) oder das optische Signal von dem anderen Ausgangsanschluss des fünften optischen Vermittlungsmittels (2201g) der vierten Ausgangsschnittstelle (2204d) ausgibt;
ein neuntes optisches Vermittlungsmittel (2201i), das selektiv entweder das optische Signal von dem anderen Ausgangsanschluss des zweiten optischen Aufteilelements (2202b) oder das optische Signal von einem Ausgangsanschluss des sechsten optischen Vermittlungsmittels (2201h) ausgibt;
ein sechstes optisches Aufteilelement (2202f), das zwei Ausgangsanschlüsse aufweist und welches das optische Signal aufteilt, das von dem neunten optischen Vermittlungsmittel (2201l) ausgegeben wird und welches ein aufgeteiltes optisches Signal von einem seiner zwei Ausgangsanschlüsse der ersten Ausgangsschnittstelle (2204a) und das andere aufgeteilte optische Signal an seinem anderen Ausgangsanschluss ausgibt; und
ein zehntes optisches Vermittlungsmittel (2201j), das selektiv entweder das optische Signal von dem anderen Ausgangsanschluss des sechsten optischen Aufteilelements (2202f) oder das optische Signal von dem anderen Ausgangsanschluss des sechsten optischen Vermittlungsmittels (2201h) der zweiten Ausgangsschnittstelle (2204b) ausgibt.

## Revendications

1. Dispositif de commutation optique prévu pour un dispositif de transmission de signaux optiques (1 à 4) relié à une pluralité de lignes de transmission optique (SL, PL), ledit dispositif de commutation optique étant **caractérisé en ce qu'**il comporte un moyen pour séparer les signaux optiques arrivés par l'intermédiaire desdites lignes de transmission optique, en une pluralité de signaux secondaires et pour les envoyer à une pluralité de lignes de transmission optique autres que les lignes de transmission optique d'où proviennent les signaux optiques ;
et **caractérisé en ce que**
ledit dispositif de commutation optique constitue des trajets de liaison point à point qui relient des émetteurs de signaux et des récepteurs de signaux en une correspondance biunivoque, entre le dispositif de transmission de signaux optiques dans lequel est prévu ledit dispositif de commutation optique et un autre dispositif de transmission de signaux optiques, et **en ce que** le dispositif comprend
n x m ports d'entrée (301a à 301f) à l'entrée desquels sont appliqués des signaux optiques ;
n x m ports de sortie (304a à 304f) pour fournir en sortie des signaux optiques ;
un commutateur optique matriciel (302) incluant (n + 2) x m bornes d'entrée et n x m bornes de sortie ; et
un nombre 2m d'éléments de séparation optique (303a, 303b) qui sont reliés aux 2m bornes des bornes de sortie du commutateur optique matriciel (302) et qui séparent chacun en deux moitiés le signal optique fourni en sortie par la borne correspondante des bornes de sortie reliées, dans lequel
les extrémités de séparation d'un côté des éléments de séparation optique (303a, 303b) sont reliées auxdites 2m bornes d'entrée dudit commutateur optique matriciel en une correspondance biunivoque et les extrémités de séparation de l'autre côté desdits éléments de séparation optique (303a, 303b) sont reliées aux 2m ports desdits ports de sortie (304a, 304c) en une correspondance biunivoque,
lesdits ports d'entrée (301a à 301f) sont reliés au n x m bornes d'entrée restantes dudit commutateur optique matriciel en une correspondance biunivoque, et
les (n - 2) x m bornes de sortie restantes dudit commutateur optique matriciel sont reliées au (n - 2) x m ports de sortie restants (304b, 304d, 304e, 304f).

2. Dispositif de commutation optique selon la revendication 1, **caractérisé en ce que** lesdits ports d'entrée et ports de sortie sont regroupés en un nombre m de groupes de ports que l'on fait correspondre à des longueurs d'onde différentes et un nombre n de ports d'entrée et un nombre n de ports de sortie appartenant à chacun des groupes de ports.

3. Dispositif de commutation optique selon la revendication 1, **caractérisé en ce qu'**il comprend :
n x m ports d'entrée (5b01a à 5b01f) à l'entrée desquels sont appliqués des signaux optiques ;
n x m ports de sortie (5b06a à 5b06f) pour fournir en sortie des signaux optiques ;
un nombre 2m de premiers éléments de séparation optique (5b02, 5b03) pour chaque séparation en deux moitiés du signal optique appliqué en entrée depuis le port correspondant des 2m ports desdits ports d'entrée ;
un commutateur optique matriciel avec des ports d'expansion (5b09), dont chacun comporte (n + 2) x m bornes d'entrée et une borne de sortie d'expansion et n x m bornes de sortie et une borne d'entrée d'expansion ;
un nombre 2m de deuxièmes éléments de séparation optique (5b04, 5b05) qui sont reliés aux 2m bornes desdites bornes de sortie du commutateur optique matriciel (5b09) avec des ports d'expansion en correspondance biunivoque, et chacun séparant en deux moitiés le signal optique fourni en sortie par la borne correspondante des bornes de sortie reliées, dans lequel
deux extrémités de séparation desdits premiers éléments de séparation optique (5b02, 5b03) et lesdits ports d'entrée (5b01a à 5b01f) sont reliées aux bornes d'entrée dudit commutateur optique matriciel (5b09) avec les ports d'expansion en correspondance biunivoque,
les extrémités de séparation d'un côté desdits deuxièmes éléments de séparation optique (5b04f, 5b05) sont reliées aux 2m bornes des bornes d'entrée d'expansion dudit commutateur optique matriciel (5b09) avec des ports d'expansion,
les extrémités de séparation de l'autre côté des deuxièmes éléments de séparation optique (5b04, 5b05) sont reliées aux 2m ports desdits ports de sortie, et
les (n - 2) x m bornes restantes desdites bornes de sortie dudit commutateur optique matriciel (5b09) avec les ports d'expansion et les (n - 2) x m ports desdits ports de sortie sont reliés entre eux.

4. Dispositif de commutation optique selon la revendication 3, **caractérisé en ce que** lesdits ports d'entrée et ports de sortie sont regroupés en un nombre m de groupes de ports que l'on fait correspondre à des longueurs d'onde différentes et un nombre n de ports d'entrée et un nombre n de ports de sortie appartenant à chacun des groupes de ports.

5. Dispositif de commutation optique selon la revendication 1, **caractérisé en ce qu'**il comprend :
un premier jusqu'à un sixième port d'entrée (903a à 903f) à l'entrée desquels sont appliqués des signaux optiques ;
un premier jusqu'à un sixième port de sortie (904a à 904f) pour fournir en sortie des signaux optiques ;
un premier moyen de commutation optique (901a) qui comporte deux bornes de sortie et commute les signaux optiques du premier port (903a) et du deuxième port d'entrée (903b) entre ses deux bornes de sortie ;
un deuxième moyen de commutation optique (901b) qui comporte deux bornes de sortie et fournit en sortie de manière sélective à l'une de ses deux bornes de sortie le signal optique d'une borne de sortie dudit premier moyen de commutation optique (901a) ;
un troisième moyen de commutation optique (901e) qui comporte deux bornes de sortie et commute les signaux optiques du troisième port (903c) et du quatrième port d'entrée (903d) entre ses deux bornes de sortie ;
un quatrième moyen de commutation optique (901f) qui comporte deux bornes de sortie et fournit en sortie de manière sélective à l'une de ses deux bornes de sortie le signal optique d'une borne de sortie dudit troisième moyen de commutation optique (901e) ;
un cinquième moyen de commutation optique (901c) qui fournit en sortie de manière sélective au sixième port de sortie (904f) soit le signal optique de l'autre borne de sortie dudit premier moyen de commutation optique (901a), soit le signal optique d'une borne de sortie dudit quatrième moyen de commutation optique (901f) ;
un sixième moyen de commutation optique (901d) qui fournit en sortie de manière sélective au cinquième port de sortie (904e) soit le signal optique de l'autre borne de sortie dudit troisième moyen de commutation optique (901e), soit le signal optique d'une borne de sortie dudit deuxième moyen de commutation optique (901b) ;
un premier élément de séparation optique (902b) qui comporte deux bornes de sortie et qui sépare le signal optique du sixième port d'entrée (903f) et fournit en sortie les signaux séparés à ses deux bornes de sortie ;
un deuxième élément de séparation optique (902c) qui comporte deux bornes de sortie et qui sépare le signal optique du cinquième port d'entrée (903e) et fournit en sortie les signaux séparés à ses deux bornes de sortie ;
un septième moyen de commutation optique (901g) qui fournit en sortie de manière sélective soit le signal optique de l'autre borne de sortie dudlt deuxième moyen de commutation optique (901b), soit le signal optique d'une borne de sortie dudit premier élément de séparation optique (902b) ;
un huitième moyen de commutation optique (901j) qui fournit en sortie de manière sélective soit le signal optique de l'autre borne de sortie dudlt quatrième moyen de commutation optique (901f), soit le signal optique d'une borne de sortie dudit deuxième élément de séparation optique (902c) ;
un troisième élément de séparation optique (902a) qui comporte deux bornes de sortie et qui sépare le signal optique fourni en sortie par ledit septième moyen de commutation optique (901g) et fournit en sortie un signal optique séparé de l'une de ses deux bornes de sortie au troisième port de sortie (904c) et l'autre signal optique séparé à son autre borne de sortie ;
un neuvième moyen de commutation optique (901h) qui fournit en sortie de manière sélective au quatrième port de sortie (904d) soit le signal optique de l'autre borne de sortie du troisième élément de séparation optique (902a), soit le signal optique de l'autre borne de sortie dudit deuxième élément de séparation optique (902c) ;
un quatrième élément de séparation optique (902d) qui comporte deux bornes de sortie et qui sépare le signal optique fourni en sortie par ledit huitième moyen de commutation optique (901j) et fournit en sortie un signal optique séparé de l'une de ses deux bornes de sortie au premier port de sortie (904a) et l'autre signal optique séparé à son autre borne de sortie ; et
un dixième moyen de commutation optique (9011) qui fournit en sortie de manière sélective au deuxième port de sortie (904b) soit le signal optique de l'autre borne de sortie du quatrième élément de séparation optique (902d), soit le signal optique de l'autre borne de sortie dudit premier élément de séparation optique (902b).

6. Dispositif de commutation optique prévu pour un dispositif de transmission de signaux optiques (1 à 4) relié à une pluralité de lignes de transmission optique (SL, PL), ledit dispositif de commutation optique étant **caractérisé en ce qu'**il comporte un moyen pour séparer les signaux optiques arrivés par l'intermédiaire desdites lignes de transmission optique, en une pluralité de signaux secondaires et pour les envoyer à une pluralité de lignes de transmission optique autres que les lignes de transmission optique d'où proviennent les signaux optiques ;
et **caractérisé en ce que**
ledit dispositif de commutation optique constitue des trajets de liaison point à point qui relient une pluralité de récepteurs de signaux à un émetteur de signal optique, entre le dispositif de transmission de signaux optiques dans lequel est prévu ledit dispositif de commutation optique et un autre dispositif de transmission de signaux optiques, et **en ce que** le dispositif comprend
n x m ports d'entrée (1201a à 1201f) à l'entrée desquels sont appliqués des signaux optiques ;
n x m ports de sortie (1205a à 1205f) pour fournir en sortie des signaux optiques ;
n x m premiers éléments de séparation optique (1202a à 1202f) dont chacun sépare en deux moitiés le signal optique appliqué en entrée depuis le port correspondant desdits ports d'entrée (1201a à 1201f) ;
un commutateur optique matriciel (1203) incluant (2 n + 2) x m bornes d'entrée et n x m bornes de sortie ; et
un nombre 2m de deuxièmes éléments de séparation optique (1204a, 1204b) qui sont reliés aux 2m bornes des bornes de sortie du commutateur optique matriciel (1203) en une correspondance biunivoque et qui séparent chacun en deux moitiés le signal optique fourni en sortie par la borne correspondante des bornes de sortie reliées, dans lequel
les extrémités de séparation desdits premiers éléments de séparation optique (1202a à 1202f) sont appliquées à l'entrée des 2 x n x m bornes d'entrée dudit commutateur optique matriciel (1203) en une correspondance biunivoque,
les 2 x m bornes d'entrée restantes du commutateur optique matriciel (1203) sont reliées aux extrémités de séparation d'un côté desdits deuxièmes éléments de séparation optique (1204a, 1204b),
les extrémités de séparation de l'autre côté des deuxièmes éléments de séparation optique (1204a, 1204b) sont reliées aux 2m ports desdits ports de sortie en une correspondance biunivoque, et
les (n - 2) x m bornes de sortie restantes dudit commutateur optique matriciel (1203) sont reliées au (n - 2) x 4 ports restants desdits ports de sortie.

7. Dispositif de commutation optique selon la revendication 6, **caractérisé en ce que** lesdits ports d'entrée et ports de sortie sont regroupés en un nombre m de groupes de ports que l'on fait correspondre à des longueurs d'onde différentes et un nombre n de ports d'entrée et un nombre n de ports de sortie appartenant à chacun des groupes de ports.

8. Dispositif de commutation optique selon la revendication 6, **caractérisé en ce qu'**il comprend ;
un nombre 6m de ports d'entrée (1401a à 1401f) à l'entrée desquels sont appliqués des signaux optiques ;
un nombre 6m de ports de sortie (1405a à 1405f) pour fournir en sortie des signaux optiques ;
un nombre 6m d'éléments de séparation optique (1402a à 1402f) séparant chacun en deux moitiés le signal optique appliqué en entrée depuis le port correspondant desdits ports d'entrée (1401a à 1401f) ;
un premier commutateur optique matriciel (1403a) incluant un nombre 10m de bornes d'entrée et un nombre 4m de bornes de sortie ;
un deuxième commutateur optique matriciel (1403b) incluant un nombre 4m de bornes d'entrée auxquelles sont reliées les extrémités d'un côté des 4m éléments desdits premiers éléments de séparation optique en une correspondance biunivoque et un nombre 2m de bornes de sortie reliées aux 2m ports desdits ports de sortie en une correspondance biunivoque ; et
un nombre 2m de deuxièmes éléments de séparation optique (1404a, 1404b) qui sont reliés aux 2m bornes des bornes de sortie dudit premier commutateur optique matriciel (1403a) et dont chacun sépare en deux moitiés le signal optique fourni en sortie par la borne correspondante des bornes de sortie reliées, dans lequel
les extrémités de séparation de l'autre côté des 4m éléments desdits premiers éléments de séparation optique et les deux extrémités de séparation des 2m éléments restants desdits premiers éléments de séparation optique sont reliées au 8m bornes des bornes d'entrée du premier commutateur matriciel (1403a) en une correspondance biunivoque,
les extrémités de séparation d'un côté desdits deuxièmes éléments de séparation optique sont reliées aux 2m bornes d'entrée restantes dudit premier commutateur matriciel (1403a), et
les 2m bornes de sortie restantes dudit premier commutateur matriciel (1403a) et les extrémités de l'autre côté desdits deuxièmes éléments de séparation optique sont reliées au 4m ports restants desdits ports de sortie en une correspondance biunivoque.

9. Dispositif de commutation optique selon la revendication 8, **caractérisé en ce que** lesdits ports d'entrée et ports de sortie sont regroupés en un nombre m de groupes de ports que l'on fait correspondre à des longueurs d'onde différentes et six ports d'entrée et six ports de sortie appartiennent à chacun des groupes de ports.

10. Dispositif de commutation optique selon la revendication 6, **caractérisé en ce qu'**il comprend :
un nombre 6m de ports d'entrée (1601a à 1601f) à l'entrée desquels sont appliqués des signaux optiques ;
un nombre 6m de ports de sortie (1605a à 1605f) pour fournir en sortie des signaux optiques ;
un nombre 6m d'éléments de séparation optique (1602a à 1602f) dont chacun sépare en deux moitiés le signal optique appliqué en entrée depuis le port correspondant desdits ports d'entrée ;
un premier commutateur optique matriciel (1603a) incluant un nombre 8m de bornes d'entrée et un nombre 4m de bornes de sortie ;
un deuxième commutateur optique matriciel (1603b) incluant un nombre 6m de bornes d'entrée et un nombre 4m de bornes de sortie ; et
un nombre 2m de séparateurs coupleurs optiques (1604a, 1604b) dont chacun comporte deux bornes d'entrée et deux bornes de sortie et qui couple les signaux optiques appliqués en entrée depuis leurs deux bornes d'entrée, puis sépare le signal couplé et fournit en sortie les signaux séparés à leurs deux bornes de sortie, dans lequel
les extrémités de séparation d'un côté desdits 6m éléments de séparation optique (1602a à 1602f) sont reliées aux 6m des bornes d'entrée dudit premier commutateur optique matriciel (1603a) et les extrémités de séparation de l'autre côté des éléments de séparation optique (1602a à 1602f) sont reliées aux 6m bornes d'entrée dudit deuxième commutateur optique matriciel,
2m bornes des bornes de sortie dudit deuxième commutateur optique matriciel (1603b) sont reliées aux 2m ports desdits ports de sortie,
les 2m bornes restantes des bornes de sortie dudit deuxième commutateur optique matriciel (1603b) sont reliées aux bornes d'entrée d'un côté desdits séparateurs coupleurs optiques (1604a, 1604b) en une correspondance biunivoque,
2m bornes des bornes de sortie dudit premier commutateur optique matriciel (1603a) sont reliées aux 2m ports restants desdits ports de sortie,
les 2m bornes de sortie restantes du premier commutateur optique matriciel (1603a) sont reliées aux bornes d'entrée de l'autre côté desdits séparateurs coupleurs optiques (1604a, 1604b) en une correspondance biunivoque,
les bornes de sortie d'un côté desdits séparateurs coupleurs optiques (1604a, 1604b) sont reliées aux 2m bornes d'entrée restantes dudit premier commutateur optique matriciel (1603a), et
les bornes de sortie de l'autre côté des séparateurs coupleurs optiques (1604a, 1604b) sont reliées aux 2m ports restants desdits ports de sortie.

11. Dispositif de commutation optique selon la revendication 10, **caractérisé en ce que** lesdits ports d'entrée et ports de sortie sont regroupés en un nombre m de groupes de ports que l'on fait correspondre à des longueurs d'onde différentes et six ports d'entrée et six ports de sortie appartiennent à chacun des groupes de ports.

12. Dispositif de commutation optique selon la revendication 6, **caractérisé en ce qu'**il comprend :
un nombre 6m de ports d'entrée (1801a à 1801f) à l'entrée desquels sont appliqués des signaux optiques ;
un nombre 6m de ports de sortie (1802a à 1802f) pour fournir en sortie des signaux optiques ;
n x m premiers éléments de séparation optique (1803a à 1803f) dont chacun sépare en deux moitiés le signal optique appliqué en entrée depuis le port correspondant desdits ports d'entrée (1801a à 1801f) ;
un commutateur optique matriciel avec des ports d'expansion (1805) dont chacun comporte un nombre 10m de bornes d'entrée et une borne de sortie d'expansion et un nombre 6m de bornes de sortie et une borne d'entrée d'expansion ; et
un nombre 2m de deuxièmes éléments de séparation optique (1803g, 1803h) qui sont reliés aux 2m bornes desdites bornes de sortie d'expansion dudit commutateur optique matriciel (1805) avec des ports d'expansion et dont chacun sépare en deux moitiés le signal optique fourni en sortie par la borne correspondante des bornes de sortie reliées, dans lequel
deux extrémités de séparation des 4m éléments desdits premiers éléments de séparation optique et les extrémités de séparation d'un côté des 2m premiers éléments de séparation optique restants sont reliées aux bornes d'entrée dudit commutateur optique matriciel (1805),
les extrémités de séparation de l'autre côté desdits 2m premiers éléments de séparation optique restants sont reliées aux 2m bornes desdites bornes d'entrée d'expansion,
les extrémités de séparation d'un côté desdits deuxièmes éléments de séparation optique sont reliées aux 2m bornes d'entrée d'expansion restantes, et
les 4m bornes de sortie restantes dudit commutateur optique matriciel (1805) et les extrémités de séparation de l'autre côté desdits deuxièmes éléments de séparation optique sont reliées auxdits ports de sortie en une correspondance biunivoque.

13. Dispositif de commutation optique selon la revendication 12, **caractérisé en ce que** lesdits ports d'entrée et ports de sortie sont regroupés en un nombre m de groupes de ports que l'on fait correspondre à des longueurs d'onde différentes et six ports d'entrée et six ports de sortie appartiennent à chacun des groupes de ports.

14. Dispositif de commutation optique selon la revendication 6, **caractérisé en ce qu'**il comprend :
un premier jusqu'à un sixième port d'entrée (2203a à 2203f) à l'entrée desquels sont appliqués des signaux optiques ;
un premier jusqu'à un sixième port de sortie (2204a à 2204f) pour fournir en sortie des signaux optiques ;
un premier moyen de commutation optique (2201a) qui comporte deux bornes de sortie et qui commute les signaux optiques du premier port (2203a) et du deuxième port d'entrée (2203b) entre ses deux bornes de sortie ;
un premier élément de séparation optique (2202a) qui comporte deux bornes de sortie et qui sépare le signal optique d'une borne de sortie dudit premier moyen de commutation optique (2201a) et fournit en sortie les signaux séparés à ses deux bornes de sortie ;
un deuxième moyen de commutation optique (2201d) qui comporte deux bornes de sortie et qui commute les signaux optiques du troisième port d'entrée (2203c) et du quatrième port d'entrée (2203d) entre ses deux bornes de sortie ;
un deuxième élément de séparation optique (2202b) qui comporte deux bornes de sortie et qui sépare le signal optique d'une borne de sortie dudit deuxième moyen de commutation optique (2201d) et fournit en sortie les signaux séparés à ses deux bornes de sortie ;
un troisième moyen de commutation optique (2201b) qui fournit en sortie de manière sélective au sixième port de sortie (2204f) soit le signal optique de l'autre borne de sortie dudit premier moyen de commutation optique (2201a), soit le signal optique d'une borne de sortie dudit deuxième élément de séparation optique (2202b) ;
un quatrième moyen de commutation optique (2201c) qui fournit en sortie de manière sélective au cinquième port de sortie (2204e) soit le signal optique de l'autre borne de sortie dudit deuxième moyen de commutation optique (2201d), soit le signal optique d'une borne de sortie dudit première élément de séparation optique (2202a) ;
un troisième élément de séparation optique (2202d) qui comporte deux bornes de sortie et qui sépare le signal optique du sixième port d'entrée (2203f) et fournit en sortie les signaux séparés à ses deux bornes de sortie ;
un quatrième élément de séparation optique (2202e) qui comporte deux bornes de sortie et qui sépare le signal optique du cinquième port d'entrée (2203e) et fournit en sortie les signaux séparés à ses deux bornes de sortie ;
un cinquième moyen de commutation optique (2201g) qui comporte deux bornes de sortie et qui commute les signaux optiques d'une borne de sortie dudit troisième élément de séparation optique (2202d) et d'une borne de sortie dudit quatrième élément de séparation optique (2202e) entre ses deux bornes de sortie ;
un sixième moyen de commutation optique (2201h) qui comporte deux bornes de sortie et qui commute les signaux optiques de l'autre borne de sortie dudit troisième élément de séparation optique (2202d) et de l'autre borne de sortie dudit quatrième élément de séparation optique (2202e) entre ses deux bornes de sortie ;
un septième moyen de commutation optique (2201e) qui fournit en sortie de manière sélective soit le signal optique de l'autre borne de sortie dudit premier moyen de commutation optique (2202a), soit le signal optique d'une borne de sortie dudit cinquième moyen de commutation optique (2201g) ;
un cinquième élément de séparation optique (2202c) qui comporte deux bornes de sortie et qui sépare le signal optique fourni en sortie par ledit septième moyen de commutation optique (2201e) et fournit en sortie un signal optique séparé depuis l'une de ses deux bornes de sortie au troisième port de sortie (2204c) et l'autre signal optique séparé à son autre borne de sortie ;
un huitième moyen de commutation optique (2201f) qui fournit en sortie de manière sélective au quatrième port de sortie (2204d) soit le signal optique de l'autre borne de sortie dudit cinquième moyen de commutation optique (2202c), soit le signal optique de l'autre borne de sortie dudit cinquième moyen de commutation optique (2201g) ;
un neuvième moyen de commutation optique (2201i) qui fournit en sortie de manière sélective soit le signal optique de l'autre borne de sortie dudit deuxième élément de séparation optique (2202b), soit le signal optique d'une borne de sortie dudit sixième moyen de commutation optique (2201h) ;
un sixième élément de séparation optique (2202f) qui comporte deux bornes de sortie et qui sépare le signal optique fourni en sortie par ledit neuvième moyen de commutation optique (2201l) et fournit en sortie un signal optique séparé depuis l'une de ses deux bornes de sortie au premier port de sortie (2204a) et l'autre signal optique séparé à son autre borne de sortie ; et
un dixième moyen de commutation optique (2201j) qui fournit en sortie de manière sélective au deuxième port de sortie (2204b) soit le signal optique de l'autre borne de sortie dudit sixième élément de séparation optique (2202f), soit le signal optique de l'autre borne de sortie dudit sixième moyen de commutation optique (2201h),
